(19) Europäisches Patentamt
European Patent Office
Office européen des brevets

(11) **EP 4 290 372 B1**

(12) **EUROPEAN PATENT SPECIFICATION**

(45) Date of publication and mention
of the grant of the patent:
**24.12.2025 Bulletin 2025/52**

(21) Application number: **21927324.0**

(22) Date of filing: **27.02.2021**

(51) International Patent Classification (IPC):
*G06F 9/448* (2018.01)

(52) Cooperative Patent Classification (CPC):
**G06F 9/4484**

(86) International application number:
**PCT/CN2021/078327**

(87) International publication number:
**WO 2022/178889 (01.09.2022 Gazette 2022/35)**

(54) **FUNCTION CALLING CONTEXT ENCODING METHOD AND APPARATUS, AND FUNCTION CALLING CONTEXT DECODING METHOD AND APPARATUS**

VERFAHREN UND VORRICHTUNG ZUR CODIERUNG VON FUNKTIONSANRUFKONTEXT SOWIE VERFAHREN UND VORRICHTUNG ZUR DECODIERUNG VON FUNKTIONSANRUFKONTEXT

PROCÉDÉ ET APPAREIL DE CODAGE DE CONTEXTE D'APPEL DE FONCTION, ET PROCÉDÉ ET APPAREIL DE DÉCODAGE DE CONTEXTE D'APPEL DE FONCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2023 Bulletin 2023/50**

(73) Proprietor: **Huawei Technologies Co., Ltd.**
**Shenzhen, Guangdong 518129 (CN)**

(72) Inventors:
• **ZHOU, Qing**
**Shenzhen, Guangdong 518129 (CN)**
• **ZHANG, Rutao**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
CN-A- 102 693 133     CN-A- 104 199 649
CN-A- 105 224 305     CN-A- 106 257 425
CN-A- 109 783 222     CN-A- 110 266 669
US-A1- 2015 106 794     US-A1- 2016 147 559
US-B1- 6 263 491

• **WANG LU-LU;LI BI-XIN: "A New Method for Profiling Inter-Procedural Paths with Loops", CHINESE JOURNAL OF COMPUTERS, vol. 36, no. 11, 15 November 2013 (2013-11-15), pages 2224 - 2235, XP055962267, DOI: 10.3724/ SP.J.1016.2013.02224**

**Description**

**TECHNICAL FIELD**

This disclosure generally relates to the field of coding, and the invention in particular relates to an encoding method and a decoding method for a function calling context, an electronic apparatus as well as a computer-readable storage medium.

**BACKGROUND**

When a function is called multiple times, calling contexts are different. For example, parameters are different each time the function is called. The calling context (calling context) of the function is critical to applications such as program analysis, debugging, and event log. Program analysis is used as an example. Compared with not distinguishing different calling contexts of a function, distinguishing different calling contexts of a function can significantly improve precision of an analysis result.

A function call string (call string) can be used to distinguish different calling contexts of a function. The function call string indicates a function call path. For any function in source code, the function call path can uniquely indicate calling context information of the function. However, the function call string has very high space overheads. When the function call string is excessively long, high overheads are needed to store the function call string. Through function calling context encoding (calling context encoding), the function call string is encoded to reduce storage overheads. However, an encoding result obtained in the solution cannot distinguish the function calling context in a plurality of threads. The given encoded function call string needs to be decoded to obtain the function call string, and then thread information of the given function calling context is obtained based on the function call string. If the thread information of the function calling context is obtained through repeated decoding, large analysis time overheads are caused, and analysis efficiency is affected.

Therefore, how to distinguish between different calling contexts of functions in a plurality of threads becomes an urgent problem to be resolved.

US 6,263,491 B1 discloses an instrumentation system performing operations such as profiling an application and partitioning and distributing units of the application using different versions of metadata describing the application. Performing an operation on an executing application generates overhead. Detailed metadata used in operations such as profiling create unnecessary overhead during other operations. By removing metadata detail unnecessary for a particular operation, an instrumentation system using reduced metadata generates less overhead for that particular operation. Different instrumentation packages include different versions of metadata for performing operations on the application.

**SUMMARY**

The object of the present invention is to provide an encoding method and a decoding method for a function calling context, an electronic apparatus as well as a computer-readable storage medium, to distinguish between different calling contexts of a function in a plurality of threads, and help improve analysis efficiency and analysis precision. The object of the present invention is to provide a terminal positioning method, an apparatus, and a system, to ensure continuity of a location service for a terminal after the terminal is handed over to a network. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims.

According to a first aspect, the invention provides an encoding method for a function calling context. The method includes: obtaining calling context information of a target function; obtaining encoding values corresponding to creation relationships between a plurality of threads in program code, where the program code includes the target function; and encoding, based on the calling context information of the target function and the encoding values corresponding to the creation relationships between the plurality of threads, a context of a thread to which the target function belongs, to obtain an encoding result of the context of the thread to which the target function belongs.

According to the solution of the invention, a context of a thread to which a function belongs is encoded, and an encoding result indicates the context of the thread to which the function belongs, so that different calling contexts of functions in a plurality of threads can be distinguished. This helps improve analysis precision. In addition, in the solution in this embodiment of this application, thread information of the function is obtained without decoding the encoding result, so that the context of the thread to which the function belongs can be quickly distinguished. This reduces time overheads caused by decoding, and helps improve analysis efficiency. In addition, the context of the thread to which the function belongs is encoded, so that space overheads are low, and storage space pressure caused by storing context information of the thread can be effectively reduced. According to the solution in this embodiment of this application, the context of the thread to which the function belongs can be distinguished without occupying a large amount of storage space. This improves analysis precision and analysis efficiency.

The calling context of the target function refers to a path in which the target function is called. The calling context of the target function may also be understood as a call path of the target function, and the target function is called by another function based on the call path. For example, a start point of the call path may be a root function in the program code.

The calling context information of the target function indicates the calling context of the target function. In other words, the calling context information of the target function indicates a call path (call path) of the target function. The thread to which the target function belongs is a thread to which the calling context of the target function belongs.

A context of a thread refers to a process in which the thread is created. The context of the thread can also be understood as a creation path of the thread.

The encoding values corresponding to the creation relationships between the plurality of threads in the program code are obtained by encoding the creation relationships between the plurality of threads in the program code.

The creation relationships between the threads may be indicated by a thread creation instruction between the threads.

The encoding values corresponding to the creation relationships between the plurality of threads in the program code may be preset.

The encoding values corresponding to the creation relationships between the plurality of threads in the program code may be represented by numbers. For example, the encoding values corresponding to the creation relationships between the plurality of threads in the program code are integers.

If there are a plurality of creation relationships between any two threads in the plurality of threads in the program code, encoding values corresponding to the plurality of creation relationships are different.

According to the invention, the encoding values corresponding to the creation relationships between the plurality of threads in the program code are represented by using a thread calling context encoding graph (thread calling context encoding graph, TEG). The TEG includes a plurality of thread nodes and edges between the plurality of thread nodes, and further includes encoding values on the edges. The thread nodes in the TEG represent the threads in program code. The edges between the plurality of thread nodes represent the creation relationships between the plurality of threads. The encoding values on the edges are the encoding values corresponding to the creation relationships between the threads.

With reference to the first aspect, in some implementations of the first aspect, the encoding values corresponding to the creation relationships between the plurality of threads in the program code are obtained by encoding the creation relationships between the plurality of threads in the program code according to a calling context encoding algorithm.

Specifically, the TEG is obtained by encoding a thread graph (thread graph, TG) according to the calling context encoding algorithm. The TG indicates the creation relationships between the plurality of threads. The TG includes a plurality of thread nodes and edges between the plurality of thread nodes. The thread nodes in the TG represent the threads in program code. The edges between the plurality of thread nodes represent the creation relationships between the plurality of threads.

According to the solution in this embodiment of this application, the creation relationships between the plurality of threads are encoded according to the calling context encoding algorithm, to ensure that encoding results of different contexts of the threads are different, so that the encoding results of the contexts of the threads uniquely indicate the contexts of the threads.

With reference to the first aspect, in some implementations of the first aspect, the plurality of threads in the program code include a parent thread and a child thread, a thread creation function in the parent thread is used to create the child thread, and an encoding value corresponding to a creation relationship between the parent thread and the child thread corresponds to a function calling context of the thread creation function in the parent thread.

Optionally, the encoding value corresponding to the creation relationship between the parent thread and the child thread corresponds to an encoding result of the function calling context of the thread creation function in the parent thread.

According to the solution in this embodiment of this application, it can be ensured that a complete function call string can be obtained by decoding the encoding result, and a calling context of a function in another thread is not lost.

With reference to the first aspect, in some implementations of the first aspect, the encoding result of the context of the thread to which the target function belongs indicates a thread entry function in the thread to which the target function belongs and an encoding value of the context of the thread to which the target function belongs.

According to the solution in this embodiment of this application, a thread to which a calling context of a target function belongs can be distinguished by using a thread entry function, to help quickly distinguish calling contexts of functions in different threads. A context of a thread can be uniquely indicated by using an encoding value of the context of the thread and the thread entry function, to further accurately distinguish different contexts of the thread. This helps improve accuracy of an analysis result.

With reference to the first aspect, in some implementations of the first aspect, the method further includes: obtaining encoding values corresponding to call relationships between a plurality of functions in the plurality of threads in the program code; and encoding, based on the calling context information of the target function and the encoding values corresponding to the call relationships between the plurality of functions in the plurality of threads in the program code, a function calling context of the target function in the thread to which the target function belongs, to obtain an encoding result of the function calling context of the target function in the thread to which the target function belongs.

**void**

The function calling context of the target function in the thread to which the target function belongs refers to a path in which the target function in the thread to which the target function belongs is called. The start point of the call path is the thread entry function of the thread to which the target function belongs.

The calling context of the target function can be distinguished based on the encoding result of the function calling context of the target function in the thread to which the target function belongs and the encoding information of the context of the thread to which the target function belongs.

According to an embodiment of the first aspect, the encoding values corresponding to the call relationships between the plurality of threads in the plurality of threads may be represented by using a function calling context encoding graph (function calling context encoding graph, CEG) in the thread. The CEG in the thread includes a plurality of function nodes in the threads and edges between the plurality of function nodes, and further includes encoding values on the edges. The function nodes in the CEG in the thread represent the functions in the threads. The edges between the plurality of function nodes represent the call relationships between the plurality of functions. The encoding values on the edges are the encoding values corresponding to the call relationships between the functions in the threads.

The encoding values corresponding to the call relationships between the plurality of functions in the plurality of threads in the program code are obtained by encoding the call relationships between the plurality of functions in the plurality of threads.

The encoding values corresponding to the creation relationships between the plurality of functions in the plurality of threads in the program code may be preset.

The encoding values corresponding to the call relationships between the plurality of functions in the plurality of threads in the program code may be represented by numbers. For example, the encoding values corresponding to the call relationships between the plurality of functions in the plurality of threads in the program code are integers.

With reference to the first aspect, in some implementations of the first aspect, the encoding values corresponding to the call relationships between the plurality of functions in the plurality of threads are obtained by separately encoding the call relationships between the plurality of functions in the plurality of threads according to the calling context encoding algorithm.

Specifically, the CEG in the thread is obtained by encoding a function call graph (call graph, CG) in the thread according to the calling context encoding algorithm. The CG in the thread represents the call relationships between the functions in the threads. The CG in the thread includes a plurality of function nodes in the threads and edges between the plurality of function nodes, and further includes encoding values on the edges. The function nodes in the CEG in the thread represent the functions in the threads. The edges between the plurality of function nodes represent the call relationships between the plurality of functions.

According to the solution in this embodiment of this application, the call relationships between the plurality of functions in the plurality of threads are encoded according to the calling context encoding algorithm, to ensure that encoding results of different function calling contexts of the functions in the threads are different, so that the different encoding results of the function calling contexts of the functions in the threads uniquely indicate the function calling contexts of the functions in the threads.

With reference to the first aspect, in some implementations of the first aspect, the calling context information of the target function includes a function call string of the target function.

According to a second aspect, the invention also provides a decoding method for a function calling context. The method includes: obtaining an encoding result of a calling context of a target function; obtaining encoding values corresponding to creation relationships between a plurality of threads in program code, where the program code includes the target function; obtaining encoding values corresponding to call relationships between a plurality of functions in the plurality of threads in the program code; and decoding the encoding result of the calling context of the target function based on the encoding values corresponding to the creation relationships between the plurality of threads in the program code and the encoding values corresponding to the call relationships between the plurality of functions in the plurality of threads in the program code, to obtain a function call string of the target function.

The decoding method according to the invention adapts to the encoding method according to the invention. The function call string of the target function is obtained based on the encoding result of the calling context of the target function, so that the encoding result of the calling context of the target function and the function call string can be flexibly converted. This method is applicable to a plurality of analysis scenarios, and is compatible with another analysis method.

With reference to the second aspect, in some implementations of the second aspect, the plurality of threads in the program code include a parent thread and a child thread, a thread creation function in the parent thread is used to create the child thread, and an encoding value corresponding to a creation relationship between the parent thread and the child thread corresponds to a function calling context of the thread creation function in the parent thread.

With reference to the second aspect, in some implementations of the second aspect, the encoding result of the calling context of the target function includes an encoding result of a context of a thread to which the target function belongs and an encoding result of a function calling context of the target function in the thread to which the target function belongs, the encoding result of the context of the thread to which the target function belongs indicates a thread entry function in the thread to which the target function belongs and an encoding value of the context of the thread to which the target function belongs, and the encoding result of the function calling context of the target function in the thread to which the target function belongs indicates the target function and an encoding value of the function calling context of the target function in the thread to which the target function belongs.

With reference to the second aspect, in some implementations of the second aspect, the decoding the encoding result of the calling context of the target function based on the encoding values corresponding to the creation relationships between the plurality of threads in the program code and the encoding values corresponding to the call relationships between the plurality of functions in the plurality of threads in the program code, to obtain a function call string of the target function includes: decoding, based on the encoding values corresponding to the creation relationships between the plurality of threads in the program code, the encoding result of the context of the thread to which the target function belongs, to obtain encoding values corresponding to creation relationships between a plurality of threads in the context of the thread to which the target function belongs, where a sum of the encoding values corresponding to the creation relationships between the plurality of threads in the context of the thread to which the target function belongs is equal to the encoding value of the context of the thread to which the target function belongs, and the thread to which the target function belongs is determined based on the thread entry function in the thread to which the target function belongs; determining, based on the encoding values corresponding to the creation relationships between the plurality of threads in the context of the thread to which the target function belongs, an encoding result of a function calling context of a thread creation function in the plurality of threads in the context of the thread to which the target function belongs; decoding, based on the encoding values corresponding to the call relationships between the plurality of functions in the plurality of threads in the program code, the encoding result of the function calling context of the thread creation function in the plurality of threads in the context of the thread to which the target function belongs, to obtain a function call string of the thread creation function in a thread to which the thread creation function belongs, where a call start point of the function call string of the thread creation function in the thread to which the thread creation function belongs is a thread entry function of the thread to which the thread creation function belongs, a call end point of the function call string of the thread creation function in the thread to which the thread creation function belongs is the thread creation function, and a sum of encoding values corresponding to call relationships between a plurality of functions in the function call string of the thread creation function in the thread to which the thread creation function belongs is equal to an encoding value of the function call string of the thread creation function in the thread to which the thread creation function belongs; decoding, based on the encoding values corresponding to the call relationships between the plurality of functions in the plurality of threads in the program code, the encoding result of the function calling context of the target function in the thread to which the target function belongs, to obtain a function call string of the target function in the thread to which the target function belongs, where a call start point of the function call string of the target function in the thread to which the target function belongs is a thread entry function of the thread to which the target function belongs, a call end point of the function call string of the target function in the thread to which the target function belongs is the target function, and if the call start point of the function call string of the target function in the thread to which the target function belongs is different from the call end point of the function call string of the target function in the thread to which the target function belongs, a sum of encoding values corresponding to call relationships between a plurality of functions in the function call string of the target function in the thread to which the target function belongs is equal to the encoding value of the function calling context of the target function in the thread to which the target function belongs; and determining the function call string of the target function based on the function call string of the thread creation function in the thread to which the thread creation function belongs and the function call string of the target function in the thread to which the target function belongs.

With reference to the second aspect, in some implementations of the second aspect, the method further includes: providing an API, where an input of the API includes the encoding result of the calling context of the target function, and an output of the API includes the function call string of the target function.

With reference to the second aspect, in some implementations of the second aspect, the input of the API includes a first element, a second element, a third element, and a fourth element, the first element indicates the thread entry function in the thread to which the target function belongs, the second element indicates the encoding value of the context of the thread to which the target function belongs, the third element indicates the target function, and the fourth element indicates the encoding value of the function calling context of the target function in the thread to which the target function belongs.

With reference to the second aspect, in some implementations of the second aspect, the input of the API includes a fifth element, a sixth element, and a seventh element, the fifth element indicates the thread entry function in the thread to which the target function belongs and the encoding value of the context of the thread to which the target function belongs,

EP 4 290 372 B1

the sixth element indicates the target function, and the seventh element indicates the encoding value of the function calling context of the target function in the thread to which the target function belongs.

According to a third aspect of the invention, an electronic device for a function calling context is provided. The electronic device includes a module or unit configured to perform the method according to any one of the first aspect and the implementations of the first aspect.

According to a fourth aspect of the invention, another electronic device is for a function calling context is provided. The electronic device includes a module or unit configured to perform the method according to any one of the second aspect and the implementations of the second aspect.

According to a fifth aspect of the invention, a computer-readable medium is provided. The computer-readable medium stores program code to be executed by a device, and the program code is used to perform the method according to the first or second aspect.

In the following description, features which in the above summary of the invention have been marked as "according to the invention" are also hereinafter, when they are described and explained with reference to the drawings, to be understood as "according to the invention".

## BRIEF DESCRIPTION OF DRAWINGS

FIG. 1 is a schematic flowchart of static program analysis according to an embodiment of this application;

FIG. 2 is a schematic diagram of a function call string;

FIG. 3 is a schematic diagram of function calling context encoding;

FIG. 4 is a schematic diagram of an application scenario according to an embodiment of this application;

FIG. 5 is a schematic block diagram of a static program analyzer according to an embodiment of this application;

FIG. 6 is a schematic flowchart of an encoding method for a function calling context according to an embodiment of this application;

FIG. 7 shows a function call graph according to an embodiment of this application;

FIG. 8 shows a thread graph according to an embodiment of this application;

FIG. 9 shows a function call graph in a thread according to an embodiment of this application;

FIG. 10 shows a function calling context encoding graph in a thread according to an embodiment of this application;

FIG. 11 shows a thread calling context encoding graph according to an embodiment of this application;

FIG. 12 is a schematic flowchart of a construction method of a thread calling context encoding graph according to an embodiment of this application;

FIG. 13 is a schematic flowchart of a decoding method for a function calling context according to an embodiment of this application;

FIG. 14 is a schematic block diagram of an encoding apparatus for a function calling context according to an embodiment of this application;

FIG. 15 is a schematic block diagram of a decoding apparatus for a function calling context according to an embodiment of this application;

FIG. 16 is a schematic block diagram of another encoding apparatus for a function calling context according to an embodiment of this application; and

FIG. 17 is a schematic block diagram of another decoding apparatus for a function calling context according to an embodiment of this application.

## DESCRIPTION OF EMBODIMENTS

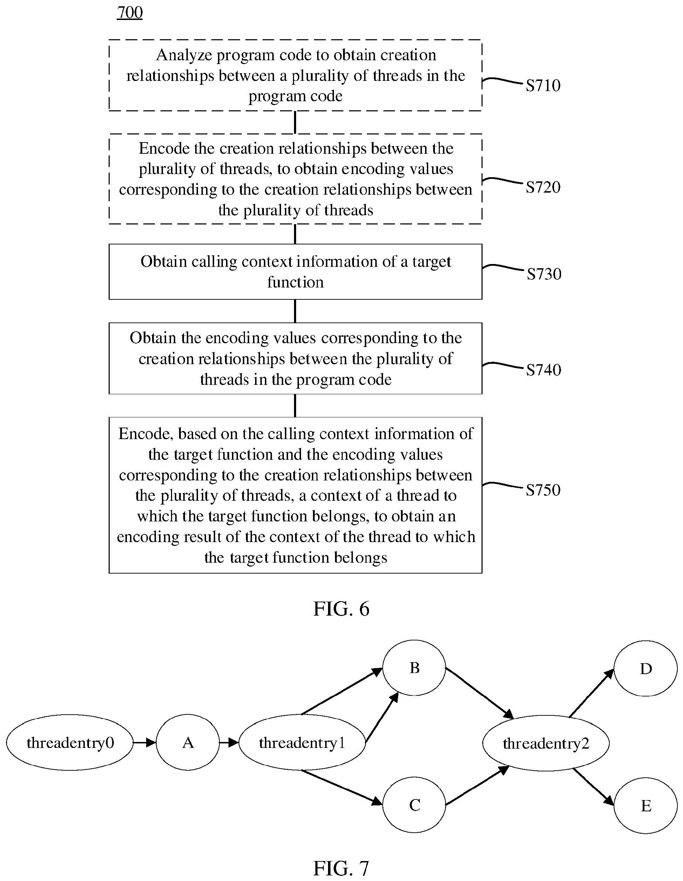

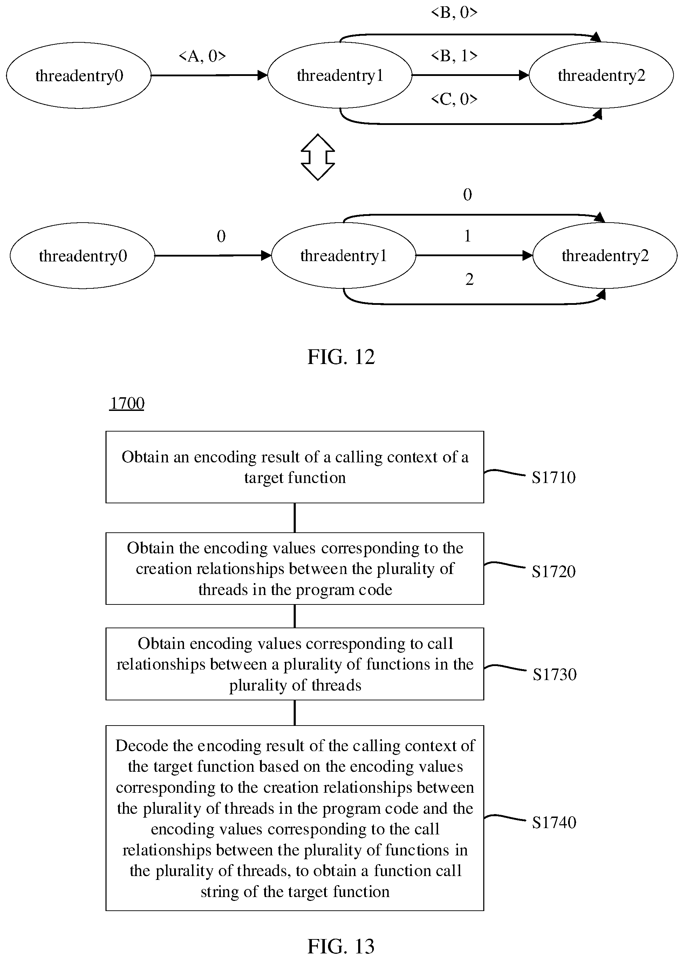

The following describes technical solutions of this application with reference to accompanying drawings. It should be noted that the steps of the invention according to the first aspect are in particular shown in FIG. 6 and the steps of the invention according to the second aspect are in particular shown in FIG. 13. Both aspects are related to the use of TGs and a TEG. The use of CGs and a CEG as also described in detail below is an advantageous embodiment of the invention according to the first aspect but the CG and CEG are used as essential feature in the second aspect according to the invention.

The solutions provided in embodiments of this application may be applied to the field of programming languages. For example, the solutions in embodiments of this application can be applied to a programming language scenario in which a function calling context needs to be distinguished, such as program analysis, debug (debug), or event log (event log).

In embodiments of this application, an encoding method for a function calling context in embodiments of this application is mainly described by using an example in which the method is applied to a static program analysis scenario in program analysis. For ease of understanding and description, the following describes static program analysis and related

6

terms.

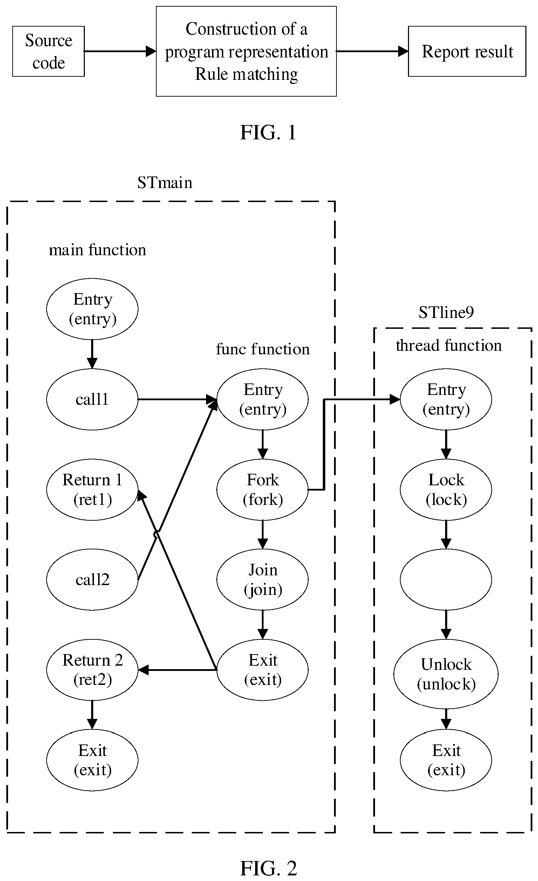

Static program analysis is an important analysis method in program analysis. Static program analysis is a process of scanning target source code by using technologies such as lexical analysis, syntax analysis, control flow analysis, and data flow analysis when a program is compiled, that is, when code is not run, to detect hidden errors of the program. FIG. 1 is a schematic flowchart of static program analysis. As shown in FIG. 1, a static program analysis process may be generally divided into two phases: an abstraction phase and a rule matching phase. Abstraction refers to a process of transforming source programs or source code (source code) according to a static analysis algorithm, and constructing a program representation to express a program structure, a program variable, or the like. For example, the program structure may be represented in a manner such as an abstract syntax tree (abstract syntax tree, AST), a function call graph (call graph, CG), or a control flow graph (control flow graph, CFG). The program variable may be represented by abstracting an array or a container into an object. Rule matching refers to a process of defining a target analysis or detection mode based on the program representation obtained by the foregoing abstraction, and obtaining code information in a specified analysis or detection mode in the program by using technologies such as regular expression matching, syntax parsing, control flow analysis, or data flow analysis, to obtain a report result, for example, warning (warning) information.

The static program analysis of the parallel program refers to static program analysis for a multi-thread program, a multi-process program, a multi-task concurrent program, or the like. Static program analysis of a multi-thread program in a parallel program is used as an example. The multi-thread static program analysis includes shared variable analysis for eliminating a variable in a thread, mutex analysis for determining a critical area, may happen in parallel (may happen in parallel, MHP) analysis for determining an execution sequence relationship between statements, weak memory sequence analysis, and the like. Shared variable analysis is used to analyze the scope of a variable and obtain the variable that can be accessed by a plurality of threads. Mutex analysis is used to identify lock (lock) and unlock (unlock) statements to obtain a mutex set corresponding to each statement in the program. MHP analysis is used to determine whether any two statements in a multi-thread program can be executed in parallel. Weak memory sequence analysis is used to detect storage instruction out-of-order behaviors and loading instruction out-of-order behaviors in a weak memory consistency model. The storage instruction out-of-order behaviors may be store-store reorder (store-store reorder). The loading instruction out-of-order behaviors may be load-load reorder (load-load reorder).

Static program analysis can be applied in a compiler. Specifically, a static program analysis technology is widely applied to the compiler to implement functions such as program deformation, optimization, and error reporting. In addition, static program analysis is also widely applied to a modern editor, such as visual studio code (visual studio code, VScode), and various program check tools, such as a serial program analysis tool and a parallel program analysis tool. The serial program analysis tool can be used to check more than 200 program bugs (bugs), such as use-after-free (use-after-free), null pointer reference, five-point analysis, and memory leakage. The parallel program analysis tool can be used to check data contention, deadlock, instruction reorder, and out-of-order errors in the weak memory model.

The program includes a plurality of function call relationships. A same function may have a plurality of different function call points. In other words, the same function includes a plurality of different calling contexts. Context-sensitive (context-sensitive) and context-insensitive (context-insensitive) are used to determine whether to distinguish different call points of a function in applications such as program analysis and debug. Context-sensitive means that different call points of a function are distinguished, that is, different calling contexts of a function are distinguished. Context-insensitive means that different call points of a function are not distinguished, that is, different calling contexts of a function are not distinguished. The following code is used to describe the impact of different function calling contexts on pointer analysis precision:

```
main(){
...
*p=&a;
*q=&b;
...
func(p);
...
func(q);
...
}
func(int*input){
...
XXX=*input;
...
}
```

If different calling contexts of a function are distinguished, that is, in a case of context-sensitive, an analyzer can distinguish different call locations of a func function in a first call (call1, c1) and a second call (call2, c2), to obtain a variable input (input) that points to a variable a in the call1 and points to a variable b in the call2, which is represented as input → {c1:a, c2:b}. If different calling contexts of a function are not distinguished, that is, in a case of context-insensitive, an analyzer does not distinguish different call locations of a func function in a call1 and a call2, to obtain a variable input that points to both a variable a and a variable b, which is represented as input → {a, b}. Obviously, if the analyzer can distinguish different call locations of the func function in the call1 and the call2, pointer analysis precision can be greatly improved.

Therefore, distinguishing different calling contexts of a function can greatly improve analysis precision, and is an important task in programming fields such as program analysis and debug.

A function call string can be used to distinguish different calling contexts of a function. Static program analysis is used as an example. A location of any statement in the source code may be represented in two manners: a context-sensitive representation method and a context-insensitive representation method. The context-insensitive representation method refers to recording only a location of a statement, for example, a line number of the statement. The context-sensitive representation method refers to recording a location and a context of a statement, for example, a complete function call string of a function in which the statement is located. For example, a function call string of a target function may be represented by using a function calling string, namely, a complete function calling string [call1, call2, ... calli] from a main (main) function to the function in which the statement is located, and represents a call path

$$main \xrightarrow{call1} f_1 \xrightarrow{call2} f_2 ... \xrightarrow{calli} f_{target}$$ from the main function to the target function, where call1, call2, ... calli respectively represent an $i^{th}$ call, i is a positive integer, $f_1$ and $f_2$ on the function call path respectively represent different functions, and $f_{target}$ represents the target function, namely, the function in which the statement is located.

FIG. 2 shows an effect diagram of distinguishing different calling contexts of a function based on a function call string. Source code of the function call string in FIG. 2 is shown as follows:

```
1: locktype 1;
2: int main(){
3:    …
4:    func();
5:    func();
6:    …

7: int func(){
8:    threadtype tid;
9:    fork(tid,thread);
10:   …
11:   join(tid);
12:   …
13: void thread(){
14:    lock(l);
15:    …
16:    unlock(l);
17:    …
```

FIG. 2 shows a function call graph in static program analysis. Threads shown in FIG. 2 are all static threads (static threads) obtained through static analysis, including a static thread STmain corresponding to a main function and a static thread STline9 corresponding to a fork function in line 9. The call path of the function indicates different function calling contexts of a thread (thread) in line 13. For example, a function call call1 in line 4 (line 4) to a function call of the fork (fork) function in line 9 (line 9) represent a calling context of a thread, which may be represented as thread1: call1 (line 4) → fork (line 9). A function call call2 in line 5 (line 5) to a functional call of the fork function in line 9 represent a context of another thread, which may, for example, be represented as thread2: call2 (line 5) → fork (line 9).

Different calling contexts of a function may be distinguished based on the stored function call string. However, the function call string still has very high space overheads. When the function call string is excessively long, for example, in an actual program, a length of a function call string of the program with 100 thousand lines is generally approximately 10 to 13, high overheads are needed to store the function call string.

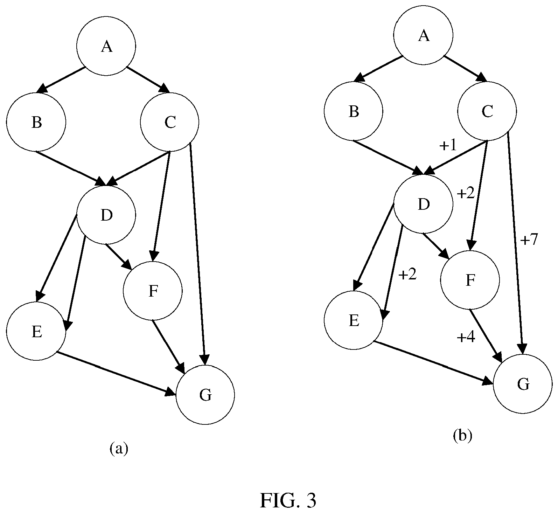

Function calling context encoding can represent the function call string to reduce storage overheads. FIG. 3 shows an effect diagram of function calling context encoding. For example, (a) in FIG. 3 may be referred to as a function call graph (call graph), nodes A, B, C, D, E, F and G in the graph respectively represent different functions, and edges between the functions may be referred to as function call edges, and represent a specific and unique function call instruction. For example, a function call instruction may be represented as A() in a programming language. In other words, a function A calls another function. There is a call relationship between two functions connected through at least one edge. The two functions may be understood as a node pair (pair). (b) in FIG. 3 is a function calling context encoding graph, namely, a graph obtained by encoding a function call edge in the function call graph, where a value on each edge is an encoding (encoding) value. For example, the value may be an integer. There may be more than one edge between two nodes in a node pair, and encoding values on the edges between the two nodes are different. Encoding values on edges in different node pairs may be the same. In FIG. 3, an encoding value corresponding to an edge that is not marked with an encoding value may be 0. In this way, any function call string may be represented by using an encoding ID. For example, an encoding ID of a function call string ACF is 2, which indicates that a function A calls a function C and then calls a function F. A 2-tuple <F, 2> is unique encoding of the function call string ACF.

However, "thread" information is eliminated from function calling context code, so that different contexts of functions in a plurality of threads cannot be represented. In other words, the thread information cannot be obtained from the encoded information. As shown in FIG. 3, it is assumed that a function B includes a thread creation statement fork (D), which means that the function B creates a child thread, and an entry function of the child thread is a function D. In this case, FIG. 3 includes two threads: a thread 1 (thread1) and a thread 2 (thread2). An entry function of the thread1 is a function A, and an entry function of the thread2 is a function D. A function F has three different function call strings: 0:ABDF, 1:ACDF, and 2:ACF, which respectively correspond to code <F, 0>, <F, 1>, and <F, 2>. Thread information of the function F cannot be obtained from the code. In other words, <F, 2> and <F, 1> belong to the thread1, and <F, 0> belongs to the thread2.

To obtain the thread information of the function context, decoding (decoding) needs to be performed on the code corresponding to the function call string to restore an original function call string and then obtain the thread information. For example, encoded <F, 0> is decoded into an original function call string ABDF, where a function B is called in the function string, a thread2 is created, and D is an entry function of the thread2, so that it is learned that the ABDF belongs to the thread2. However, performance overheads are large in the decoding process. If the thread information of the function calling context is obtained through repeated decoding in the analysis process, large analysis time overheads are caused, and analysis efficiency is affected.

An embodiment of this application provides an encoding method for a function calling context, to distinguish between different calling contexts of a function in a plurality of threads, and help improve analysis efficiency and analysis precision.

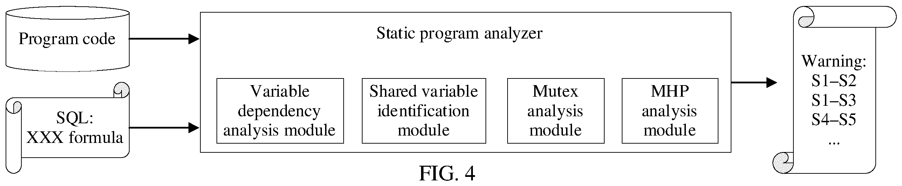

FIG. 4 shows a schematic diagram of an application scenario according to an embodiment of this application. For example, the solution in this embodiment of this application can be applied to a static program analysis scenario. For example, as shown in FIG. 4, the method in this embodiment of this application can be applied to a static program analyzer (static program analyzer). In other words, the static program analyzer can encode a function calling context by using a method 700 provided in embodiments of this application. For example, as shown in FIG. 4, the static program analyzer may include analysis modules such as a variable dependency analysis module, a shared variable identification module, a mutex analysis module, and an MHP analysis module. The variable dependency analysis module may also be referred to as a define (define)-use (use) module, and may be represented as def-use or use-def, and is used to analyze a dependency relationship between variables.

For example, as shown in FIG. 4, program code and a rule calculation formula are input into the static program analyzer. The program code may be source code (source code) or an intermediate representation (intermediate representation, IR). The rule calculation formula may be represented by a structured query language (structured query language, SQL) to implement rule matching. The static program analyzer can perform, according to an input rule calculation formula, for example, an XXX formula in FIG. 4, calculation on a result obtained through program abstraction, to obtain an analysis result, for example, warning (warning) information. As shown in FIG. 4, the warning may include a statement in which an error may exist. For example, a statement1 (S1) in FIG. 4 indicates a first statement. The static program analyzer processes the source code or the IR by using the method in this embodiment of this application, to obtain code of a function calling context. As the result of program abstraction, the code may be regarded as an analysis basis of the static program analyzer. The static program analyzer can perform a corresponding analysis operation based on the code of the function calling context and the rule calculation formula to obtain the warning information.

As described above, the static program analysis includes the abstraction phase and the rule matching phase. The static program analyzer in FIG. 4 shows only the analysis modules, and the analysis modules may be applied to the rule matching phase. The static program analyzer may also include other modules for implementing operations in the abstraction phase.

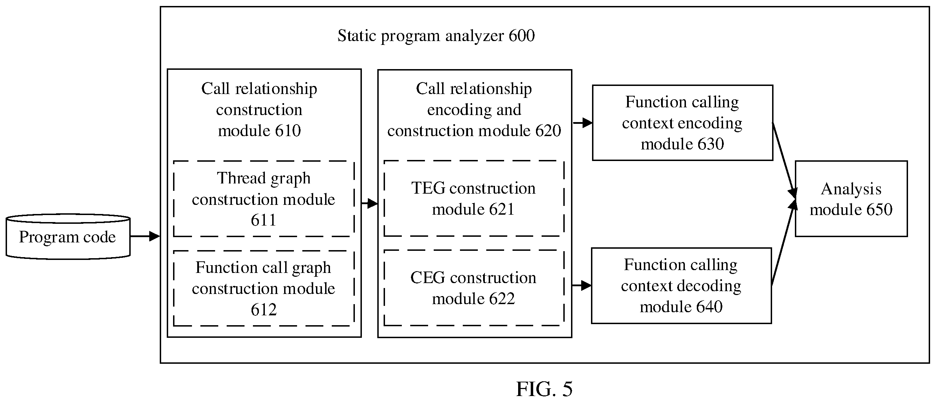

To better describe the method in this embodiment of this application, the following describes, with reference to FIG. 5, a static program analyzer 600 provided in an embodiment of this application. The analyzer 600 can encode the function calling context by using the method in this embodiment of this application.

FIG. 5 shows a schematic block diagram of a static program analyzer according to an embodiment of this application. The analyzer 600 in FIG. 5 includes a call relationship construction module 610, a call relationship encoding and construction module 620, a function calling context encoding module 630, a function calling context decoding module 640, and an analysis module 650.

The call relationship construction module 610 is configured to analyze program code to obtain creation relationships between a plurality of threads in the program code.

The program code may be source code, or may be intermediate code.

According to the invention, the creation relationships between the plurality of threads in the program code is represented by using a thread graph (thread graph, TG).

In this embodiment of this application, an example in which the creation relationships between the plurality of threads are represented by using only the TG is used for description.

Optionally, the call relationship construction module 610 may include a thread graph construction module 611. The thread relationship construction module 611 is configured to analyze the program code to obtain the creation relationships between the plurality of threads in the program code.

Specifically, the thread graph construction module 611 searches for all subfunctions of a thread entry function by using the thread entry function as a start point to form thread nodes, and connects the thread nodes based on the creation relationships between the threads to obtain the thread graph.

In an implementation, the call relationship construction module 610 may be further configured to analyze the program code to obtain call relationships between a plurality of functions in the program code.

The call relationships between the plurality of functions may be represented by using a function call graph (call graph, CG), or may be represented by using a string table, or may be represented in another manner. This is not limited in this embodiment of this application.

In this embodiment of this application, an example in which the call relationships between the plurality of functions are represented by using only the CG is used for description.

Optionally, the call relationship construction module 610 may include a function call graph construction module 612. The function call graph construction module 612 is configured to analyze the program code to obtain the call relationships between the plurality of functions in the program code.

Further, the function call graph construction module 612 may be configured to obtain call relationships between a plurality of functions in threads.

The call relationships between the plurality of functions in the threads may be represented by using a CG in the thread. In this case, the function call graph construction module 612 may also be referred to as a function call graph construction module 612 in the thread. An input of the module 612 may include all functions in a thread node. The call relationships between all the functions in the threads are analyzed, a function node is constructed for each function, and the function nodes are connected based on the call relationships to obtain a function call graph in the thread.

For specific descriptions of the call relationship construction module 610, refer to the descriptions in step S710 in the method 700.

The call relationship encoding and construction module 620 is configured to encode the creation relationships between the plurality of threads, to obtain encoding values corresponding to the creation relationships between the plurality of threads.

According to the invention, the encoding values corresponding to the creation relationships between the plurality of threads are represented by using a thread calling context encoding graph (thread calling context encoding graph, TEG).

According to the invention the encoding values corresponding to the creation relationships between the plurality of threads are represented by using only the TEG is used for description.

Optionally, the call relationship encoding and construction module 620 may include a thread calling context encoding graph construction module 621. The thread calling context encoding graph construction module 621 receives the thread graph output by the thread graph construction module 611, applies the calling context encoding algorithm to the thread graph, and calculates an encoding value for each edge in the thread graph, namely, the encoding values corresponding to the creation relationships between the plurality of threads.

In an implementation, the call relationship encoding and construction module 620 may be further configured to encode the call relationships between the plurality of functions, to obtain the encode values corresponding to the call relationships between the plurality of functions.

The encoding values corresponding to the call relationships between the plurality of functions is represented by using a function calling context encoding graph (function calling context encoding graph, CEG).

In this embodiment of this application, an example in which the encoding values corresponding to the call relationships between the plurality of functions are represented by using the CEG is used for description.

Optionally, the call relationship encoding and construction module 620 may include a function calling context encoding graph construction module 622.

Further, the function calling context encoding graph construction module 622 may be configured to obtain the encoding values corresponding to the call relationships between the plurality of functions in the threads. In this case, the function calling context encoding graph construction module 622 may also be referred to as a function calling context encoding graph construction module 622 in the thread. The module 622 receives the function call graph in the thread output by the function call graph construction module 612 in the thread, applies the calling context encoding algorithm to the function call graph in the thread, and calculates an encoding value for each edge in the function call graph in the thread, namely, the encoding values corresponding to the call relationships between the plurality of functions in the threads.

For specific descriptions of the call relationship encoding and construction module 620, refer to the descriptions in step S720 in the method 700.

The function calling context encoding module 630 is configured to obtain an encoding result of a calling context of a target function, and provide the analysis module 650 with a function of encoding the calling context of the target function.

An input of the module 630 is calling context information of the target function. An output is the encoding result of the calling context of the target function, namely, encoded compression data.

The encoding result of the calling context of the target function includes an encoding result of a context of a thread to which the target function belongs.

Optionally, the encoding result of the calling context of the target function further includes an encoding result of a function calling context of the target function.

Further, the encoding result of the function calling context of the target function refers to the encoding value of the function calling context of the target function in the thread to which the target function belongs.

Specifically, the module 630 performs path matching on the calling context information of the target function in the TEG and the CEG in the thread, to obtain the encoding result of the calling context of the target function.

For specific descriptions of the calling context encoding module 630, refer to the descriptions in the method 700.

The function calling context decoding module 640 is configured to obtain a function call string of the target function.

An input of the module 640 is the encoding result of the calling context of the target function, and an output is the function call string of the target function.

Specifically, the module 640 performs path matching on the encoding result of the calling context of the target function in the TEG and the CEG in the thread, to obtain the function call string of the target function.

For specific descriptions of the calling context decoding module 640, refer to the descriptions in the method 700.

The analysis module 650 is configured to perform static analysis of the program code. For example, the analysis module 650 may include any one or more analysis modules shown in FIG. 4. Alternatively, the analysis module 650 may further include another analysis module.

The function calling context encoding module 630 shown in FIG. 5 is independent of the analysis module 650. It should be understood that a connection relationship in FIG. 5 is merely an example, and the function calling context encoding module 630 may be further integrated into the analysis module 650.

The function calling context decoding module 640 shown in FIG. 5 is independent of the analysis module 650. It should be understood that a connection relationship in FIG. 5 is merely an example, and the function calling context decoding module 640 may be further integrated into the analysis module 650.

It should be understood that FIG. 4 and FIG. 5 are merely described by using an example in which the method in this embodiment of this application is applied to a static program analysis scenario, and do not constitute a limitation on an application scenario of the method in this embodiment of this application. For example, the method in this embodiment of this application may be further applied to a multi-thread dynamic analysis tool, a debug tool, and a static analysis tool as a root technology.

FIG. 6 shows a schematic flowchart of an encoding method 700 for a function calling context related to the first aspect of the invention. The method 700 includes step S710 to step S750. The following describes in detail step S710 to step S750.

S710: Analyze program code to obtain creation relationships between a plurality of threads in the program code.

For example, step S710 may be performed by the call relationship construction module 610 in FIG. 5. In other words, the program code is used as an input of the call relationship construction module 610, and processed by the call relationship construction module 610 to output the creation relationships between the plurality of threads in the program code.

The program code may be source code, or may be intermediate code. The intermediate code may also be referred to as an intermediate representation. For example, the intermediate code is obtained after the source code is processed by a compiler front end. For example, the compiler front end may use a low level virtual machine (low level virtual machine, LLVM) compiler front end Clang, and a file in a llvm bc format is obtained after Clang processing, where bc is a file suffix. The file in the llvm bc format may also be referred to as a llvm be intermediate code, and the llvm be intermediate code is used as the program code in step S710.

The program code may include a plurality of threads. A thread includes a thread entry function of the thread and a subfunction of the thread entry function. A set of the thread entry function and the subfunction of the thread entry function may be used as a "function set". In static program analysis, the "function set" may also be referred to as a "function set of a static thread".

The thread entry function may include two types, and one type is a root function in the program code. The root function is a function that is not called by another function in the program code. FIG. 7 shows a function call graph that represents call relationships between a plurality of functions in the program code. A plurality of nodes in FIG. 7 respectively represent the plurality of functions. Edges (connection lines) between the functions represent the call relationships between the functions. One end to which an arrow points indicates a callee (callee) function, and the other end indicates a caller (caller) function. The program code shown in FIG. 7 includes a function threadentry0, a function A, a function threadentry1, a function B, a function C, a function threadentry2, a function D, and a function E. The function threadentry0 shown in FIG. 7 is not called by another function, and the threadentry0 may be used as the root function in the program code shown in FIG. 7.

The other type is a function created by a thread creation statement. For example, the thread creation statement may be a pthread_create (pthread_create) statement. The thread creation statement is used to create a thread. A function for calling the thread creation statement is a thread creation function, and the function created by the thread creation statement is a thread entry function. The thread entry function obtained in this manner may also be referred to as a child thread entry function.

In this embodiment of this application, the function created by the thread creation statement may also be referred to as a function created by calling a function of the thread creation statement, namely, a function created by the thread creation function. Correspondingly, the thread created by the thread creation statement may also be referred to as a thread created by calling the function of the thread creation statement, namely, a thread created by the thread creation function.

For example, the function A in FIG. 7 calls the thread creation statement. In other words, the function A is the thread creation function. The thread creation statement creates a thread thread1. Specifically, the function created by the thread creation statement is the function threadentry1, and the function threadentryl is a thread entry function of the thread1. Similarly, the function B and the function C call the thread creation statement. In other words, the function B and the function C are thread creation functions. The thread creation statement creates a thread thread2. Specifically, the function created by the thread creation statement is the function threadentry2, and the function threadentry2 is a thread entry function of the thread2.

In this way, FIG. 7 includes three threads: a thread0, the thread1, and the thread2. A thread entry function of the thread0 is the threadentry0, and may be represented as entryfunc: threadentry0. A thread entry function of the thread1 is the function threadentry1, and may be represented as entryfunc: threadentry1. A thread entry function of the thread2 is the function threadentry2, and may be represented as entryfunc: threadentry2.

The subfunction of the thread entry function refers to all functions that are called by using the thread entry function as a call start point without crossing the thread creation statement.

For example, as shown in FIG. 7, the thread entry function of the thread1 is the function threadentry1, and a subfunction of the function threadentry1 includes the function B called by the function threadentry1 and the function C called by the function threadentry1.

The plurality of threads in the program code include a parent thread and a child thread, and a thread creation function in the parent thread is used to create the child thread. In other words, the child thread is a thread created by the parent thread. In other words, if one thread includes a thread creation function for creating another thread, it may be understood that one thread creates another thread, and there is a creation relationship between the two threads.

Two threads with a creation relationship are a group of a parent thread and a child thread, and may be referred to as a thread pair (pair). A function in a parent thread may create a child thread only once or may create a child thread multiple times. Therefore, one thread pair may include one creation relationship, or may include a plurality of creation relationships.

The function call graph in FIG. 7 is used as an example. A main thread in FIG. 7 is the thread0, an entry function of the thread0 is the function threadentry0, and the function threadentry0 calls the function A. In this case, a thread in which the function A is located is the thread 0. The function A is a thread creation function of the thread thread1. When the function A is called, a child thread thread1 is created. The thread0 is a parent thread of the thread1, and the thread1 is a child thread of the thread0. Therefore, the thread thread0 creates one thread1. In other words, there is one creation relationship between the thread0 and the thread1. The thread entry function of the thread1 is the function threadentry1. The function threadentry1 calls the function B and the function C. In this case, a thread in which the function B and the function C are located is the thread1. Both the function B and the function C are thread creation functions of the thread thread2. When the function B or the function C is called, a child thread thread2 is created. The thread1 is a parent thread of the thread2, and the thread2 is a child thread of the thread1. The function threadentry1 calls the function B twice. Each time the function B is called, a thread thread2 is created. In other words, the function B creates two threads thread2. The function threadentry1 calls the function C once. When the function C is called, a thread thread2 is created. In other words, the function C creates the thread2 once. Therefore, the thread thread1 creates the thread2 three times, or the thread2 creates three threads thread2. In other words, there are three creation relationships between the thread1 and the thread2.

Creation relationships between a parent thread and a child thread one-to-one correspond to function calling contexts of thread creation functions in the parent thread. In other words, a quantity of the creation relationships between the parent thread and the child thread is the same as a quantity of the function calling contexts of the thread creation functions in the parent thread.

A function calling context of a function in a thread refers to a path in which the function in the thread is called. A start point of the path in which the function in the thread is called is a thread entry function of the thread. For a same function, different function call paths correspond to different function calling contexts. As shown in FIG. 7, the thread1 is the parent thread of the thread2. Because both the function B and the function C in the thread1 create the thread entry function threadentry2 of the thread2, the thread creation function in the thread1 includes the function B and the function C. In the thread1, the function B is called twice by the function threadentry1. In other words, the function B is called by the function threadentry1 at two locations. The function B is called twice by the function threadentry1, corresponding to different function call paths. In other words, the function B has two different function calling contexts. In the thread1, the function B has two function calling contexts, and the function C has one function calling context. In other words, the thread creation function of the thread1 includes three function calling contexts that respectively correspond to three creation relationships between the thread1 and the thread2.

Optionally, the creation relationships between the plurality of threads may be represented by using a thread graph (thread graph, TG).

For example, the TG may be obtained by using the thread graph construction module 611 in FIG. 5.

The TG includes a plurality of thread nodes and edges (connection lines) between the thread nodes. Different thread nodes in the TG represent different threads. An edge between two thread nodes represents a creation relationship between the two threads, or may be understood as being used to distinguish a parent thread and a child thread. In the TG, a node corresponding to a parent thread is a parent thread node, and a node corresponding to a child thread is a child thread node. As described above, there may be a plurality of creation relationships between two threads. Correspondingly, there may be a plurality of edges between two thread nodes in the TG, and the edges respectively correspond to a plurality of thread creations.

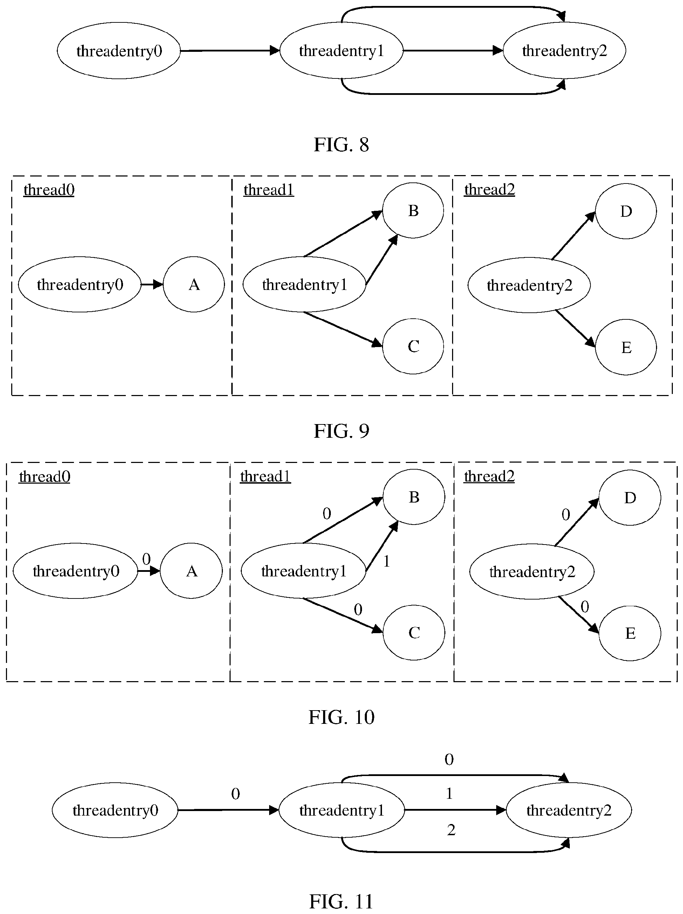

For example, FIG. 8 shows a thread graph corresponding to the function call graph shown in FIG. 7. FIG. 8 includes three thread nodes. The three thread nodes respectively represent the three threads thread0, thread1, and thread2 in FIG. 7. As shown in FIG. 8, the three threads may be represented by using thread entry functions of the three threads: threadentry0, threadentry1, and threadentry2. As shown in FIG. 8, an edge between the threadentry0 and the threadentry1 represents a creation relationship between the thread0 and the thread1, and three edges between the threadentry1 and the threadentry2 respectively represent three creation relationships between the thread1 and the thread2.

It should be understood that, herein, the creation relationships between the plurality of threads are represented only in a form of a graph, and the creation relationships between the plurality of threads may alternatively be represented by using another data structure. For example, the creation relationships between the plurality of threads are represented in a form of a string table. This is not limited in this embodiment of this application.

Further, step S710 further includes: analyzing the program code to obtain the call relationships between the plurality of functions in the program code.

For example, step S710 may be performed by the call relationship construction module 610 in FIG. 5. In other words, the program code is used as an input of the call relationship construction module 610, and may be further processed by the call relationship construction module 610 to output the call relationships between the plurality of functions in the program code.

Two functions with a call relationship may be referred to as a function pair. Because one function may call another function multiple times, one function pair may include one call relationship, or may include a plurality of call relationships. In other words, in a function pair, one function may call another function only once, or may call another function for multiple times. For example, as shown in FIG. 7, the function threadentry1 calls the function B twice. In other words, there are two call relationships between the function threadentry1 and the function B, and the two calls respectively correspond to different function calling contexts.

Optionally, the call relationships between the plurality of functions may be represented by using a function call graph (call graph, CG), for example, the function call graph shown in FIG. 7.

For example, the CG may be obtained by using the function call graph construction module 612 in FIG. 5.

The CG includes a plurality of function nodes and edges (connection lines) between the function nodes. The function nodes in the CG represent the functions. An edge between two function nodes represents a call relationship between the two functions, that is, distinguish between a caller (caller) function and a callee (callee) function. Alternatively, it may be understood that an edge between two function nodes may indicate a function call statement between two functions. As described above, there may be a plurality of calls between two functions. Correspondingly, there may be a plurality of edges between two function nodes in the CG, and the edges respectively correspond to a plurality of function calls.

It should be understood that, in this embodiment of this application, the call relationships between the plurality of functions are represented only in a form of a graph, and the call relationships between the plurality of functions may alternatively be represented by using another data structure. For example, the call relationships between the plurality of functions are represented in a form of a string table. This is not limited in this embodiment of this application.

Specifically, the call relationships between the plurality of functions may be call relationships between all functions in the program code, for example, the call relationships between the plurality of functions in the program code shown in FIG. 7.

Alternatively, the call relationships between the plurality of functions may include the call relationships between the plurality of functions in the plurality of threads. In other words, the call relationships between all the functions in the program code are respectively represented based on different threads.

In a thread, a start point of a call relationship between a plurality of functions is a thread entry function of the thread. There is no thread creation relationship between the plurality of functions in the thread. In other words, the call relationship between the plurality of functions in one thread includes a call relationship between the plurality of functions that uses the thread entry function of the thread as the start point and that does not cross a thread creation statement.

For example, the CG in the plurality of threads may represent the call relationships between the plurality of functions in the plurality of threads. The CG in each thread includes only a thread entry function node of the thread and an edge between a subfunction node of the thread entry function and the function node of the thread. FIG. 9 shows a function call graph in a thread corresponding to the function call graph shown in FIG. 7. FIG. 9 includes CGs in three threads: a CG in a thread0, a CG in a thread1, and a CG in a thread2. A start point of a call relationship between functions in the thread0 is a threadentry0. A call relationship between a plurality of functions in the thread0 includes: The threadentry0 calls a function A. A start point of call relationships between functions in the thread1 is a threadentry1. The call relationships between the plurality of functions in the thread1 include: The threadentry1 calls a function B twice, and the threadentry1 calls a function C. A start point of call relationships between functions in the thread2 is a threadentry2. The call relationships between the plurality of functions in the thread2 include: The threadentry2 calls a function D, and the threadentry2 calls a function E.

In static program analysis, all instructions in the program code are usually analyzed, so that the creation relationships between all the threads in the program code can be obtained.

For example, step S710 includes step S711 to step S712.

S711: Analyze the instructions in the program code to obtain function call statements and thread creation statements in the program code.

Specifically, the program code is scanned to obtain the thread creation statements and the function call statements. For example, the thread creation statement may be a pthread_create statement. Locations of the thread creation statements are locations of thread creations. To obtain thread creation statements in the program code may be understood as to obtain the locations of the thread creations in the program code. Locations of the function call statements are locations of function calls. To obtain function call statements in the program code may be understood as to obtain the locations of the function calls.

In this embodiment of this application, one "statement" may also be understood as one "instruction". For example, the function call statement is a function call instruction.

S712: Obtain the creation relationships between the plurality of threads and the call relationships between the plurality of functions in the plurality of threads based on the function call statements and the thread creation statements.

A thread entry function is used as a start point. The thread entry function and a subfunction of the thread entry function form a thread, which is represented as a thread node in the TG. The creation relationships between the threads are obtained based on the function call statements and the thread creation statements between the functions in the threads. A creation relationship between two threads is represented as an edge between two thread nodes in the TG.

Specifically, the function call statements are traversed starting from the thread entry function. Without crossing the thread creation statements and the function call statements for calling the thread entry function, all obtained callee functions are subfunctions of the thread entry function. In other words, all the subfunctions of the thread entry function are functions called by common function call statements. The common function call statement is a function call statement other than a thread creation statement. For ease of description, the common function call statements in this embodiment of this application are all referred to as function call statements. A set of the thread entry function and the subfunction of the thread entry function may be used as a "function set". The "function set" may be created in the TG in a form of a thread node. In other words, a thread node in the TG may also be understood as a "function set". For example, in FIG. 8, a function set corresponding to a thread0 includes a function threadentry0 and a function, namely, a function A, called by the function threadentry0. A function set corresponding to a thread1 includes a function threadentry1 and all functions, namely, a function B and a function C, called by the function threadentry1. A function set corresponding to a thread2 includes a function threadentry2 and all functions, namely, a function D and a function E, called by the function threadentry2.

Call relationships between a plurality of functions in one thread are obtained based on function call statements between all the functions in the thread. In other words, the call relationships between the plurality of functions in the thread are obtained based on function call statements between a plurality of functions in one function set. A function in a function set may be created in a form of a node in a graph, for example, a CG in a thread shown in FIG. 9. An edge between two nodes in the CG in the thread indicates a call relationship between functions. For example, the edge between the two nodes is a function call statement between the two functions. For example, a directed connection line between the threadentry0 and the function A in FIG. 9 represents a statement for the function threadentry0 to call the function A.

A parent thread and a child thread may be distinguished based on a thread creation statement, and are respectively represented as a parent thread node and a child thread node in the TG. The parent thread node and the child thread node are connected to each other to form the TG. A quantity of edges between the parent thread node and the child thread node may be determined based on calling contexts of a thread creation function for creating the child thread in the parent thread. Calling contexts of functions in a thread may be determined based on call relationships between a plurality of functions in the thread. In other words, the calling contexts of the thread creation function in the parent thread may be determined based on the call relationships between the plurality of functions in the parent thread.

It should be noted that, in a process of constructing the CG in the thread, other processing may be performed on the graph, to obtain the CG in the thread. For example, related graph analysis of strong connectedness is performed. This is not limited in this application.

As described above, the TG may represent the creation relationships between the plurality of threads in the program code. The CG in the thread may represent the call relationships between the plurality of functions in the threads. To form the TG may also be understood as to obtain the creation relationships between the plurality of threads. Constructing the CG in the thread may also be understood as obtaining the call relationships between the plurality of functions in the plurality of threads.

The following describes a method for constructing the TG and the CG in the thread by using an example. However, it should be understood that in the invention according to the first and second aspect a TEG and TGs are used and the use of a CG and CEG is an advantageous embodiment in the first aspect and is essential in the second aspect.

In an implementation, step S710 may include step S713 and step S714.

S713: Determine the CG in the thread based on the CG.

As described above, the CG can represent the call relationships between the plurality of functions in the program code. In other words, the CG is obtained by analyzing the program code. The call relationships between the plurality of functions in the thread may be obtained based on the call relationships between the plurality of functions in the program code. Therefore, the CG in the thread can be obtained based on the CG.

For example, call relationships between a plurality of functions in a thread corresponding to a thread entry function are obtained based on a call relationship between the thread entry function in the CG and a subfunction of the thread entry function. Therefore, the CG in the thread is obtained.

For example, based on the CG shown in FIG. 7, the CGs in the three threads shown in FIG. 9 are obtained.

S714: Obtain a TG based on the CG and the CG in the thread.

A thread entry function in the CG and a subfunction of the thread entry function are used as a thread node in the TG. A quantity of thread nodes in the TG is equal to a quantity of thread entry function nodes in the CG. In the thread nodes of the TG, a thread entry function may represent a thread corresponding to the thread entry function. If in the CG, there is a thread creation edge between a thread entry function node and another function node, an edge is constructed in the TG between a thread node corresponding to the thread entry function and a thread node to which the another function belongs. The thread creation edge represents a thread creation statement. A quantity of edges between a parent thread node and a child thread node is equal to a quantity of calling contexts of the thread creation function in the parent thread node for creating a child thread. The calling context of each function in the thread may be determined based on the CG in the thread.

For example, based on the CG in the thread corresponding to the thread1 shown in FIG. 9, it may be learned that the function B has two different calling contexts, and the function C has one calling context. Correspondingly, in the TG, there are three different edges between the threadentry1 and the threadentry2, to indicate three different call paths.

It should be understood that two implementations of the creation relationships between the plurality of threads in the program code and the call relationships between the plurality of functions in the plurality of threads are merely examples, and the creation relationships between the plurality of threads and the call relationships between the plurality of functions in the plurality of threads may alternatively be obtained by using another method. A specific implementation of obtaining the creation relationships between the plurality of threads and the call relationships between the plurality of functions in the plurality of threads is not limited in this embodiment of this application.

S720: Encode (encode) the creation relationships between the plurality of threads, to obtain encoding values corresponding to the creation relationships between the plurality of threads.

For example, step S720 may be performed by the call relationship encoding and construction module 620 in FIG. 5. In other words, the creation relationships between the plurality of threads are used as an input of the call relationship encoding and construction module 620, and processed by the call relationship encoding and construction module 620 to output the encoding values corresponding to the creation relationships between the plurality of threads in the program code.

The encoding values may be represented by numbers. For example, the encoding values may be integers.

If there are a plurality of creation relationships between two threads, encoding values corresponding to the plurality of creation relationships are different. For example, when a plurality of edges are included between two thread nodes in the TG, encoding values corresponding to the plurality of edges are different.

Optionally, the encoding values corresponding to the creation relationships between the plurality of threads in the program code are obtained by encoding the creation relationships between the plurality of threads in the program code according to a calling context encoding (calling context encoding) algorithm.

An encoding value of a context of a thread is equal to a sum of encoding values of creation relationships between a plurality of threads in the context of the thread. This algorithm can ensure that encoding values of different contexts of the threads are different.

In other words, the creation relationships between the plurality of threads are encoded according to the calling context encoding algorithm, to ensure that encoding results of different contexts of the threads are different, so that the encoding results of the contexts of the threads uniquely indicate the contexts of the threads. It should be understood that, in this embodiment of this application, the creation relationships between the plurality of threads may alternatively be encoded in another manner, provided that the encoding values of the different contexts of the threads are different.

Further, step S720 further includes: encoding the call relationships between the plurality of functions in the program code to obtain the encoding values corresponding to the call relationships between the plurality of functions.

Specifically, the encoding values corresponding to the call relationships between the plurality of functions in the program code correspond to function call statements between the plurality of functions in the program code.

Alternatively, step S720 further includes: encoding the call relationships between the plurality of functions in the plurality of threads to obtain the encoding values corresponding to the call relationships between the plurality of functions in the plurality of threads.

Specifically, an encoding value corresponding to a call relationship between a plurality of functions in one thread of the plurality of threads corresponds to a function call statement between the plurality of functions.

The encoding values may be represented by numbers. For example, the encoding values may be integers.

If there are a plurality of call relationships between two functions, encoding values corresponding to the plurality of call relationships between the two functions are different. In other words, encoding values corresponding to function call statements between the two functions are different when the two functions are called multiple times.

Optionally, the encoding values corresponding to the call relationships between the plurality of functions in the plurality of threads are obtained by separately encoding the call relationships between the plurality of functions in the plurality of threads according to the calling context encoding algorithm.

An encoding value of a function calling context of a function in a thread is equal to a sum of encoding values of call relationships between a plurality of functions in the function calling context of the function in the thread. This algorithm can ensure that encoding values of different function calling contexts of functions in the threads are different.

The call relationships between the plurality of functions in the plurality of threads are encoded according to the calling context encoding algorithm, to ensure that encoding results of different function calling contexts of the functions in the threads are different, so that the different encoding results of the function calling contexts of the functions in the threads uniquely indicate the function calling contexts of the functions in the threads.

It should be understood that, in this embodiment of this application, the call relationships between the plurality of functions in the threads may alternatively be encoded in another manner, provided that the encoding values of the different function calling contexts of the functions in the threads are different.

The following uses the TG and the CG in the thread as an example to describe step S720 although the use of a CG (and CEG) is an advantageous embodiment of the invention in the first aspect of the invention and is an essential feature of the second aspect of the invention.

For example, the edge in the CG in the thread is encoded according to the calling context encoding algorithm, to obtain an encoding value on the edge in the CG in the thread. For example, as shown in FIG. 10, the encoding values may be represented by using a function calling context encoding graph (function calling context encoding graph, CEG) in the thread. The CEG in the thread includes function nodes in the CG in the threads and edges between the function nodes, and further includes encoding values on the edges. For example, this step may be performed by the function calling context encoding graph construction module 622 in the thread in FIG. 5.

Specifically, in the CG in the thread, an edge between function nodes may be referred to as a function call edge, and two function nodes connected through the function call edge may be understood as a function node pair. Each function call edge is encoded to obtain an encoding value on each function call edge. When a quantity of edges between two function nodes in a function node pair is greater than or equal to 2, encoding values on all edges between the two function nodes are different. Encoding values on edges in different function node pairs may be the same, or may be different. The CEG in the thread shown in FIG. 10 includes a plurality of function nodes and edges between the plurality of function nodes. For example, there are two edges between a function node threadentry1 and a function node B. In other words, it indicates that the function threadentry1 calls the function B twice. Encoding values on the two edges are 0 and 1 respectively, indicating that encoding values corresponding to two call relationships between the function threadentry1 and the function B are 0 and 1 respectively.

For example, the TG is encoded according to the calling context encoding algorithm, to obtain encoding values on the edges in the TG. According to the invention, as shown in FIG. 11, the encoding values are represented by using a thread calling context encoding graph (thread calling context encoding graph, TEG). The TEG includes thread nodes in the TG and edges between the thread nodes, and further includes encoding values on the edges. For example, this step may be performed by the thread calling context encoding graph construction module 621 in FIG. 5.

Specifically, in the TG, an edge between thread nodes may be referred to as a thread call edge, and two thread nodes connected through the thread call edge may be understood as a thread node pair. Each thread call edge is encoded to obtain an encoding value on each edge. When a quantity of edges between two thread nodes in one thread node pair is greater than or equal to 2, encoding values on all edges between the two thread nodes are different. Encoding values on edges in different thread node pairs may be the same or may be different. For example, the TEG shown in FIG. 11 includes three thread nodes and a plurality of edges between the three thread nodes. There are three edges between a node threadentry1 and a node threadentry2 in FIG. 11, and encoding values on the three edges are respectively 0, 1, and 2, indicating that encoding values corresponding to three creation relationships between the two threads are 0, 1, and 2 respectively.

Further, encoding values corresponding to creation relationships between a parent thread and a child thread correspond to function calling contexts of thread creation functions in the parent thread. In other words, when a plurality of thread call edges are included between two thread nodes in the TEG, encoding values on the plurality of thread call edges correspond to the function calling contexts of the thread creation functions in the parent thread. In the TEG shown in FIG. 11, there are three edges between the node threadentry1 and the node threadentry2, and encoding values on the three edges respectively correspond to two function calling contexts of a function B in a thread1 and one function calling context of a function C in the thread1.

Specifically, a function calling context of a function in a thread to which the function belongs may be encoded to obtain an encoding result of the function calling context of the function in the thread to which the function belongs. In other words, the encoding result of the function calling context of the function in the thread to which the function belongs may represent the function calling context of the function in the thread to which the function belongs. In this case, the encoding values corresponding to the creation relationships between the parent thread and the child thread one-to-one correspond to encoding results of the function calling contexts of the thread creation functions in the parent thread.

It can be ensured that a complete function call string can be obtained by decoding the encoding result, and a calling context of a function in another thread is not lost. For specific descriptions, refer to the descriptions in a method 1700.

For example, as shown in FIG. 12, encoding results of two function calling contexts of a function B in a thread1 are respectively represented as [B, 0] and [B, 1], and an encoding result of a function calling context of a function C in the thread1 is represented as [C, 0]. In this case, [B, 0], [B, 1], and [C, 0] correspond to encoding values 0, 1, and 2 on three edges included between a node threadentry1 and a node threadentry2, respectively.

Alternatively, function calling contexts in threads may be represented in another manner, provided that encoding values corresponding to creation relationships between the threads one-to-one correspond to calling contexts of thread creation functions in the parent thread.

It should be noted that step S710 and step S720 are optional steps.

Alternatively, an execution body of step S710 and step S720 may be the same as or different from an execution body of step S730 to step S750. For example, the encoding values obtained in step S720 may be obtained through precoding, and may be loaded or called when step S730 to step S750 are performed.

S730: According to the invention, obtain calling context information of a target function.

For example, step S730 may be performed by the function calling context encoding module 630 in FIG. 5.

The calling context information of the target function indicates the calling context of the target function. In other words, the calling context information of the target function indicates a call path of the target function.

For example, the obtaining calling context information of a target function may be receiving the calling context information of the target function from another module or another device. Alternatively, the obtaining calling context information of a target function may be locally loading the calling context information of the target function. This is not limited in this embodiment of this application.

Optionally, the calling context information of the target function includes a function call string of the target function. For example, the function call string of the target function is threadentry0 → A → threadentry1 → C → threadentry2 → D, and represents a calling context of a target function D. In other words, the function D is called based on the foregoing call path.

For example, the encoding method 700 in this embodiment of this application may be applied to a static program analyzer. The analyzer includes a plurality of analysis modules, and the modules may use different manners of distinguishing function calling contexts. If one of the modules distinguishes the function calling contexts by using the function call string, an analysis result is provided for other analysis modules in a form of the function call string. According to the method in this embodiment of this application, the function call string provided by the analysis module may be obtained, and the analysis result provided in the form of the function call string is converted into an analysis result represented in a form of an encoding result. This greatly reduces memory overheads. It should be understood that the application scenario herein is merely an example, and the method 700 may be further applied to another scenario.

Optionally, the calling context information of the target function includes an encoding result of a calling context of a caller (caller) function of the target function and a first instruction. The target function is a function called by the caller function based on the first instruction.

In other words, the target function is used as a callee (callee) function of the caller function. The target function may be determined based on the caller function and the first instruction.

The encoding result of the calling context of the caller function of the target function indicates the calling context of the caller function of the target function. Specifically, the encoding result of the calling context of the caller function of the target function may be obtained based on the method 700. For example, the encoding result of the caller function of the target function includes an encoding result of a context of the caller function in a thread to which the caller function belongs and an encoding result of a function calling context of the caller function in the thread to which the caller function belongs. For specific descriptions, refer to step S750 and step S770 in the following descriptions.

For example, the encoding method 700 in this embodiment of this application may be applied to the static program analyzer. When analyzing an instruction, the analyzer may encode a calling context of a function (an example of the caller function) in which the instruction is located, to obtain an encoding result, and store the encoding result of the calling context of the function. When the function includes a function call statement, the analyzer may obtain an encoding result of the callee function based on the stored encoding result of the calling context of the function and the callee function (an example of the target function) corresponding to the function call statement, and store the encoding result. It should be understood that the application scenario herein is merely an example, and the method 700 may be further applied to another scenario.

Optionally, the calling context information of the target function includes an encoding result of a calling context of a callee function called by the target function and a second instruction. The callee function is a function called by the target function based on the second instruction.

In other words, the target function is used as the caller function, and the target function may be determined based on the callee function and the second instruction.

The encoding result of the calling context of the callee function indicates the calling context of the callee function. Specifically, the calling context of the callee function may be obtained based on the method 700. For example, the calling context of the callee function includes an encoding result of a context of the callee function in a thread to which the callee function belongs and an encoding result of a function calling context of the callee function in the thread to which the callee function belongs. For specific descriptions, refer to step S750 and step S770 in the following descriptions.

For example, the encoding method 700 in this embodiment of this application may be applied to the static program analyzer. When analyzing an instruction, the analyzer may encode a calling context of a function (an example of the callee function) in which the instruction is located, to obtain an encoding result, and store the encoding result of the calling context of the function. When the analyzer finishes function analysis, the analyzer may obtain the encoding result of the callee function based on the stored encoding result of the calling context of the function and the caller function (an example of the target function) for calling the function call statement of the function, and store the encoding result. It should be understood that the application scenario herein is merely an example, and the method 700 may be further applied to another scenario.

Optionally, the calling context information of the target function includes an encoding result of a calling context of a callee function called by the target function. The callee function is a function called by the target function.

In other words, the target function is used as the caller function, and the target function may be determined based on the encoding result of the calling context of the callee function.

The encoding result of the calling context of the callee function indicates the calling context of the callee function. Specifically, the calling context of the callee function may be obtained based on the method 700. For example, the calling context of the callee function includes an encoding result of a context of the callee function in a thread to which the callee function belongs and an encoding result of a function calling context of the callee function in the thread to which the callee function belongs. For specific descriptions, refer to step S750 and step S770 in the following descriptions.

For example, the encoding method 700 in this embodiment of this application may be applied to the static program analyzer. When analyzing an instruction, the analyzer may encode a calling context of a function (an example of the callee function) in which the instruction is located, to obtain an encoding result, and store the encoding result of the calling context of the function. When the analyzer finishes function analysis, the analyzer may obtain the encoding result of the callee function based on the stored encoding result of the calling context of the function and the caller function (an example of the target function), and store the encoding result. It should be understood that the application scenario herein is merely an example, and the method 700 may be further applied to another scenario.

S740: According to the invention, obtain, the encoding values corresponding to the creation relationships between the plurality of threads in the program code. The program code includes the target function.

For example, step S740 may be performed by the function calling context encoding module 630 in FIG. 5.

For example, the encoding values corresponding to the creation relationships between the plurality of threads in the program code may be obtained in step S720.

Alternatively, the encoding values corresponding to the creation relationships between the plurality of threads in the program code may be received from another module or device.

S750: According to the invention, encode, based on the calling context information of the target function and the encoding values corresponding to the creation relationships between the plurality of threads, a context of a thread to which the target function belongs, to obtain an encoding result of the context of the thread to which the target function belongs.

For example, step S750 may be performed by the function calling context encoding module 630 in FIG. 5.

The context of the thread to which the target function belongs may be understood as a creation relationship between the thread to which the target function belongs and another thread.

The thread to which the target function belongs is a thread to which the calling context of the target function belongs. In other words, for a function, different call paths may belong to a same thread, or may belong to different threads. For ease of description, in this embodiment of this application, the thread to which the calling context of the target function belongs is briefly referred to as the thread to which the target function belongs.

Optionally, the encoding result of the context of the thread to which the target function belongs indicates a thread entry function in the thread to which the target function belongs and an encoding value of the context of the thread to which the target function belongs. Encoding values of different contexts of the thread are different.

In this way, the thread to which the calling context of the target function belongs can be distinguished by using the thread entry function, to help quickly distinguish calling contexts of functions in different threads. A context of a thread can be uniquely indicated by using an encoding value of the context of the thread, to further accurately distinguish different contexts of the thread. This helps improve accuracy of an analysis result.

For example, the encoding result of the context of the thread to which the target function belongs may include a first element and a second element. The first element indicates the thread entry function in the thread to which the target function belongs. The second element indicates the encoding value of the context of the thread to which the target function belongs.

Alternatively, the encoding result of the context of the thread to which the target function belongs may include a fifth element. The fifth element may indicate a thread entry function in the thread to which the target function belongs and an encoding value of the context of the thread to which the target function belongs. In other words, the fifth element corresponds to the thread entry function in the thread to which the target function belongs and the encoding value of the context of the thread to which the target function belongs, and can uniquely indicate a context of a thread.

The following uses three manners (a manner 1, a manner 2, and a manner 3) as examples to describe a specific implementation of step S750.

According to the solution in this embodiment of this application, a context of a thread to which a function belongs is encoded, and an encoding result can indicate the context of the thread to which the function belongs, so that different calling contexts of functions in a plurality of threads can be distinguished. This helps improve analysis precision. In addition, in the solution in this embodiment of this application, thread information of the function can be obtained without decoding the encoding result, so that the context of the thread to which the function belongs can be quickly distinguished. This reduces time overheads caused by decoding, and helps improve analysis efficiency. In addition, the context of the thread to which the function belongs is encoded, so that space overheads are low, and storage space pressure caused by storing context information of the thread can be effectively reduced. In other words, according to the solution in this embodiment of this application, the context of the thread to which the function belongs can be distinguished without occupying a large amount of storage space. This improves analysis precision and analysis efficiency.

Optionally, the method 700 further includes: providing a first API, where an input of the first API includes the calling context information of the target function. An output of the API includes the encoding result of the context in the thread to which the target function belongs.

Alternatively, it may be understood that the calling context information of the target function in step S730 is obtained through the first API. The first API outputs the encoding result that is of the context of the thread to which the target function belongs and that is obtained in step S750.

For example, the first API may output the first element and the second element. Alternatively, the first API may output the fifth element.

Optionally, the method 700 further includes step S760 and step S770.

S760: Obtain the encoding values corresponding to the call relationships between the plurality of functions in the plurality of threads in the program code.

For example, step S760 may be performed by the function calling context encoding module 630 in FIG. 5.

For example, the encoding values corresponding to the call relationships between the plurality of functions in the plurality of threads in the program code may be obtained in step S720.

Alternatively, the encoding values corresponding to the call relationships between the plurality of functions in the plurality of threads in the program code may be received from another module or device.

An encoding value corresponding to a call relationship between a plurality of functions in one thread of the plurality of threads corresponds to a function call statement between the plurality of functions.

S770: Encode, based on the calling context information of the target function and the encoding values corresponding to the call relationships between the plurality of functions in the plurality of threads in the program code, a function calling context of the target function in the thread to which the target function belongs, to obtain an encoding result of the function calling context of the target function in the thread to which the target function belongs.

For example, step S770 may be performed by the function calling context encoding module 630 in FIG. 5.

A call start point of the function calling context of the target function in the thread is a thread entry function of the thread. The function calling context of the target function in the thread to which the target function belongs refers to a call path between the thread entry function of the target function in the thread to which the target function belongs and the target function.

Optionally, the encoding result of the function calling context of the target function in the thread to which the target function belongs indicates the target function and an encoding value of the function calling context of the target function in the thread to which the target function belongs. Encoding values of different function calling contexts of the target function in the thread to which the target function belongs are different.

For example, the encoding result of the function calling context of the target function in the thread to which the target function belongs may include a third element and a fourth element. The third element indicates the target function. The fourth element indicates the encoding value of the function calling context of the target function in the thread to which the target function belongs.

The following uses three manners (a manner 1, a manner 2, and a manner 3) as examples to describe a specific implementation of step S770.

According to the solution in this embodiment of this application, a function calling context of a function in a thread to which the function belongs is encoded, and information about the function calling context of the function in the thread to which the function belongs may be obtained without decoding an encoding result, so that calling contexts of functions in a plurality of threads can be distinguished rapidly. This further improves analysis efficiency and analysis precision.

In addition, the function calling context of the function in the thread to which the function belongs is encoded, so that space overheads are low, and storage space pressure caused by storing the calling context information of the function can be effectively reduced. In other words, according to the solution in this embodiment of this application, the function calling contexts in the threads can be distinguished without occupying a large amount of storage space. This improves analysis precision and analysis efficiency.

In addition, in the solution in this embodiment of this application, a function call string can be rapidly obtained through decoding based on the encoding result obtained by encoding the function calling context of the function in the thread to which the function belongs and encoding the context of the thread to which the function belongs. This facilitates reuse of the encoding result by another module.

Optionally, the method 700 further includes: providing a second API, where an input of the second API includes calling context information of the target function. An output of the second API may include the encoding result of the function calling context of the target function in the thread to which the target function belongs.

Alternatively, it may be understood that the calling context information of the target function in step S730 is obtained through the second API. The second API outputs the encoding result that is of the context of the thread to which the target function belongs and that is obtained in step S770.

It should be noted that the first API and the second API may be a same API, or may be different APIs.

In this embodiment of this application, only an example in which the first API and the second API are a same API is used for description, and this does not constitute a limitation on this embodiment of this application.

In this case, the input of the API includes the calling context information of the target function. The output of the API includes the encoding result of the context of the thread to which the target function belongs and the encoding result of the context of the thread to which the target function belongs.

Optionally, the output of the API is in a form of a quadruple. A return value of the API includes a first element, a second element, a third element, and a fourth element in the quadruple. The elements respectively indicate the thread entry function in the thread to which the target function belongs, the encoding value of the context of the thread to which the target function belongs, the target function, and the encoding value of the function calling context of the target function in the thread to which the target function belongs.

Alternatively, the output of the API is in a form of a triple. A return value of the API includes a fifth element, a sixth element, and a seventh element in the triple, the fifth element indicates the thread entry function in the thread to which the target function belongs and the encoding value of the context of the thread to which the target function belongs, the sixth element indicates the target function, and the seventh element indicates the encoding value of the function calling context of the target function in the thread to which the target function belongs.

Manner 1

In an implementation, the calling context information of the target function includes the function call string of the target function.

If the function call string includes a thread entry function created by a thread creation function, the thread to which the target function belongs is a thread corresponding to a thread entry function created by a last thread creation function in the function call string. The function calling context of the target function in the thread to which the target function belongs is a function calling context that uses the thread entry function created by the last thread creation function as a call start point. If the function call string does not include a thread entry function created by a thread creation function, the thread to which the target function belongs is a thread, namely, a main thread, corresponding to a root function of the program code, that is, corresponding to a function at a start point in the function call string. The function calling context of the target function in the thread to which the target function belongs is a function calling context that uses the root function as a call start point. As shown in FIG. 7, a function call string CS is threadentry0 → A → threadentry1 → C → threadentry2 → D. A last thread creation function in the function call string is a function C. In this case, a thread to which a target function D belongs is a thread thread2 corresponding to a thread entry function threadentry2 created by the function C. A function calling context of the target function D in a thread thread2 uses the threadentry2 as a call start point. As shown in FIG. 7, another function call string CS is threadentry0 → A. The function call string does not include a thread creation function. A function at a start point of the function call string is a function threadentry0. A thread to which a target function A belongs is a thread thread0 corresponding to the function threadentry0. A function calling context of the target function A in the thread thread0 to which the target function A belongs uses the threadentry0 as a start point.

If the function call string does not include a thread entry function created by a thread creation function, the thread to which the target function belongs is encoded to obtain the encoding result of the context of the thread to which the target function belongs. That the function call string does not include a thread creation function means that the function call string belongs to the main thread. The main thread is encoded to obtain an encoding result of a context of the main thread. For example, an encoding value of the context of the main thread may be set to 0, and the encoding result of the context of the main thread includes the thread entry function of the main thread and the encoding value.

If the function call string includes a thread entry function created by a thread creation function, creation relationships between a plurality of threads in the function call string may be determined based on the thread creation function in the function call string. Encoding values corresponding to the creation relationships between the plurality of threads in the function call string are determined based on the encoding values corresponding to the creation relationships between the plurality of threads in the program code. The encoding value of the context of the thread to which the target function belongs is determined based on the encoding values corresponding to the creation relationships between the plurality of the threads in the function call string. The encoding result of the context of the thread to which the target function belongs may be determined based on the encoding value of the context of the thread to which the target function belongs and the thread entry function of the thread to which the target function belongs.

A manner of determining the encoding value of the context of the thread to which the target function belongs may be set based on a requirement, provided that encoding values of different contexts of the thread are different.

For example, a sum of the encoding values corresponding to the creation relationships between the plurality of threads in the function call string is used as the encoding value of the context of the thread to which the target function belongs. For example, as shown in FIG. 7, the function call string CS is threadentry0 → A → threadentry1 → C → threadentry2 → D. The encoding values corresponding to the creation relationships between the plurality of threads in the CS include: an encoding value 0 corresponding to a creation relationship between the thread thread0 corresponding to the threadentry0 and the thread1 corresponding to the threadentry1, and an encoding value 2 corresponding to one of creation relationships between the thread1 corresponding to the threadentry1 and the thread2 corresponding to the threadentry2. A sum of the two encoding values is 2, and 2 is used as an encoding value of a context of the thread to which the function D belongs.

For example, the encoding result of the context of the thread to which the target function belongs may be represented in a form of <first element, second element>. The first element is the thread entry function in the thread to which the target function belongs. The second element is the encoding value of the context of the thread to which the target function belongs. Alternatively, the encoding result of the context of the thread to which the target function belongs may be represented in a form of <fifth element>. The fifth element represents a package of the thread entry function and the thread encoding value. In other words, there is a correspondence between <fifth element> and <first element, second element>. The fifth element can indicate the encoding value of the context of the thread to which the target function belongs and the thread entry function of the thread to which the target function belongs. For example, the fifth element may be in a form of a character string or a number.

Optionally, step S750 includes: if the function call string does not include a thread entry function created by a thread creation function, performing step S11; or if the function call string includes a thread entry function created by a thread creation function, performing step S12 to step S17.

S11: Determine the encoding result of the context of the thread to which the target function belongs by using the function at the start point of the function call string as the thread entry function of the target function.

The main thread is not a thread created by another thread. The encoding value of the thread the main thread may be set to any value. For example, the encoding value of the context of the main thread is set to 0. The thread entry function of the main thread is a root function.

As shown in FIG. 7, the function call string CS is threadentry0 → A. The CS does not include the thread entry function created by the thread creation function. The function threadentry0 at the start point is used as a thread entry function of the target function A. It is determined that the encoding value of the context of the thread to which the function A belongs is 0, and the encoding result of the context of the thread to which the function A belongs is <threadentry0, 0>.

S12: Divide the function call string into at least two substrings by using the thread creation function in the function call string as a segmentation point, where a start point in each substring of the at least two substrings is a different thread entry function.

In this way, each substring belongs to a different thread, or each substring corresponds to a different thread.

For example, as shown in FIG. 7, the function call string CS is threadentry0 → A → threadentry1 → C → threadentry2 → D. The function call string includes two thread creation functions: a function A and the function C. The function call string is divided into three substrings CS1, CS2, and CS3 by using the function A and the function C as division points. CS1 is threadentry0 → A, CS2 is threadentry1 → C, and CS3 is threadentry2 → D.

S13: Separately determine, based on the encoding values corresponding to the call relationships between the plurality of functions in the plurality of threads, encoding values corresponding to call relationships between a plurality of functions in the at least two substrings.

For example, the at least two substrings are respectively applied to CEGs in at least two threads corresponding to the at least two substrings, to obtain the encoding values corresponding to the call relationships between the plurality of functions in the at least two substrings.

For example, as shown in FIG. 7, the function call string CS of threadentry0 → A → threadentry1 → C → threadentry2 → D includes three substrings: CS1 of threadentry0 → A, CS2 of threadentry1 → C, and CS3 of threadentry2 → D. Encoding values corresponding to call relationships between a plurality of functions in the three substrings are separately obtained based on CEGs in the three threads in FIG. 10. An encoding value corresponding to the function A called by the threadentry0 in a CEG in the thread0 is 0. An encoding value corresponding to the function C called by the threadentry1 in a CEG in the thread1 is 0. An encoding value corresponding to the function D called by the threadentry2 in a CEG in the thread2 is 0.

S14: Separately determine, based on the encoding values corresponding to the call relationships between the plurality of functions in the at least two substrings, an encoding result corresponding to a function calling context of a thread creation function in the at least two substrings.

The at least two substrings respectively correspond to at least two threads. The at least two threads include at least one parent thread and one child thread. It should be understood that the parent thread and the child thread are relative concepts. When a same thread is a parent thread of a thread, the same thread may also be a child thread of another thread. For example, a thread 1 creates a thread 2, and the thread 2 creates a thread 3. The thread 2 is a parent thread of the thread 3, and the thread 2 is a child thread of the thread 1.

The at least two substrings include n substrings, where n is an integer. Correspondingly, the at least two substrings include n-1 parent threads. A thread creation function is located in a parent thread. In other words, the n-1 parent threads include n-1 first thread functions.

Specifically, the encoding result corresponding to the function calling context of the thread creation function in the at least two substrings is determined based on encoding values corresponding to call relationships between a plurality of functions in a first substring of the at least two substrings. The first substring is another substring other than a second substring in the at least two substrings. In other words, the first substring includes substrings corresponding to all parent threads. The second substring is a substring at a tail end of the function call string. The first substring may include one substring, or may include a plurality of substrings.

In step S12, the function call string is segmented by using the thread creation function as the segmentation point to obtain the at least two substrings. Therefore, a last function in the first substring is the thread creation function.

For example, a sum of encoding values corresponding to call relationships between a plurality of functions in each substring of the first substring is used as an encoding value corresponding to a calling context of a thread creation function in the substring. In other words, the first substring is applied to the CEG in the thread corresponding to the first substring, and encoding values on corresponding edges in the CEG in the thread are superimposed according to a function call sequence, to obtain the encoding value corresponding to the function calling context of the thread creation function in the substring.

For example, CS1 is threadentry0 → A, CS2 is threadentry1 → C, and CS3 is threadentry2 → D. The first substring includes the CS1 and the CS2. The second substring is the CS3. The CS1 is applied to the CEG in the thread corresponding to the thread0 shown in FIG. 10. An encoding value 0 corresponding to the function calling context of the function A is obtained according to a sequence of the function A called by the threadentry0. An encoding result of the function calling context of the function A in the thread thread0 is represented as <A, 0>. The CS2 is applied to the CEG in the thread corresponding to the thread1 shown in FIG. 10. An encoding value 0 corresponding to the function calling context of the function C is obtained according to a sequence of the function C called by the threadentry1. An encoding result of the function calling context of the function C in the thread thread1 may be represented as <C, 0>.

S15: Determine, based on the encoding result corresponding to the function calling context of the thread creation function in the at least two substrings, encoding values corresponding to creation relationships between threads corresponding to the at least two substrings.

In other words, the encoding values corresponding to the creation relationships between the plurality of threads corresponding to the function call string is determined based on the encoding result corresponding to the function calling context of the thread creation function in each substring of the first substring.

As described above, encoding results corresponding to function calling contexts of thread creation functions in the parent threads one-to-one correspond to encoding values corresponding to creation relationships between the parent threads and the child threads.

For example, as shown in FIG. 12, an encoding result of the function calling context of the function A in the thread thread0 is represented as <A, 0>, to determine that an encoding value corresponding to the creation relationship between the thread0 and the thread1 is 0. An encoding result of the function calling context of the function C in the thread thread1 is represented as <C, 0>, to determine that an encoding value corresponding to the creation relationship between the thread1 and the thread2 is 3.

S16: Use a sum of the encoding values corresponding to the creation relationships between the threads corresponding to the at least two substrings as the encoding value of the context of the thread to which the target function belongs.

For example, as shown in FIG. 12, an encoding result of the function calling context of the function A in the thread thread0 is represented as <A, 0>, to determine that an encoding value corresponding to the creation relationship between the thread0 and the thread1 is 0. An encoding result of the function calling context of the function C in the thread thread1 is represented as <C, 0>, to determine that an encoding value corresponding to the creation relationship between the thread1 and the thread2 is 3. The encoding value of the context of the thread to which the target function D belongs is 3.

S17: Determine, based on a thread entry function in the substring at the tail end of the function call string and the encoding value of the context of the thread to which the target function belongs, the encoding result of the context of the thread to which the target function belongs.

The encoding result of the context of the thread to which the target function belongs may be represented as <first element, second element>, or may be represented as <fifth element>.

For example, in threadentry0 → A → threadentry1 → C → threadentry2 → D, the substring CS3 at the tail end is threadentry2 → D. The thread entry function is the threadentry2. The encoding result of the context of the thread to which the target function D belongs may be represented as <threadentry2, 3>.

Further, when the function call string does not include the thread entry function created by the thread creation function, an encoding value of the function calling context of the target function in the thread to which the target function belongs is determined according to the encoding value corresponding to the call relationship between the plurality of functions in the function call string; and an encoding result of the function calling context of the target function in the thread to which the target function belongs is determined according to the target function and the encoding value of the function calling context of the target function in the thread to which the target function belongs.

If the function call string includes the thread entry function created by the thread creation function, a thread to which the target function belongs is determined based on the thread creation function in the function call string; an encoding value corresponding to a function calling context of the target function in the thread to which the target function belongs is determined based on an encoding value corresponding to a call relationship between a plurality of functions in the thread to which the target function belongs; and an encoding result of the function calling context of the target function in the thread to which the target function belongs is determined based on the encoding value of the target function and the function calling context of the thread to which the target function.

A manner of determining the encoding value corresponding to the function calling context of the target function in the thread to which the target function belongs may be set based on a requirement, provided that the encoding values of the different function calling contexts of the target function in the thread to which the target function belongs are different.

For example, a sum of the encoding values corresponding to the call relationships between the plurality of threads in the thread to which the target function belongs is used as the encoding value corresponding to the function calling context of the target function in the thread to which the target function belongs. For example, as shown in FIG. 7, the function call string CS is threadentry0 → A → threadentryl → C → threadentry2 → D. The thread to which the target function D belongs is the thread2. The encoding values corresponding to the call relationships between the plurality of functions in the thread include: an encoding value 0 corresponding to threadentry2 $\to$ D, where 0 is used as an encoding value of a function calling context of the function D in the thread to which the function D belongs.

For example, the encoding result of the function calling context of the target function in the thread to which the target function belongs may be represented in a form of <third element, fourth element>. The third element is the target function. The fourth element is the encoding value of the function calling context of the target function in the thread to which the target function belongs.

Step S770 may include: if the function call string does not include a thread entry function created by a thread creation function, performing step S18 and step S19; or if the function call string includes a thread entry function created by a thread creation function, performing step S110 and step S111.

S18: Determine, based on the encoding values corresponding to the call relationships between the plurality of functions in the plurality of threads, the encoding values corresponding to the call relationships between the plurality of functions in the function call string.

For example, the function call string is applied to a CEG in a thread corresponding to the function call string, to obtain the encoding values corresponding to the call relationships between the plurality of functions in the function call string.

As shown in FIG. 7, the function call string CS is threadentry0 $\to$ A. The CS does not include a thread entry function created by a thread creation function, and a thread to which the function A belongs is the thread0. For example, in the CEG in the thread shown in FIG. 10, an encoding value corresponding to a call relationship between a plurality of functions in the function call string is an encoding value 0 corresponding to the function A called by the threadentry0.

S19: Determine, based on the encoding values corresponding to the call relationships between the plurality of functions in the function call string, the encoding result corresponding to the function calling context of the target function in the thread to which the target function belongs.

For example, a sum of the encoding values corresponding to the call relationships between the plurality of functions in the function call string is used as the encoding value of the function calling context of the target function in the thread to which the target function belongs. In other words, the function call string is applied to the CEG in the thread corresponding to the function call string, and encoding values on corresponding edges in the CEG in the thread are superimposed based on function calling data, to obtain the encoding value of the function calling context of the target function in the thread to which the target function belongs.

For example, the encoding result of the function calling context of the target function in the thread to which the target function belongs is represented as <third element, fourth element>.

For example, it is determined, based on an encoding value corresponding to a call relationship between a plurality of functions in the function call string threadentry0 $\to$ A, that the encoding value of the function calling context of the function A in the thread to which the function A belongs is 0. The encoding result of the function calling context of the function A in the thread to which the function A belongs is <A, 0>.

S110: Determine, based on the encoding values corresponding to the call relationships between the plurality of functions in the plurality of threads, the encoding values corresponding to the call relationships between the plurality of functions in the substring at the tail end of the function call string.

The substring is obtained in step S12. A thread corresponding to the substring at the tail end of the function call string is the thread to which the target function belongs.

For example, the substring at the tail end is applied to a CEG in a thread corresponding to the substring at the tail end, to obtain the encoding values corresponding to the call relationships between the plurality of functions in the substring at the tail end.

As shown in FIG. 7, the function call string CS of threadentry0 $\to$ A $\to$ threadentry1 $\to$ C $\to$ threadentry2 $\to$ D includes three substrings obtained in step S12: CS1 of threadentry0 $\to$ A, CS2 of threadentry1 $\to$ C, and CS3 of threadentry2 $\to$ D. Encoding values corresponding to call relationships between a plurality of functions in the CS3 are obtained based on the CEG in the thread shown in FIG. 10. The encoding value corresponding to the function D called by the threadentry2 is 0.

S111: Determine, based on the encoding values corresponding to the call relationships between the plurality of functions in the substring at the tail end, the encoding result corresponding to the function calling context of the target function in the thread to which the target function belongs.

For example, a sum of the encoding values corresponding to the call relationships between the plurality of functions in the substring at the tail end is used as the encoding value of the function calling context of the target function in the thread to which the target function belongs. In other words, the substring at the tail end is applied to the CEG in the thread corresponding to the function call string, and encoding values on corresponding edges in the CEG in the thread are superimposed based on the call relationships of the functions, to obtain the encoding value of the function calling context of the target function in the thread to which the target function belongs.

For example, the CS3 is applied to the CEG in the thread corresponding to the thread2 shown in FIG. 10. An encoding value 0 corresponding to the function calling context of the function D is obtained according to a sequence of the function D called by the threadentry2. An encoding result of the function calling context of the function D in the thread thread2 is represented as <D, 0>.

The encoding method in the manner 1 may be referred to as a basic encoding method. According to the encoding method in the manner 1, code of the calling context of the target function can be obtained by using the function call string.

As described above, the method in this embodiment of this application further includes: providing an API. The following illustrates a form of the API provided in the manner 1.

(1) API1 <thread entry function, encoding0, target function, encoding1>=getencoding(callstring)

The API1 is configured to obtain the encoding result of the function calling context. An input of the API1 includes the function call string. In other words, the calling context information of the target function obtained through the API1 is the function call string. The encoding result of the function call string is the encoding result of the calling context of the target function. The encoding result of the calling context of the target function includes the encoding result of the context of the thread to which the target function belongs and the encoding result of the function calling context of the target function in the thread to which the target function belongs. An output of the API1 includes the encoding result of the calling context of the target function. In other words, the encoding result of the calling context of the target function may be returned to the quadruple through the API1 after being obtained.

The thread entry function in the quadruple of the API1 refers to the thread entry function of the thread to which the target function belongs, encoding0 indicates the encoding value of the context of the thread to which the target function belongs, the target function is the function called by the function call string, and encoding1 indicates the encoding value of the function calling context of the target function in the thread to which the target function belongs.

It should be noted that, in this embodiment of this application, the function output by the API may be represented by using a function name, or may be represented by using a memory address of the function. A representation form of the function is not limited in this embodiment of this application, provided that the corresponding function can be indicated. The encoding value output by the API may be represented by a value, or may be represented by a memory address corresponding to the encoding value. A representation form of the encoding value is not limited in this embodiment of this application, provided that the corresponding encoding value can be indicated.

(2) API2 <X, target function, encoding 1>=getencoding(callstring)

The API2 is configured to obtain the encoding result of the function calling context. An input of the API1 includes the function call string. In other words, the calling context information of the target function obtained through the API2 is the function call string. The encoding result of the function call string is the encoding result of the calling context of the target function. The encoding result of the calling context of the target function includes the encoding result of the context of the thread to which the target function belongs and the encoding result of the function calling context of the target function in the thread to which the target function belongs. An output of the API2 includes the encoding result of the calling context of the target function. In other words, the encoding result of the calling context of the target function may be returned to the triple through the API2 after being obtained.

X in the triple of the API2 indicates the thread entry function of the thread to which the target function belongs and the encoding value of the context of the thread to which the target function belongs, the target function is the function called by the function call string, and encoding1 indicates the encoding value of the function calling context of the target function in the thread to which the target function belongs. In other words, <X> may be understood as a package of <thread entry function, encoding0>, and there is a correspondence between X and both of the thread entry function and encoding0.

For example, X may be represented in a form of a character string or a number. A representation form of X is not limited in this embodiment of this application, provided that X one-to-one corresponds to <thread entry function, encoding0>. In other words, X can uniquely indicate <thread entry function, encoding0>.

Manner 2

In an implementation, the calling context information of the target function includes an encoding result of a calling context of a caller function of the target function and a first instruction.

In an implementation, the caller function of the target function may also be understood as a current function, and the target function is a function called by the caller function based on the first instruction. For example, in a process of static program analysis, the analyzer may analyze each instruction one by one. A function in which a current instruction analyzed by the analyzer is located may be understood as a current function. When the first instruction in the current function is analyzed, the first instruction is transferred to the target function for analysis.

If the first instruction is a function call instruction, the thread to which the target function belongs is a thread to which the caller function belongs. The function calling context of the target function in the thread to which the target function belongs is a function calling context that uses the thread entry function of the thread to which the caller function belongs as a call start point. If the first instruction is a thread creation instruction, the thread to which the target function belongs is a thread created by the caller function. In other words, the thread to which the target function belongs is a thread created by the first instruction. The function calling context of the target function in the thread to which the target function belongs is a function calling context that uses the thread entry function of the thread created by the caller function as a call start point. In the CG shown in FIG. 7, the caller function is the function B, the first instruction is the thread creation statement, and the target function is the thread entry function, namely, the threadentry2, created by the thread creation statement. A thread to which the function threadentry2 belongs is the thread thread2 corresponding to the thread entry function threadentry2. A function calling context of the target function D in the thread to which the target function D belongs uses the target function D as a start point. For another example, if the caller function is the threadentry1, and the first instruction is calling the function B, the target function is the function B, and a thread in which the function B is located is a thread to which the function threadentry1 belongs. If a process to which the function threadentry1 belongs is the thread1, a thread to which the function B belongs is the thread1. A function calling context of the target function B in the thread to which the target function B belongs uses the thread entry function threadentry1 in the thread1 as a start point.

For example, the encoding result of the context of the thread to which the target function belongs may be represented in a form of <first element, second element>. The first element is the thread entry function in the thread to which the target function belongs. The second element is the encoding value of the context of the thread to which the target function belongs. Alternatively, the encoding result of the context of the thread to which the target function belongs may be represented in a form of <fifth element>. The fifth element represents a package of the thread entry function and the thread encoding value. In other words, there is a correspondence between <fifth element> and <first element, second element>. The fifth element can indicate the encoding value of the context of the thread to which the target function belongs and the thread entry function of the thread to which the target function belongs. For example, the fifth element may be in a form of a character string or a number.

Optionally, step S750 includes: if the first instruction is a function call instruction, performing step S21; or if the first instruction is a thread creation instruction, performing step S22 to step S24.

S21: Use the encoding result of the context of the thread to which the caller function belongs as the encoding result of the context of the thread to which the target function belongs.

For example, the encoding result of the calling context of the caller function is <threadentry1, 0, threadentry1, 0>, and the first instruction is calling the function B. The encoding result of the context of the thread to which the caller function belongs is <threadentry1, 0>, and the first instruction is a function call instruction. The encoding result of the context of the thread to which the target function B belongs is <threadentry1, 0>.

S22: Determine, based on the encoding result of the function calling context of the caller function in the thread to which the caller function belongs, an encoding value corresponding to a creation relationship between the thread to which the caller function belongs and the thread to which the target function belongs.

Because the first instruction is a thread creation statement, the caller function is a thread creation function. As described above, the encoding value corresponding to the creation relationship between the parent thread and the child thread corresponds to an encoding result of the function calling context of the thread creation function in the parent thread. The caller function is a thread creation function in the parent thread, and the thread to which the target function belongs is a child thread.

For example, the encoding result of the calling context of the caller function is <threadentry1, 0, B, 1>, and the first instruction is a thread creation statement and is used to create the thread entry function threadentry2. The caller function is the function B, and the target function is the threadentry2. The encoding result of the function calling context of the caller function in the thread to which the caller function belongs is <B, 1>, to determine, based on <B, 1> and in the TEG shown in FIG. 11, that an encoding value corresponding to the creation relationship between the thread1 and the thread2 is 1. The thread1 is the thread to which the caller function belongs, and the thread2 is the thread to which the target function belongs.

S23: Use a sum of the encoding value of the context of the thread to which the caller function belongs and the encoding value corresponding to the creation relationship between the thread to which the caller function belongs and the thread to which the target function belongs as the encoding value of the context of the thread to which the target function belongs.

The encoding value of the context of the thread to which the target function belongs may alternatively be determined in another manner in step S23, provided that encoding values of different contexts of the thread are different.

For example, the encoding result of the calling context of the caller function is <threadentry1, 0, B, 1>, and the first instruction is a thread creation statement and is used to create the thread entry function threadentry2. The encoding value of the context of the thread to which the caller function belongs is 0. In step S22, the encoding value corresponding to the creation relationship between the thread1 and the thread2 is 1. The encoding value of the context of the thread to which the target function belongs is 1.

S24: Determine, based on the target function and the encoding value of the context of the thread to which the target function belongs, the encoding result of the context of the thread to which the target function belongs.

The first instruction is a thread creation statement. In other words, the target function is the thread entry function created by the thread creation statement, and the target function is the thread entry function of the thread to which the target function belongs.

The encoding result of the context of the thread to which the target function belongs may be represented as <first element, second element>, or may be represented as <fifth element>.

For example, the encoding result of the calling context of the caller function is <threadentry1, 0, B, 1>, and the first instruction is a thread creation statement and is used to create the thread entry function threadentry2. The target function is the threadentry2. The encoding result of the context of the thread to which the target function belongs may be represented as <threadentry2, 1>.

Further, if the first instruction is a function call instruction, the encoding value corresponding to the call relationship between the caller function in the thread to which the target function belongs and the target function is determined based on the call relationship between the caller function and the target function, and the encoding result of the function calling context of the target function in the thread to which the target function belongs is determined based on the encoding value corresponding to the call relationship between the caller function in the thread to which the target function belongs and the target function and the encoding result of the function calling context of the caller function in the thread to which the caller function belongs.

If the first instruction is a thread creation instruction, the target function is the thread entry function of the thread to which the target function belongs. The function calling context of the target function in the thread is encoded to obtain the encoding result of the function calling context of the target function in the thread. For example, the encoding value of the function calling context of the function that is used as a call start point of the thread may be set to 0, and the encoding result of the function calling context of the target function in the thread to which the target function belongs includes the target function and the encoding value.

For example, the encoding result of the function calling context of the target function in the thread to which the target function belongs may be represented in a form of <third element, fourth element>. The third element is the target function. The fourth element is the encoding value of the function calling context of the target function in the thread to which the target function belongs.

Step S770 may include: if the first instruction is a function call instruction, performing step S25 to step S27; or if the first instruction is a thread creation instruction, performing step S28.

S25: Determine, based on the first instruction, the encoding value corresponding to the call relationship between the caller function in the thread to which the target function belongs and the target function.

The first instruction indicates the call relationship between the caller function and the target function. The encoding value corresponding to the call relationship between the caller function in the thread and the target function may alternatively be understood as the encoding value corresponding to the first instruction in the thread.

For example, the first instruction is applied to the CEG in the thread to which the target function belongs, to obtain the encoding value corresponding to the first instruction in the thread.

For example, the encoding result of the calling context of the caller function is <threadentry1, 0, threadentry1, 0>, and the first instruction is calling the function B. The encoding value corresponding to the first instruction in the CEG in the thread thread1 to which the target function B belongs may be 1.

S26: Determine, based on the encoding value corresponding to the call relationship between the caller function in the thread to which the target function belongs and the target function and the encoding value of the function calling context of the caller function in the thread to which the caller function belongs, the encoding value of the function calling context of the target function in the thread to which the target function belongs.

For example, the sum of the encoding value corresponding to the call relationship between the caller function in the thread to which the target function belongs and the target function and the encoding value of the function calling context of the caller function in the thread to which the caller function belongs as the encoding value of the function calling context of the target function in the thread to which the target function belongs.

For example, the encoding result of the calling context of the caller function is <threadentry1, 0, threadentry1, 0>. The encoding value of the function calling context of the caller function in the thread to which the caller function belongs is 0. In step S25, the encoding value corresponding to the first instruction is 1, and the encoding value of the function calling context of the target function B in the thread to which the target function B belongs is 1.

S27: Determine, based on the encoding value of the function calling context of the target function in the thread to which the target function belongs and the target function, the encoding result of the function calling context of the target function in the thread to which the target function belongs.

For example, in step S26, the encoding value of the function calling context of the target function B in the thread to which the target function B belongs is 1, and the encoding result of the function calling context of the target function B in the thread to which the target function B belongs is represented as <B, 1>.

S28: Determine the encoding result of the function calling context of the target function in the thread to which the target function belongs by using the target function as the thread entry function of the thread to which the target function belongs.

For example, the encoding result of the calling context of the caller function is <threadentry1, 0, B, 1>, and the first instruction is a thread creation statement and is used to create the thread entry function threadentry2. The threadentry2 is the thread entry function of the thread2. The target function is the threadentry2. It is determined that the encoding value of the function calling context of the threadentry2 in the thread thread2 to which the threadentry2 belongs is 0. The encoding result of the function calling context of the target function in the thread to which the target function belongs may be represented as <threadentry2, 0>.

The encoding method in the manner 2 may be referred to as an advanced encoding method. According to the method in the manner 2, code of the calling context of the target function can be obtained based on the encoding result of the calling context of the caller function and the first instruction.

As described above, the method in this embodiment of this application further includes: providing an API. The following illustrates a form of the API provided in the manner 2.

API3 En=getSuccEncoding(En', first instruction)

En represents the encoding result of the calling context of the target function, and En' represents the encoding result of the calling context of the caller function of the target function. For example, the encoding result may be represented in a form of an output provided by the API1 or the API2.

In an implementation, the caller function of the target function may also be understood as a current function, and the target function is a function called by the caller function based on the first instruction.

The API3 is configured to obtain the encoding result of the calling context of the target function. An input of the API3 includes the encoding result of the calling context of the caller function and the first instruction. In other words, the calling context of the target function obtained through the API3 includes the encoding result of the calling context of the caller function and the first instruction. The encoding result of the calling context of the target function includes the encoding result of the context of the thread to which the target function belongs and the encoding result of the function calling context of the target function in the thread to which the target function belongs. An output of the API3 includes the encoding result of the calling context of the target function. In other words, the encoding result of the calling context of the target function may be returned through the API3 after being obtained. For a form of the returned result, refer to the API1 or the API2. For detailed description, refer to the foregoing description of the API1 or the API2. Details are not described herein again.

Manner 3

In an implementation, the calling context information of the target function includes an encoding result of a calling context of a callee function called by the target function and a second instruction.

In an implementation, the callee function called by the target function may also be understood as a current function, and the current function is a function called by the target function based on the second instruction. For example, in a process of static analysis, the analyzer may analyze each instruction one by one. A function in which a current instruction analyzed by the analyzer is located may be understood as a current function. After analysis of the current function ends, a function, namely, the target function, that calls the current function may be turned back based on the second instruction, to continue the analysis.

If the second instruction is a function call instruction, the thread to which the target function belongs is a thread to which the callee function belongs. The function calling context of the target function in the thread to which the target function belongs is a function calling context that uses the thread entry function of the thread to which the callee function belongs as a call start point. If the second instruction is a thread creation instruction, the thread to which the target function belongs is a thread for creating the callee function. In other words, the thread to which the callee function belongs is a thread created by the second instruction. The thread to which the target function belongs is a parent thread of the thread to which the callee function belongs. The function calling context of the target function in the thread to which the target function belongs is a function calling context that uses the thread entry function of the thread to which the target function belongs as a call start point. In the CG shown in FIG. 7, the callee function is the function B, the second instruction is the function call statement and indicates that the function threadentry1 calls the function B, and the target function is the function threadentry1. A thread to which the function threadentry1 belongs is a thread to which the function B belongs. If a process to which the function B belongs is the thread1, a thread to which the function threadentry1 belongs is the thread1. A function calling context of the target function threadentry1 in the thread to which the target function threadentry1 belongs uses the thread entry function threadentry1 in the thread1 as a start point. For another example, the callee function is the function threadentry2, and the second instruction is the thread creation statement and indicates that the function B creates the function threadentry2. The target function is the function B. The thread to which the function B belongs is the parent thread thread1 of the thread to which the function threadentry2 belongs. A function calling context of the target function B in the thread to which the target function B belongs uses the thread entry function in the thread1 as a start point.

For example, the encoding result of the context of the thread to which the target function belongs may be represented in a form of <first element, second element>. The first element is the thread entry function in the thread to which the target function belongs. The second element is the encoding value of the context of the thread to which the target function belongs. Alternatively, the encoding result of the context of the thread to which the target function belongs may be represented in a form of <fifth element>. The fifth element represents a package of the thread entry function and the thread encoding value. In other words, there is a correspondence between <fifth element> and <first element, second element>. The fifth element can indicate the encoding value of the context of the thread to which the target function belongs and the thread entry function of the thread to which the target function belongs. For example, the fifth element may be in a form of a character string or a number.

Optionally, step S750 includes: if the second instruction is a function call instruction, performing step S31; or if the second instruction is a thread creation instruction, performing step S32 to step S34.

S31: If the second instruction is a function call instruction, use the encoding result of the context of the thread to which the callee function belongs as the encoding result of the context of the thread to which the target function belongs.

For example, the encoding result of the calling context of the callee function is <threadentry1, 0, B, 1>, and the second instruction indicates that the function threadentry1 calls the function B. The encoding result of the context of the thread to which the callee function B belongs is <threadentry1, 0>, and the second instruction is a function call instruction. The encoding result of the context of the thread to which the target function threadentry1 belongs is <threadentry1, 0>.

S32: Determine, based on the encoding result of the context of the thread to which the callee function belongs, an encoding value corresponding to a creation relationship between the thread to which the target function belongs and the thread to which the callee function belongs.

For example, the encoding result of the context of the thread to which the callee function belongs is applied to the TEG, to obtain the encoding value corresponding to the creation relationship between the thread to which the target function belongs and the thread to which the callee function belongs.

For example, the encoding result of the calling context of the callee function is <threadentry2, 1, threadentry2, 0>, and the second instruction is a thread creation statement and indicates to create the thread entry function threadentry2. The encoding result of the context of the thread to which the callee function belongs is <threadentry2, 1>. The encoding result is applied to the TEG, to obtain the context of the thread to which the callee function belongs, where the callee function is uniquely indicated by the encoding value 1. In other words, the encoding value corresponding to the creation relationship between the thread0 and the thread1 is 0, the encoding value corresponding to the creation relationship between the thread1 and the thread2 is 1, and a sum of the two encoding values is 1.

S33: Use a difference of the encoding value of the context of the thread to which the callee function belongs and the encoding value corresponding to the creation relationship between the thread to which the target function belongs and the thread to which the callee function belongs as the encoding value of the context of the thread to which the target function belongs.

The encoding value of the context of the thread to which the target function belongs may alternatively be determined in another manner in step S33, provided that encoding values of different contexts of the thread are different.

For example, the encoding result of the calling context of the callee function is <threadentry2, 1, threadentry2, 0>, and the second instruction is a thread creation statement and is used to create the thread entry function threadentry2. The encoding value of the context of the thread to which the callee function belongs is 1. In step S32, the encoding value corresponding to the creation relationship between the thread1 and the thread2 is 1. The encoding value of the context of the thread to which the target function belongs is 0.

S34: Determine, based on the thread entry function of the thread to which the target function belongs and the encoding value of the context of the thread to which the target function belongs, the encoding result of the context of the thread to which the target function belongs.

The encoding result of the context of the thread to which the target function belongs may be represented as <first element, second element>, or may be represented as <fifth element>.

For example, the encoding result of the calling context of the callee function is <threadentry2, 1, threadentry2, 0>, and the second instruction is a thread creation statement and is used to create the thread entry function threadentry2. The target function is the function B. In the TEG shown in FIG. 11, the thread entry function of the thread to which the target function belongs is the threadentry1. The encoding result of the context of the thread to which the target function belongs may be represented as <threadentry1, 0>.

Further, if the second instruction is a function call instruction, the encoding value corresponding to the call relationship between the callee function in the thread to which the target function belongs and the target function is determined based on the call relationship between the callee function and the target function, and the encoding result of the function calling context of the target function in the thread to which the target function belongs is determined based on the encoding value corresponding to the call relationship between the callee function in the thread to which the target function belongs and the target function and the encoding result of the function calling context of the callee function in the thread to which the callee function belongs.

If the second instruction is a thread creation instruction, the target function is a thread creation function of the thread to which the callee function belongs. In other words, the target function is a thread creation function in the parent thread. For the thread creation function in the parent thread, encoding results corresponding to function calling contexts in the parent threads one-to-one correspond to encoding values corresponding to creation relationships between the parent threads and the child threads. The encoding value corresponding to the creation relationship between the thread to which the target function belongs and the thread to which the callee function belongs is determined based on the encoding result of the context of the thread to which the callee function belongs. Then, the encoding result of the function calling context of the target function in the thread to which the target function belongs is determined based on the encoding value corresponding to the creation relationship between the thread to which the target function belongs and the thread to which the callee function belongs.

For example, the encoding result of the function calling context of the target function in the thread to which the target function belongs may be represented in a form of <third element, fourth element>. The third element is the target function. The fourth element is the encoding value of the function calling context of the target function in the thread to which the target function belongs.

Step S770 may include: if the second instruction is a function call instruction, performing step S35 to step S37; or if the second instruction is a thread creation instruction, performing step S38.

S35: Determine, based on the second instruction, the encoding value corresponding to the call relationship between the callee function in the thread to which the target function belongs and the target function.

The second instruction indicates the call relationship between the callee function and the target function. The encoding value corresponding to the call relationship between the callee function in the thread and the target function may alternatively be understood as the encoding value corresponding to the second instruction in the thread.

For example, the second instruction is applied to the CEG in the thread to which the target function belongs, to obtain the encoding value corresponding to the second instruction in the thread.

For example, the encoding result of the calling context of the callee function is <threadentry1, 0, B, 1>, and the second instruction is calling the function B. The encoding value corresponding to the second instruction in the CEG in the thread thread1 to which the target function threadentry1 belongs may be 1.

S36: Determine, based on the encoding value corresponding to the call relationship between the callee function in the thread to which the target function belongs and the target function and the encoding value of the function calling context of the callee function in the thread to which the callee function belongs, the encoding value of the function calling context of the target function in the thread to which the target function belongs.

For example, a difference of the encoding value of the function calling context of the callee function in the thread to which the callee function belongs and the encoding value corresponding to the call relationship between the callee function in the thread to which the target function belongs and the target function is used as the encoding value of the function calling context of the target function in the thread to which the target function belongs.

For example, the encoding result of the calling context of the callee function is <threadentry1, 0, B, 1>. The encoding value of the function calling context of the callee function B in the thread to which the callee function B belongs is 1. In step S35, the encoding value corresponding to the second instruction is 1, and the encoding value of the function calling context of the target function threadentry1 in the thread to which the target function threadentry1 belongs is 0.

S37: Determine, based on the encoding value of the function calling context of the target function in the thread to which the target function belongs and the target function, the encoding result of the function calling context of the target function in the thread to which the target function belongs.

For example, in step S36, the encoding value of the function calling context of the target function threadentry1 in the thread to which the target function threadentry1 belongs is 0, and the encoding result of the function calling context of the target function threadentry1 in the thread to which the target function threadentry1 belongs is represented as <threadentry1, 0>.

S38: Determine, based on the encoding value corresponding to the creation relationship between the thread to which the target function belongs and the thread to which the callee function belongs, the encoding result corresponding to the function calling context of the target function in the thread to which the target function belongs.

As described above, the thread to which the target function belongs is a parent thread of the thread to which the callee function belongs, the second instruction is a thread creation statement, and the target function is a thread creation function in the parent thread. For the thread creation function in the parent thread, encoding results corresponding to function calling contexts in the parent threads one-to-one correspond to encoding values corresponding to creation relationships between the parent threads and the child threads. The encoding result that corresponds to the encoding value obtained in step S32 and that is of the function calling context of the target function in the thread to which the target function belongs may be determined based on the correspondence.

For example, in step S32, the encoding value corresponding to the creation relationship between the thread1 and the thread2 is 1. Based on a correspondence between the encoding value corresponding to the creation relationship between the parent thread and the child thread and the encoding result of the function calling context of the thread creation function in the parent thread, the encoding result that corresponds to the encoding value and that is of the function calling context of the thread creation function is <B, 1>. The encoding result of the function calling context of the target function in the thread to which the target function belongs may be represented as <B, 1>.

In another implementation, the calling context information of the target function includes an encoding result of a calling context of a callee function called by the target function.

The encoding value corresponding to the second instruction and the encoding result of the calling context of the target function may be obtained based on the encoding result of the calling context of the callee function.

The encoding result of the calling context of the callee function indicates the encoding value of the context of the thread to which the callee function belongs, the thread entry function of the thread to which the callee function belongs, the encoding value of the function calling context of the callee function in the thread to which the callee function belongs, and the callee function.

If the thread entry function of the thread to which the callee function belongs is different from the callee function, the second instruction is a function call instruction. The thread to which the target function belongs is the thread to which the callee function belongs. The function calling context of the target function in the thread to which the target function belongs is a function calling context that uses the thread entry function of the thread to which the callee function belongs as a call start point.

If the thread entry function of the thread to which the callee function belongs is the same as the callee function, in other words, the callee function is the thread entry function of the thread to which the callee function belongs, the second instruction is a thread creation instruction, and the thread to which the target function belongs is a thread for creating the callee function. In other words, the thread to which the callee function belongs is a thread created by the second instruction. The thread to which the target function belongs is a parent thread of the thread to which the callee function belongs. The function calling context of the target function in the thread to which the target function belongs is a function calling context that uses the thread entry function of the thread to which the target function belongs as a call start point.

For a specific description of step S750, refer to step S31 to step S34 in the foregoing manner 3. Details are not described herein again.

Further, step S770 may include: if the first instruction is a function call instruction, performing step S45 to step S47; or if the first instruction is a thread creation instruction, performing step S48.

S45: Determine, based on the encoding result of the function calling context of the callee function in the thread to which the callee function belongs, an encoding value corresponding to a call relationship between the target function in the thread to which the callee function belongs and the callee function.

The call relationship between the target function in the thread to which the callee function belongs and the callee function is the call relationship indicated by the second instruction.

For example, step S45 includes: determining, based on the encoding result of the function calling context of the callee function in the thread to which the callee function belongs, the function calling context of the callee function in the thread to which the callee function belongs, to determine the encoding value corresponding to the call relationship between the target function in the thread to which the callee function belongs and the callee function.

Encoding values of function calling contexts of the callee function in the thread to which the callee function belongs one-to-one correspond to the function calling contexts of the callee function in the thread to which the callee function belongs. Therefore, a unique function calling context of the callee function in the thread to which the callee function belongs may be obtained based on the encoding result of the callee function in the thread to which the callee function belongs.

For example, the encoding value of the callee function in the thread to which the callee function belongs is a sum of the encoding values corresponding to the call relationships between the plurality of functions in the function calling context of the callee function in the thread to which the callee function belongs. In this case, step S45 may be understood as determining the function calling context of the callee function in the thread to which the callee function belongs. The encoding value of the function calling context is equal to the sum of the encoding values corresponding to the call relationships between the plurality of functions in the function calling context of the callee function in the thread to which the callee function belongs. For example, the encoding result of the function calling context of the callee function in the thread to which the callee function belongs is applied to the CEG in the thread, the function calling context of the callee function in the thread to which the callee function belongs may be obtained through path matching, and the encoding value corresponding to the call relationship between the target function and the callee function is obtained.

For example, the encoding result of the calling context of the callee function is <threadentry1, 0, B, 1>. The encoding result of the function calling context of the callee function in the thread is <B, 1>. <B, 1> is applied to the CEG in the thread thread1 to which the target function threadentry1 belongs, so that the encoding value corresponding to the call relationship between the target function in the thread to which the callee function belongs and the callee function is 1.

Alternatively, step S45 includes: determining, based on a difference of the encoding value of the function calling context of the callee function in the thread to which the callee function belongs and encoding values corresponding to call relationships between all caller functions of the callee function in the thread and the callee function, the encoding value corresponding to the call relationship between the target function in the thread to which the callee function belongs and the callee function.

In step S720, the call relationships between the plurality of functions in the thread may be encoded according to the calling context encoding algorithm. In an implementation, in this encoding manner, an encoding value of a function calling context of a function in a thread is less than a quantity of calling contexts of the function in the thread, and an encoding value of a function calling context in the thread is an integer greater than or equal to 0. For example, in FIG. 10, there are two function calling contexts of the function B in the thread1, and encoding values of the two function calling contexts are respectively 0 and 1. In this case, the encoding value of the function calling context of the callee function in the thread to which the callee function belongs may be subtracted from the encoding values corresponding to the call relationships between all the caller functions of the callee function in the thread and the callee function, to obtain the difference that meets a condition. The encoding value corresponding to the call relationship obtained based on the difference is the encoding value corresponding to the call relationship between the target function in the thread to which the callee function belongs and the callee function. The difference that meets the condition means that the difference is greater than or equal to 0, and the difference is less than a quantity of function calling contexts of a caller function corresponding to the difference in the thread, or means that the difference is 0, and a quantity of function calling contexts of a caller function corresponding to the difference is 0.

For example, the encoding result of the function calling context of the callee function in the thread is <B, 1>. As shown in FIG. 10, the call relationships between all the caller functions of the callee function in the thread and the callee function include two call relationships between the threadentry1 and the function B. Encoding values corresponding to the two call relationships are respectively 0 and 1. The encoding value 1 of the function calling context of the callee function B in the thread is subtracted from 0 and 1 to obtain two differences 1 and 0, respectively. A quantity of function calling contexts of the caller function is 0, where the difference 0 meets the foregoing condition, and the call relationship corresponding to the difference is a call relationship corresponding to the encoding value 1. Therefore, it is learned that the encoding value corresponding to the call relationship between the target function in the thread to which the callee function belongs and the callee function is 1.

It should be understood that the foregoing is merely an example, and the encoding value corresponding to the call relationship between the target function in the thread to which the callee function belongs and the callee function may alternatively be determined in another manner.

For step S46 to step S48, refer to the foregoing descriptions of step S36 to step S38. Details are not described herein again.

Further, the method 700 may further include:

obtaining the second instruction, and determining, based on the encoding result of the function calling context of the target function in the thread to which the target function belongs, whether the second instruction is accurate.

As described above, the calling context information of the target function in the manner 3 may include only the encoding result of the calling context of the callee function. In other words, the encoding result of the calling context of the target function may be obtained without the second instruction in the manner 3. The encoding result may be used to verify whether the second instruction is accurate. For example, if the difference of the encoding value of the function calling context of the target function in the thread to which the target function belongs and the encoding value of the function calling context of the callee function in the thread to which the callee function belongs is equal to the encoding value corresponding to the call relationship indicated by the second instruction, the second instruction is accurate. Otherwise, the second instruction is inaccurate. It should be understood that this is merely an example. Whether the second instruction is accurate may alternatively be verified in another manner based on the encoding result of the function calling context of the target function in the thread to which the target function belongs.

The encoding method in the manner 3 may be referred to as an advanced encoding method. According to the method in the manner 3, code of the calling context of the target function can be obtained based on the encoding result of the calling context of the callee function.

As described above, the method in this embodiment of this application further includes: providing an API. The following illustrates a form of the API provided in the manner 3.

API4 En=getPredEncoding(En', second instruction)

Alternatively, API4 En=getPredEncoding(En').

En represents the encoding result of the calling context of the target function, and En' represents the encoding result of the calling context of the callee function called by the target function. For example, the encoding result may be represented in a form of an output provided by the API1 or the API2.

In an implementation, the callee function may also be understood as a current function, and the current function is a function called by the target function based on the second instruction.

The API4 is configured to obtain the encoding result of the calling context of the target function. An input of the API4 includes the encoding result of the calling context of the callee function. Alternatively, an input of the API4 includes the encoding result of the calling context of the callee function and the second instruction. In other words, the calling context of the target function obtained through the API4 includes at least the encoding result of the calling context of the callee function. The encoding result of the calling context of the target function includes the encoding result of the context of the thread to which the target function belongs and the encoding result of the function calling context of the target function in the thread to which the target function belongs. An output of the API4 includes the encoding result of the context in the thread to which the target function belongs. In other words, the encoding result of the calling context of the target function may be returned through the API4 after being obtained. For a form of the returned result, refer to the API1 or the API2. For detailed description, refer to the foregoing description of the API1 or the API2. Details are not described herein again.

Table 1 shows a comparison result of memory overheads between the encoding method and the manner of the function call string in this embodiment of this application.

**Table 1**

| Item | Code size: (CodeSize) > 50 thousand lines (lines) | CodeSize > 100 thousand lines |
|---|---|---|
| Maximum length of callstring | Length (Length) > 8 | Length > 13 |
| Bytes occupied by callstring | 8 bytes * Length (assuming on a 64-bit computer) | 8 bytes * Length (assuming on a 64-bit computer) |
| Bytes occupied by an encoding result of callstring in this application | Thread entry function: 8 bytes (bytes) Encoding0: 4 bytes Function: 8 bytes Encoding1: 4 bytes | Thread entry function: 8 bytes Encoding0: 4 bytes Function: 8 bytes Encoding1: 4 bytes |
| Maximum quantity N of call strings of a function (namely, a quantity of calling contexts) | N is millions | N is hundreds of millions |
| Callstring indicates bytes used by all calling contexts of a function. | 8 bytes * Length * N | 8 bytes * Length * N |
| An encoding result in this application indicates bytes used by all calling contexts of a function. | 24 bytes * N | 24 bytes * N |
| Quantity M of functions in a complete program | M is usually hundreds | M > 1000 |
| Callstring indicates bytes used by all calling contexts of M functions. | 8 bytes * Length * N * M | 8 bytes * Length * N * M |
| An encoding result in this application indicates bytes used by all calling contexts of M functions. | 24 bytes * N * M | 24 bytes * N * M |

In Table 1, N and M are positive integers. It may be learned from Table 1 that, bytes occupied by callstring increases as the length of callstring increases. When the program code is large, callstring indicates that bytes used by a calling context of a function greatly exceed bytes used by the encoding result in this embodiment of this application. Therefore, compared with a method for representing a calling context of a function by using a callstring, the encoding method in this embodiment of this application can significantly reduce memory overheads.

To describe application scenarios in embodiments of this application more clearly, the following describes the solutions in embodiments of this application in conjunction with three application scenarios (a scenario 1, a scenario 2, and a scenario 3) in static program analysis.

Scenario 1: Variable context representation

A context of a variable indicates variables of various types. In this embodiment of this application, the variable allocated by the malloc pointer is used as an example of the scenario 1. Analyzed source code is shown as follows:

```
GlobalVarType global_var;
 int *my_malloc(){
 {
     ...
 return malloc(int);
 }
 Void sub_thread(){
 {
 ...
 global_var = my_malloc();
 ...
 ...
 }
 int main(){
 {
 pthread_create(sub_thread);//First thread creation
 ...
 pthread_join(sub_thread);//First thread destruction
 ...
 int *p= global_var;
 ...
 pthread_create(sub_thread);//Second thread creation
 ...
 pthread_join(sub_thread);//Second thread destruction
 ...
 p= global_var;
 }
```

A main function creates a child thread sub_thread in two different locations. The sub_thread returns a malloc pointer address space. A my_molloc function returns a memory address allocated on a heap to p. If memory addresses pointed to by the pointer p in a first call call1 and a second call call2 need to be distinguished during pointer analysis, an analysis tool needs to distinguish calling contexts of the my_molloc function called by two child threads. If the calling contexts of the my_molloc function are represented in a manner of a function call string, the calling contexts of the my_molloc function in the two calls are respectively represented as two function call strings: main → sub_thread1 → my malloc and main → sub_thread2 → my malloc. A function call string for representing a calling context of a function increases memory overheads.

According to the method in this embodiment of this application, a calling context of a function can be encoded, and an encoding result of the calling context of the function represents the calling context of the function. This reduces memory overheads for saving the context of the function.

Specifically, the analyzer analyzes each instruction one by one starting from a root function, and encodes a calling context of a function in which the instruction is located. In the process of analyzing a current function, when the analyzer analyzes the call1, the encoding manner 2 may be adopted, the encoding result of the calling context of the my_molloc function in the current call is obtained based on the encoding result of the current function and the call1, and the encoding result is saved and transferred to the my_molloc function for analysis. After the analyzer completes analysis of the my_molloc function, the encoding manner 3 may be adopted, an encoding result of a calling context of a caller function for calling the my_molloc function is obtained based on the encoding result of the my_molloc function and the call1, and the analyzer continues to perform the analysis. When the analyzer analyzes the call2, the encoding result of the calling context of the my_molloc function that is called locally may be obtained in the same manner. In this way, the different calling contexts of the my_molloc function can be distinguished when the my_molloc function is called twice. For example, an encoding result of a calling context of a malloc variable may be represented as <thread entry function, encoding0, my malloc, encoding1>:malloc. malloc indicates an entity name. In this way, calling contexts of the my_molloc function in the two threads can be distinguished. This significantly reduces memory overheads for saving a context of a function, and improves analysis precision and analysis efficiency.

Scenario 2: mutex analysis

Mutex analysis is one of necessary analysis in multi-thread analysis, and is used to distinguish the program statement scope protected by mutex protection. In other words, mutex analysis is used to determine whether an instruction is protected by a mutex. If the calling context of the function is not distinguished, only a location of a function in which an instruction is located is recorded. Because a same instruction may be called multiple times in a program, if the instruction is protected by a mutex in several calls of the multiple calls and not protected by a mutex in other calls, if the location of the function in which the instruction is located is recorded only, the analyzer can only return the location of the function in which the instruction is located, and cannot accurately return whether the instruction is protected by a mutex. A specific return result is that the instruction is both protected by a mutex and not protected by a mutex.

If the calling contexts of the function are distinguished, the calling context of the function in which the instruction is located may be recorded. Each time the instruction is called, the instruction corresponds to a different calling context of the function. The analyzer can accurately return the calling context of the function in which the instruction is located, to accurately provide whether the instruction in the calling context of the function is protected by a mutex.

In the scenario 2, the following source code is used as an example for mutex analysis.

```
Int main(){
        {
            ...
        pthread_create(sub_thread);
        ...
        my_func();
        ...
        pthread_lock(1);
        ...
        my_func();
        ...
        pthread_unlock(1);
        ...
        }
        Void sub_thread(){
        {
            ...
        pthread_lock(1);
        ...
        global_var=1;
        ...
        pthread_unlock(1);
        ...
        }
```

The main function calls my_func, pthread_lock (mutex lock), my_func, and pthread_unlock (mutex unlock) in sequence. All statements in the my_func function in a mutex are protected by the mutex. In other words, all statements in the my_func in the first call are not protected by the mutex, and all statements in the my_func in the second call are protected by the mutex. The analyzer uses different calling contexts of the my_func in two calls of the my_func to represent different instructions in the my_func in the two calls. If the calling contexts of the my_func function are represented in a manner of a function call string, the calling contexts of the my_func function in the two calls are respectively represented as two function call strings: main → call1 → my_func and main → call2 → my_func. All instructions in main → call1 → my_func are not protected by the mutex, and all instructions in main → call2 → my_func are protected by the mutex. However, a function call string for representing a calling context of a function increases memory overheads.

According to the method in this embodiment of this application, a calling context of a function can be encoded, and an encoding result of the calling context of the function represents the calling context of the function. This reduces memory overheads for saving the context of the function.

The calling context of the my_func may be encoded in the manner 2 and the manner 3, to obtain an encoding result of the calling context of the function. For a specific description, refer to descriptions in the scenario 1. Details are not described herein again. The encoding result of the calling context of the my func function in which the instruction is located may be represented as <thread entry function, encoding0, my func, encoding1>. Further, whether an instruction is protected by a mutex may be represented as <thread entry function, encoding0, my func, encoding1>: instruction → whether protected by a mutex. Herein, instruction indicates a description of the instruction.

In addition, the main function calls a thread creation statement to create a child thread. The child thread calls pthread_lock (mutex lock) and pthread_unlock (mutex unlock) in sequence. The instruction in the mutex is protected by the mutex.

A representation manner of <thread entry function, encoding0, my func, encoding1> can distinguish context information of a thread to which the function of the instruction belongs. In the foregoing code, the thread to which the instruction in the my func in the second call belongs is different from a thread to which global_var belongs. Context information of the thread to which the function belongs may be obtained in the foregoing encoding manner without decoding, so that the calling contexts of the function in a plurality of threads can be distinguished.

Scenario 3: may happen in parallel analysis

MHP analysis is one of necessary analysis in multi-thread analysis, and is used to distinguish whether any two statements in the program code may happen in parallel. If the calling context of the function is not distinguished, only a location of a function in which an instruction is located is recorded. Because a same instruction may be called multiple times in a program, if the instruction and an instruction A may happen in parallel in several calls of the multiple calls and may not happen in parallel in other calls, if the location of the function in which the instruction is located is recorded only, the analyzer can only return the location of the function in which the instruction is located, and cannot accurately return whether the instruction and the instruction A may happen in parallel. A specific return result is that the instruction and the instruction A may happen in parallel and may not happen in parallel.

If the calling contexts of the function are distinguished, the calling context of the function in which the instruction is located may be recorded. Each time the instruction is called, the instruction corresponds to a different calling context of the function. The analyzer can accurately return the calling context of the function in which the instruction is located, to accurately provide whether the instruction in the calling context of the function and another instruction may happen in parallel.

In the scenario 3, the following source code is used as an example for mutex analysis.

```
Int main(){
    ...
my_func();
...
pthread_create(sub_thread);
...
my_func();
...
Void sub_thread(){
...
return;
}
```

For example, in the foregoing code, the main function calls my_func, pthread_create (create a child thread sub_thread), and my_func in sequence.

All statements in the my_func in the first call and statements in the sub_thread may not happen in parallel. All statements in the my_func in the second call and statements in the sub_thread may happen in parallel. The analyzer uses different calling contexts of the my_func in two calls of the my_func to represent different instructions in the my_func in the two calls. If the calling contexts of the my_func function are represented in a manner of a function call string, the calling contexts of the my_func function in the two calls are respectively represented as two function call strings: main → call1 → my_func and main → call2 → my_func. All instructions in the main → call1 → my_func and statements in the sub_thread may not happen in parallel. All instructions in the main → call2 → my_func and statements in the sub_thread may happen in parallel. However, a function call string for representing a calling context of a function increases memory overheads.

According to the method in this embodiment of this application, a calling context of a function can be encoded, and an encoding result of the calling context of the function represents the calling context of the function. This reduces memory overheads for saving the context of the function.

The calling context of the my_func may be encoded in the manner 2 and the manner 3, to obtain an encoding result of the calling context of the function. For a specific description, refer to descriptions in the scenario 1. Details are not described herein again. The encoding result of the calling context of the my func function in which the instruction is located may be represented as <thread entry function, encoding0, my func, encoding1>. Further, a relationship between an instruction and a set of statements that may happen in parallel may be represented as <thread entry function, encoding0, my func, encoding1>: instruction → set of statements that may happen in parallel. Herein, instruction indicates a description of the instruction.

Statements in a same thread may not happen in parallel, and statements in different threads may happen in parallel. Therefore, a thread to which a statement belongs needs to be distinguished. A representation manner of <thread entry function, encoding0, my func, encoding1> can distinguish the context information of the thread to which the function of the instruction belongs. The context information of the thread to which the function belongs may be obtained in the foregoing encoding manner without decoding, so that the calling contexts of the function in a plurality of threads can be rapidly distinguished. This improves analysis efficiency and analysis precision.

In a scenario, such as program analysis or debug, in which different calling contexts of a function need to be distinguished, the encoding result may be obtained by using the method 700 in this embodiment of this application, and the program code is analyzed. The analysis result is represented based on the encoding result. For example, the analysis result may be represented in a form in the scenario 1, the scenario 2, or the scenario 3. A function call string can explicitly represent a calling context of a function. In some scenarios, an encoding result needs to be decoded into a function call string.

In a scenario, when an analysis result is returned to a user, the analysis result is represented in a manner of a function call string, so that readability of the analysis result can be improved. According to the decoding method provided in this embodiment of this application, the encoding result of the calling context of the target function can be decoded, to obtain the function call string of the target function. Further, the analysis result is displayed to the user in a form of a function call string.

In another scenario, different analysis processes of the same program code may represent the calling context execution of the function in different manners. The method 700 is used to encode the calling context of the function in one of the analysis processes. In other words, the analysis result is represented in a form of the encoding result of the calling context of the function in the analysis process. According to the decoding method provided in this embodiment of this application, the encoding result of the calling context of the target function can be decoded, to obtain the function call string of the target function. Further, the analysis result is provided for another analysis process in a form of a function call string. That is, the decoding method in this embodiment of this application can be compatible with another analysis method. For example, representation methods of different contexts of functions used in the four analysis processes in the static program analysis shown in FIG. 4 may be the same or may be different. For example, the mutex analysis module uses the method 700 to encode the calling context of the function, to obtain the encoding result of the calling context of the function. In other words, the encoding result of the calling context of the function represents the calling context of the function. The MHP analysis module uses the function call string of the function to represent the calling context of the function. The MHP analysis module needs to call the analysis result of the mutex analysis module. Therefore, according to the decoding method provided in this embodiment of this application, the analysis result of the mutex analysis module can be provided for the MHP module in a form of a function call string.

FIG. 13 shows a decoding method 1700 for a function calling context related to second aspect of the invention, to decode the encoding result obtained by using the encoding method 700 in embodiments of this application, to obtain a function call string. The method 1700 is a decoding method corresponding to the method 700. For detailed description, refer to the method 700. Appropriate omission is performed when the method 1700 is described.

S1710: According to the invention, obtain an encoding result of a calling context of a target function.

The encoding result of the calling context of the target function includes an encoding result of a context of a thread to which the target function belongs and an encoding result of a function calling context of the target function in the thread to which the target function belongs.

Optionally, the encoding result of the function calling context of the target function in the thread to which the target function belongs indicates the target function and an encoding value of the function calling context of the target function in the thread to which the target function belongs.

Optionally, the encoding result of the context of the thread to which the target function belongs indicates a thread entry function in the thread to which the target function belongs and an encoding value of the context of the thread to which the target function belongs.

S1720: According to the invention, obtain encoding values corresponding to creation relationships between a plurality of threads in a program code. The program code includes the target function.

For example, the encoding values corresponding to the creation relationships between the plurality of threads in the program code may be obtained in step S720.

Alternatively, the encoding values corresponding to the creation relationships between the plurality of threads in the program code may be received from another module or device.

The plurality of threads in the program code include a parent thread and a child thread, a thread creation function in the parent thread is used to create the child thread, and an encoding value corresponding to a creation relationship between the parent thread and the child thread corresponds to a function calling context of the thread creation function in the parent thread.

S1730: According to the invention, obtain encoding values corresponding to call relationships between a plurality of functions in the plurality of threads.

For example, the encoding values corresponding to the call relationships between the plurality of functions in the plurality of threads in the program code may be obtained in step S720.

Alternatively, the encoding values corresponding to the call relationships between the plurality of functions in the plurality of threads in the program code may be received from another module or device.

S1740: According to the invention, decode the encoding result of the calling context of the target function based on the encoding values corresponding to the creation relationships between the plurality of threads in the program code and the encoding values corresponding to the call relationships between the plurality of functions in the plurality of threads in the program code, to obtain a function call string of the target function.

Optionally, step S1740 includes step S1741 to step S1744.

S1741: Decode, based on the encoding values corresponding to the creation relationships between the plurality of threads in the program code, the encoding result of the context of the thread to which the target function belongs, to obtain encoding values corresponding to the creation relationships between the plurality of threads in the context of the thread to which the target function belongs.

A sum of the encoding values corresponding to the creation relationships between the plurality of threads in the context of the thread to which the target function belongs is equal to the encoding value of the context of the thread to which the target function belongs, and the thread to which the target function belongs is determined based on the thread entry function in the thread to which the target function belongs.

The context of the thread to which the target function belongs refers to a path in which the thread to which the target function belongs is created.

In other words, step S1741 may be understood as determining, based on the encoding values corresponding to the creation relationships between the plurality of threads in the program code, the context of the thread to which the target function belongs. The sum of the encoding values corresponding to the creation relationships between the threads in the context is equal to the encoding value of the context of the thread to which the target function belongs. An end point of the context of the thread is the thread to which the target function belongs, and a start point may be a main thread.

The main thread refers to a thread in which a thread entry function is a root function. The root function is a function that is not called by another function in the program code. In a TEG, the main thread refers to a thread that is not pointed to by other threads.

For example, the encoding result of the context of the thread to which the target function belongs is applied to the TEG, the context of the thread to which the target function belongs is obtained through path matching, and the encoding values corresponding to the creation relationships between the plurality of threads in the context of the thread to which the target function belongs are obtained.

For example, the encoding result of the calling context of the target function is <threadentry2, 2, D, 0>, and a thread to which the target function D belongs is a thread thread2 corresponding to a thread entry function threadentry2. The encoding result <threadentry2, 0> of the context of the thread thread2 to which the target function D belongs is applied to the TEG in FIG. 11 according to the invention, so that the context of the thread thread2 to which the target function belongs is that the thread0 creates the thread1, and the thread1 creates the thread2. An encoding value corresponding to a creation relationship between the thread0 and the thread1 is 0, and an encoding value corresponding to a creation relationship between the thread1 and the thread2 is 2.

It should be noted that, if it is determined, based on the encoding values corresponding to the creation relationships between the plurality of threads in the program code and the encoding result of the context of the thread to which the target function belongs, that the thread to which the target function belongs is not created by another thread, in other words, the thread to which the target function belongs is a main thread, step S1744 is directly performed, and the function call string in the thread in step S1744 is used as a target function call string.

S1742: Determine, based on the encoding values corresponding to the creation relationships between the plurality of threads in the context of the thread to which the target function belongs, an encoding result of a function calling context of a thread creation function in the plurality of threads in the context of the thread to which the target function belongs.

For example, the encoding result of the calling context of the target function is <threadentry2, 2, D, 0>, and the encoding value 0 corresponding to the creation relationship between the thread0 and the thread1 and the encoding value 2 corresponding to the creation relationship between the thread1 and the thread2 are obtained in step S1741. It may be learned from FIG. 12 that, an encoding result of a function calling context of a thread creation function in the thread0 corresponding to the encoding value 0 corresponding to the creation relationship between the thread0 and the thread1 is <A, 0>; and an encoding result of a function calling context of a thread creation function in the thread1 corresponding to the encoding value 2 corresponding to the creation relationship between the thread1 and the thread2 is <C, 0>.

S1743: Decode, based on the encoding values corresponding to the call relationships between the plurality of functions in the plurality of threads in the program code, the encoding result of the function calling context of the thread creation function in the plurality of threads in the context of the thread to which the target function belongs, to obtain a function call string of the thread creation function in a thread to which the thread creation function belongs.

A call start point of the function call string of the thread creation function in the thread to which the thread creation function belongs is a thread entry function of the thread to which the thread creation function belongs. A call end point of the function call string of the thread creation function in the thread to which the thread creation function belongs is the thread creation function. The sum of the encoding values corresponding to the call relationships between the plurality of functions in the function call string of the thread creation function in the thread to which the thread creation function belongs is equal to the encoding value of the function call string of the thread creation function in the thread to which the thread creation function belongs.

The call start point of the function call string of the thread creation function in the thread to which the thread creation function belongs is usually different from the call end point of the function call string of the thread creation function in the thread to which the thread creation function belongs.

There may be one or more thread creation functions. Correspondingly, there may be one or more function call strings of the thread creation function in the thread to which the thread creation function belongs.

For example, the encoding result of the function calling context of the thread creation function in the thread0 is <A, 0>. It may be learned from FIG. 10 that a function call string of a thread creation function A in the thread0 is threadentry0 → A. The encoding result of the function calling context of the thread creation function in the thread1 is <C, 0>. It may be learned from FIG. 10 that a function call string of a thread creation function C in the thread1 is threadentry1 → C.

S1744: Decode, based on the encoding values corresponding to the call relationships between the plurality of functions in the plurality of threads in the program code, the encoding result of the function calling context of the target function in the thread to which the target function belongs, to obtain the function call string of the target function in the thread to which the target function belongs.

A call start point of the function call string of the target function in the thread to which the target function belongs is a thread entry function of the thread to which the target function belongs. A call end point of the function call string of the target function in the thread to which the target function belongs is the target function.

If the call start point of the function call string of the target function in the thread to which the target function belongs is different from the call end point of the function call string of the target function in the thread to which the target function belongs, the sum of the encoding values corresponding to the call relationships between the plurality of functions in the function call string of the target function in the thread to which the target function belongs is equal to the encoding value of the function calling context of the target function in the thread to which the target function belongs.

In other words, step S1744 may be understood as determining, based on the encoding values corresponding to the call relationships between the plurality of functions in the thread to which the target function belongs, a function call string that is in a thread and that uses the thread entry function of the thread to which the target function belongs as a call start point and uses the target function as a call end point, where a sum of encoding values corresponding to the call relationships between functions in the function call string in the thread is equal to the encoding value of the function calling context of the target function in the thread to which the target function belongs.

If in the encoding result of the calling context of the target function, the thread entry function of the thread to which the target function belongs is the same as the target function, in other words, the call start point of the function call string of the target function in the thread to which the target function belongs is the same as the call end point of the function call string of the target function in the thread to which the target function belongs, the function call string of the target function in the thread to which the target function belongs is the target function.

For example, the thread to which the target function belongs may be obtained based on the thread entry function in the thread to which the target function belongs. The encoding result of the function calling context of the target function in the thread to which the target function belongs is applied to the CEG in the thread to which the target function belongs, to obtain the function call string of the target function in the thread to which the target function belongs, namely, the function calling context of the target function in the thread to which the target function belongs.

For example, the encoding result of the calling context of the target function is <threadentry2, 2, threadentry2, 0>, and a function call string of a target function threadentry2 in a thread to which the target function threadentry2 belongs is the threadentry2. For another example, the encoding result of the calling context of the target function is <threadentry2, 2, D, 0>, and a thread to which a target function D belongs is a thread thread2 corresponding to a thread entry function threadentry2. The encoding result <D, 0> of the function calling context of the target function D in the thread2 is applied to the CEG in the thread2 in FIG. 11, so that the function call string of the target function in the thread2 is threadentry2 → D.

S1745: Determine the function call string of the target function based on the function call string of the thread creation function in the thread to which the thread creation function belongs and the function call string of the target function in the thread to which the target function belongs.

Specifically, the function call string of the thread creation function in a first thread and the function call string of the target function in the thread to which the target function belongs are combined according to a sequence that is obtained in step S1741 and that is of the context of the thread to which the target function belongs, to obtain the function call string of the target function.

For example, the function call string of the thread creation function A in the thread0 is threadentry0 → A. The function call string of the thread creation function C in the thread1 is threadentryl → C. The function call string of the target function in the thread2 is threadentry2 → D. The three function call strings are combined to obtain the function call string threadentry0 → A → threadentryl → C → threadentry2 → D of the target function.

Optionally, the method 1700 further includes: providing a third API, where an input of the third API includes the encoding result of the calling context of the target function. An output of the third API includes the function call string of the target function.

Alternatively, it may be understood that the encoding result of the calling context of the target function in step S1710 is obtained through the third API. The third API outputs the function call string of the target function obtained in step S1740.

The input of the third API may be in a form of a quadruple. In other words, the input of the third API may include a first element, a second element, a third element, and a fourth element. The elements respectively indicate the thread entry function in the thread to which the target function belongs, the encoding value of the context of the thread to which the target function belongs, the target function, and the encoding value of the function calling context of the target function in the thread to which the target function belongs.

Alternatively, the input of the third API may be in a form of a triple. In other words, the input of the third API may include a fifth element, a sixth element, and a seventh element. The fifth element indicates the thread entry function in the thread to which the target function belongs and the encoding value of the context of the thread to which the target function belongs. The sixth element indicates the target function. The seventh element indicates the encoding value of the function calling context of the target function in the thread to which the target function belongs.

The following illustrates a form of the API provided in the decoding method 1700.

(1) API5 callstring=getdecoding (<thread entry function, encoding0, target function, encoding1>)

The API5 is used to obtain the function call string. An input of the API5 includes the encoding result of the calling context of the target function. The encoding result of the calling context of the target function includes an encoding result of a context of a thread to which the target function belongs and an encoding result of a function calling context of the target function in the thread to which the target function belongs. An output of the API5 includes the function call string of the target function. In other words, the function call string of the target function may be returned through the API5 after being obtained.

The input of the API5 may be in a form of a quadruple. The thread entry function in the quadruple refers to the thread entry function of the thread to which the target function belongs, encoding0 indicates the encoding value of the context of the thread to which the target function belongs, the target function is the function called by the function call string, and encoding1 indicates the encoding value of the function calling context of the target function in the thread to which the target function belongs.

It should be noted that, in this embodiment of this application, the function in the input of the API may be represented by using a function name, or may be represented by using a memory address of the function. A representation form of the function is not limited in this embodiment of this application, provided that the corresponding function can be indicated. The encoding value in the input of the API may be represented by a value, or may be represented by a memory address corresponding to the encoding value. A representation form of the encoding value is not limited in this embodiment of this application, provided that the corresponding encoding value can be indicated.

(2) API6 callstring=getdecoding (<X, target function, encoding1>)

The API6 is used to obtain the function call string. The API6 includes the encoding result of the calling context of the target function. The encoding result of the calling context of the target function includes an encoding result of a context of a thread to which the target function belongs and an encoding result of a function calling context of the target function in the thread to which the target function belongs. An output of the API6 includes the function call string of the target function. In other words, the function call string of the target function may be returned through the API6 after being obtained.

The input of the API6 may be in a form of a triple. X in the triple indicates the thread entry function of the thread to which the target function belongs and the encoding value of the context of the thread to which the target function belongs, the target function is the function called by the function call string, and encoding1 indicates the encoding value of the function calling context of the target function in the thread to which the target function belongs. In other words, <X> may be understood as a package of <thread entry function, encoding0>, and there is a correspondence between X and both of the thread entry function and encoding0.

For example, X may be represented in a form of a character string or a number. A representation form of X is not limited in this embodiment of this application, provided that X one-to-one corresponds to <thread entry function, encoding0>. In other words, X can uniquely indicate <thread entry function, encoding0>.

The decoding method in this embodiment of this application may adapt to the encoding method in embodiments of this application. The function call string of the target function is obtained based on the encoding result of the calling context of the target function, so that the encoding result of the calling context of the target function and the function call string can be flexibly converted. This method is applicable to a plurality of analysis scenarios, and is compatible with another analysis method.

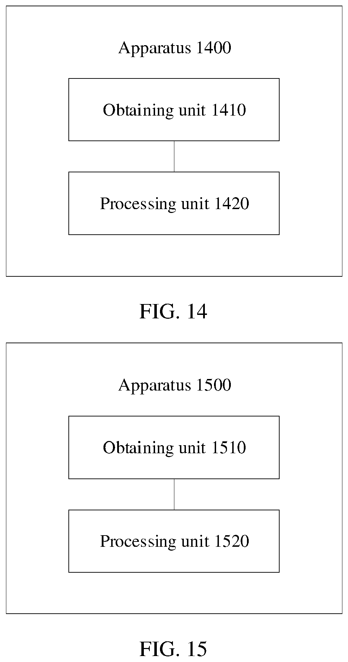

The following describes an apparatus in embodiments of this application with reference to FIG. 14 to FIG. 17. It should be understood that the following described apparatus can perform the method in embodiments of this application. To avoid unnecessary repetition, repeated descriptions are appropriately omitted when the apparatus in embodiments of this application is described below.

FIG. 14 is a schematic block diagram of an encoding apparatus for a function calling context according to an embodiment of this application.

For example, the apparatus 1400 shown in FIG. 14 may be located in the static program analyzer in FIG. 5 or the calling context encoding module 630 in FIG. 6.

The apparatus 1400 shown in FIG. 14 includes an obtaining unit 1410 and a processing unit 1420.

The obtaining unit 1410 and the processing unit 1420 may be configured to perform the encoding method 700 for a function calling context in embodiments of this application.

The obtaining unit 1410 is configured to: obtain calling context information of a target function; and obtain encoding values corresponding to creation relationships between a plurality of threads in program code, where the program code includes the target function.

The processing unit 1420 is configured to encode, based on the calling context information of the target function and the encoding values corresponding to the creation relationships between the plurality of threads, a context of a thread to which the target function belongs, to obtain an encoding result of the context of the thread to which the target function belongs.

Optionally, in an embodiment, the plurality of threads in the program code include a parent thread and a child thread, a thread creation function in the parent thread is used to create the child thread, and an encoding value corresponding to a creation relationship between the parent thread and the child thread corresponds to a function calling context of the thread creation function in the parent thread.

Optionally, in an embodiment, the encoding result of the context of the thread to which the target function belongs indicates a thread entry function in the thread to which the target function belongs and an encoding value of the context of the thread to which the target function belongs.

Optionally, in an embodiment, the obtaining unit 1410 is further configured to: obtain encoding values corresponding to call relationships between a plurality of functions in the plurality of threads in the program code. The processing unit 1420 is further configured to: encode, based on the calling context information of the target function and the encoding values corresponding to the call relationships between the plurality of functions in the plurality of threads in the program code, a function calling context of the target function in the thread to which the target function belongs, to obtain an encoding result of the function calling context of the target function in the thread to which the target function belongs.

Optionally, in an embodiment, an encoding value corresponding to a call relationship between a plurality of functions in one thread of the plurality of threads corresponds to a function call statement between the plurality of functions.

Optionally, in an embodiment, the encoding result of the function calling context of the target function in the thread to which the target function belongs indicates the target function and an encoding value of the function calling context of the target function in the thread to which the target function belongs.

Optionally, in an embodiment, the calling context information of the target function includes a function call string of the target function.

Optionally, in an embodiment, the processing unit 1420 is specifically configured to: if the function call string includes a thread entry function created by a thread creation function, divide the function call string into at least two substrings by using the thread creation function in the function call string as a segmentation point, where a start point in each substring of the at least two substrings is the thread entry function; separately determine, based on the encoding values corresponding to the call relationships between the plurality of functions in the plurality of threads, encoding values corresponding to call relationships between a plurality of functions in the at least two substrings; separately determine, based on the encoding values corresponding to the call relationships between the plurality of functions in the at least two substrings, an encoding result corresponding to a function calling context of a thread creation function in the at least two substrings in a thread to which the thread creation function belongs; determine, based on the encoding result corresponding to the function calling context of the thread creation function in the at least two substrings in the thread to which the thread creation function belongs, encoding values corresponding to creation relationships between threads corresponding to the at least two substrings; use a sum of the encoding values corresponding to the creation relationships between the threads corresponding to the at least two substrings as the encoding value of the context of the thread to which the target function belongs; and determine, based on a thread entry function in a substring at a tail end of the function call string and the encoding value of the context of the thread to which the target function belongs, the encoding result of the context of the thread to which the target function belongs.

Optionally, in an embodiment, the calling context information of the target function includes an encoding result of a calling context of a caller function of the target function and a first instruction, the target function is a function called by the caller function based on the first instruction, and the encoding result of the calling context of the caller function includes an encoding result of a context of a thread to which the caller function belongs and an encoding result of a function calling context of the caller function in the thread to which the caller function belongs.

Optionally, in an embodiment, the processing unit 1420 is specifically configured to: if the first instruction is a function call instruction, use the encoding result of the context of the thread to which the caller function belongs as the encoding result of the context of the thread to which the target function belongs; or if the first instruction is a thread creation instruction, determine, based on the encoding result of the function calling context of the caller function in the thread to which the caller function belongs, an encoding value corresponding to a creation relationship between the thread to which the caller function belongs and the thread to which the target function belongs; use a sum of an encoding value of the context of the thread to which the caller function belongs and the encoding value corresponding to the creation relationship between the thread to which the caller function belongs and the thread to which the target function belongs as the encoding value of the context of the thread to which the target function belongs; and determine, based on the target function and the encoding value of the context of the thread to which the target function belongs, the encoding result of the context of the thread to which the target function belongs.

Optionally, in an embodiment, the context information of the target function includes an encoding result of a calling context of a callee function called by the target function and a second instruction, the callee function is called by the target function based on the second instruction, and the encoding result of the calling context of the callee function includes an encoding result of a context of a thread to which the callee function belongs and an encoding result of a function calling context of the callee function in the thread to which the callee function belongs.

Optionally, in an embodiment, the processing unit 1420 is specifically configured to: if the second instruction is a function call instruction, use the encoding result of the context of the thread to which the callee function belongs as the encoding result of the context of the thread to which the target function belongs; or if the second instruction is a thread creation instruction, determine, based on the encoding result of the context of the callee function in the thread to which the callee function belongs, an encoding value corresponding to a creation relationship between the thread to which the target function belongs and the thread to which the callee function belongs; use a difference of an encoding value of the context of the thread to which the callee function belongs and the encoding value corresponding to the creation relationship between the thread to which the target function belongs and the thread to which the callee function belongs as the encoding value of the context of the thread to which the target function belongs; and determine, based on the thread entry function of the thread to which the target function belongs and the encoding value of the context of the thread to which the target function belongs, the encoding result of the context of the thread to which the target function belongs.

Optionally, in an embodiment, the apparatus further includes an API providing unit, configured to provide an API, where an input of the API includes the calling context information of the target function, and an output of the API includes the encoding result of the context of the thread to which the target function belongs.

In an implementation, the API providing unit may include a receiving module and an output module. The receiving module is configured to obtain the calling context information of the target function. In this case, the apparatus 1400 may obtain the calling context information of the target function through the API, and does not need to obtain the calling context information of the target function by using the obtaining unit.

Optionally, in an embodiment, the output of the API further includes the encoding result of the function calling context of the target function in the thread to which the target function belongs.

Optionally, in an embodiment, the output of the API includes a first element, a second element, a third element, and a fourth element, the first element indicates a thread entry function in a thread to which the target function belongs, the second element indicates an encoding value of a context of the thread to which the target function belongs, the third element indicates the target function, and the fourth element indicates an encoding value of a function calling context of the target function in the thread to which the target function belongs.

Optionally, in an embodiment, the output of the API includes a fifth element, a sixth element, and a seventh element, the fifth element indicates the thread entry function in the thread to which the target function belongs and the encoding value of the context of the thread to which the target function belongs, the sixth element indicates the target function, and the seventh element indicates the encoding value of the function calling context of the target function in the thread to which the target function belongs. FIG. 15 is a schematic block diagram of a decoding apparatus for a function calling context according to an embodiment of this application. The apparatus 1500 shown in FIG. 15 includes an obtaining unit 1510 and a processing unit 1520.

For example, the apparatus 1500 shown in FIG. 15 may be located in the static program analyzer in FIG. 5 or the calling context decoding module 640 in FIG. 6.

The obtaining unit 1510 and the processing unit 1520 may be configured to perform the decoding method 1700 for a function calling context in embodiments of this application.

The obtaining unit 1510 is configured to: obtain an encoding result of a calling context of a target function; obtain encoding values corresponding to creation relationships between a plurality of threads in program code, where the program code includes the target function; and obtain encoding values corresponding to call relationships between a plurality of functions in the plurality of threads in the program code.

The processing unit 1520 is configured to: decode the encoding result of the calling context of the target function based on the encoding values corresponding to the creation relationships between the plurality of threads in the program code and the encoding values corresponding to the call relationships between the plurality of functions in the plurality of threads in the program code, to obtain a function call string of the target function.

Optionally, in an embodiment, the plurality of threads in the program code include a parent thread and a child thread, a thread creation function in the parent thread is used to create the child thread, and an encoding value corresponding to a creation relationship between the parent thread and the child thread corresponds to a function calling context of the thread creation function in the parent thread.

Optionally, in an embodiment, the encoding result of the calling context of the target function includes an encoding result of a context of a thread to which the target function belongs and an encoding result of a function calling context of the target function in the thread to which the target function belongs, the encoding result of the context of the thread to which the target function belongs indicates a thread entry function in the thread to which the target function belongs and an encoding value of the context of the thread to which the target function belongs, and the encoding result of the function calling context of the target function in the thread to which the target function belongs indicates the target function and an encoding value of the function calling context of the target function in the thread to which the target function belongs.

Optionally, in an embodiment, the processing unit 1520 is specifically configured to: decode, based on the encoding values corresponding to the creation relationships between the plurality of threads in the program code, the encoding result of the context of the thread to which the target function belongs, to obtain encoding values corresponding to creation relationships between a plurality of threads in the context of the thread to which the target function belongs, where a sum of the encoding values corresponding to the creation relationships between the plurality of threads in the context of the thread to which the target function belongs is equal to the encoding value of the context of the thread to which the target function belongs, and the thread to which the target function belongs is determined based on the thread entry function in the thread to which the target function belongs, determine, based on the encoding values corresponding to the creation relationships between the plurality of threads in the context of the thread to which the target function belongs, an encoding result of a function calling context of a thread creation function in the plurality of threads in the context of the thread to which the target function belongs; decode, based on the encoding values corresponding to the call relationships between the plurality of functions in the plurality of threads in the program code, the encoding result of the function calling context of the thread creation function in the plurality of threads in the context of the thread to which the target function belongs, to obtain a function call string of the thread creation function in a thread to which the thread creation function belongs, where a call start point of the function call string of the thread creation function in the thread to which the thread creation function belongs is a thread entry function of the thread to which the thread creation function belongs, a call end point of the function call string of the thread creation function in the thread to which the thread creation function belongs is the thread creation function, and a sum of encoding values corresponding to call relationships between a plurality of functions in the function call string of the thread creation function in the thread to which the thread creation function belongs is equal to an encoding value of the function call string of the thread creation function in the thread to which the thread creation function belongs; decode, based on the encoding values corresponding to the call relationships between the plurality of functions in the plurality of threads in the program code, the encoding result of the function calling context of the target function in the thread to which the target function belongs, to obtain a function call string of the target function in the thread to which the target function belongs, where a call start point of the function call string of the target function in the thread to which the target function belongs is a thread entry function of the thread to which the target function belongs, a call end point of the function call string of the target function in the thread to which the target function belongs is the target function, and if the call start point of the function call string of the target function in the thread to which the target function belongs is different from the call end point of the function call string of the target function in the thread to which the target function belongs, a sum of encoding values corresponding to call relationships between a plurality of functions in the function call string of the target function in the thread to which the target function belongs is equal to the encoding value of the function calling context of the target function in the thread to which the target function belongs; and determine the function call string of the target function based on the function call string of the thread creation function in the thread to which the thread creation function belongs and the function call string of the target function in the thread to which the target function belongs.

Optionally, in an embodiment, the apparatus 1500 further includes an API providing unit, configured to provide an API, where an input of the API includes the encoding result of the calling context of the target function, and an output of the API includes the function call string of the target function.

Optionally, in an embodiment, the input of the API includes a first element, a second element, a third element, and a fourth element, the first element indicates a thread entry function in a thread to which the target function belongs, the second element indicates an encoding value of a context of the thread to which the target function belongs, the third element indicates the target function, and the fourth element indicates an encoding value of a function calling context of the target function in the thread to which the target function belongs.

Optionally, in an embodiment, the input of the API includes a fifth element, a sixth element, and a seventh element, the fifth element indicates the thread entry function in the thread to which the target function belongs and the encoding value of the context of the thread to which the target function belongs, the sixth element indicates the target function, and the seventh element indicates the encoding value of the function calling context of the target function in the thread to which the target function belongs.

It should be noted that the apparatus 1400 and the apparatus 1500 are embodied in a form of a functional unit. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or other proper components that support the described functions.

Therefore, the units in the examples described in embodiments of this application can be implemented by using electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

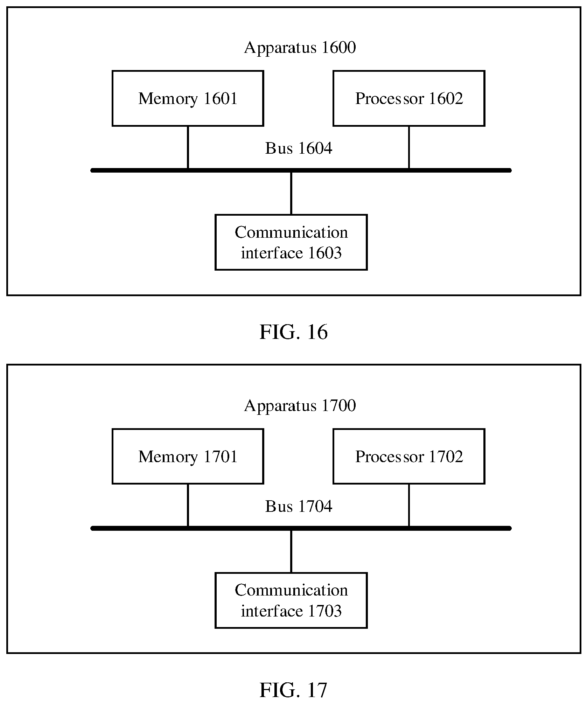

FIG. 16 is a schematic diagram of a hardware structure of an encoding apparatus for a function calling context according to an embodiment of this application. The encoding apparatus 1600 (the apparatus 1600 may be specifically a computer device) for a function calling context shown in FIG. 16 includes a memory 1601, a processor 1602, a communication interface 1603, and a bus 1604. The memory 1601, the processor 1602, and the communication interface 1603 are communicatively connected to each other through the bus 1604.

The memory 1601 may be a read-only memory (read-only memory, ROM), a static storage device, a dynamic storage device, or a random access memory (random access memory, RAM). The memory 1601 may store a program. When the program stored in the memory 1601 is executed by the processor 1602, the processor 1602 and the communication interface 1603 are configured to perform the steps of the encoding method for a function calling context in embodiments of this application.

The processor 1602 may be a general-purpose central processing unit (central processing unit, CPU), a microprocessor, an application-specific integrated circuit (application-specific Integrated circuit, ASIC), a graphics processing unit (graphics processing unit, GPU), or one or more integrated circuits, and is configured to execute a related program, to implement a function that needs to be performed by a unit in the apparatus in embodiments of this application, or to perform the encoding method for a function calling context in the method embodiments of this application.

The processor 1602 may alternatively be an integrated circuit chip and has a signal processing capability. In an implementation process, steps of the encoding method for a function calling context in this application can be implemented by using a hardware integrated logical circuit in the processor 1602, or by using instructions in a form of software. The processor 1602 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1601. The processor 1602 reads information in the memory 1601, and completes, in combination with hardware of the processor 1602, a function that needs to be performed by a unit included in the encoding apparatus for a function calling context in embodiments of this application, or performs the encoding method for a function calling context in the method embodiments of this application.

The communication interface 1603 implements communication between the apparatus 1600 and another device or a communication network by using a transceiver apparatus, for example but not limited to, a transceiver.

The bus 1604 may include a path for information transfer between various components (for example, the memory 1601, the processor 1602, and the communication interface 1603) of the apparatus 1600.

It should be understood that the obtaining unit 1410 in the encoding apparatus 1400 for a function calling context is equivalent to the communication interface 1603 in the encoding apparatus 1600 for a function calling context, and the processing unit 1420 in the encoding apparatus 1400 for a function calling context may be equivalent to the processor 1602.

FIG. 17 is a schematic diagram of a hardware structure of a decoding apparatus for a function calling context according to an embodiment of this application. The decoding apparatus 1700 (the apparatus 1700 may be specifically a computer device) for a function calling context shown in FIG. 17 includes a memory 1701, a processor 1702, a communication interface 1703, and a bus 1704. The memory 1701, the processor 1702, and the communication interface 1703 are communicatively connected to each other through the bus 1704.

The memory 1701 may be a read-only memory (read-only memory, ROM), a static storage device, a dynamic storage device, or a random access memory (random access memory, RAM). The memory 1701 may store a program. When the program stored in the memory 1701 is executed by the processor 1702, the processor 1702 and the communication interface 1703 are configured to perform the steps of the decoding method for a function calling context in embodiments of this application.

The processor 1702 may be a general-purpose central processing unit (central processing unit, CPU), a microprocessor, an application-specific integrated circuit (application-specific Integrated circuit, ASIC), a graphics processing unit (graphics processing unit, GPU), or one or more integrated circuits, and is configured to execute a related program, to implement a function that needs to be performed by a unit in the decoding apparatus for a function calling context in embodiments of this application, or to perform the decoding method for a function calling context in the method embodiments of this application.

The processor 1702 may alternatively be an integrated circuit chip and has a signal processing capability. In an implementation process, steps of the decoding method for a function calling context in this application can be implemented by using a hardware integrated logical circuit in the processor 1702, or by using instructions in a form of software. The processor 1702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by a combination of hardware and a software module in the decoding processor. The software module may be located in a mature storage medium in the art such as a random access memory, a flash memory, a read-only memory, a programmable read-only memory, an electrically erasable programmable memory, or a register. The storage medium is located in the memory 1701. The processor 1702 reads information in the memory 1701, and completes, in combination with hardware of the processor 1702, a function that needs to be performed by a unit included in the decoding apparatus for a function calling context in embodiments of this application, or performs the decoding method for a function calling context in the method embodiments of this application.

The communication interface 1703 implements communication between the apparatus 1700 and another device or a communication network by using a transceiver apparatus, for example but not limited to, a transceiver.

The bus 1704 may include a path for information transfer between various components (for example, the memory 1701, the processor 1702, and the communication interface 1703) of the apparatus 1700.

It should be understood that the obtaining unit 1510 in the decoding apparatus 1500 for a function calling context is equivalent to the communication interface 1703 in the decoding apparatus 1700 for a function calling context, and the processing unit 1520 in the decoding apparatus 1500 for a function calling context may be equivalent to the processor 1702.

It should be noted that, although the apparatuses shown in FIG. 16 and FIG. 17 show only the memory, the processor, and the communication interface, in a specific implementation process, a person skilled in the art should understand that the apparatus 1600 and the apparatus 1700 further include another component necessary for appropriate running. In addition, based on a specific requirement, a person skilled in the art should understand that the apparatus 1600 and the apparatus 1700 each may further include a hardware component for implementing another additional function. In addition, a person skilled in the art should understand that the apparatus 1600 and the apparatus 1700 each may include only a component necessary for implementing embodiments of this application, but do not necessarily include all the components shown in FIG. 16 and FIG. 17.

A person skilled in the art may clearly understand that, for the purpose of convenient and brief description, for a detailed working process of the foregoing system, apparatus, and unit, refer to a corresponding process in the foregoing method embodiments, and details are not described herein again.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor, or the like.

It may be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be all or partially implemented in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, and microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that, in the embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. An encoding method (700) for a function calling context, comprising:

   obtaining (S730) calling context information of a target function;
   obtaining (S740) encoding values (0, 1) corresponding to creation relationships between a plurality of threads (0-3) in program code, wherein the encoding values corresponding to the creation relationships between the plurality of threads in the program code are represented by using a thread calling context encoding graph, TEG, which includes a plurality of thread nodes and edges between the plurality of thread nodes, and further includes encoding values on the edges, wherein the thread nodes in the TEG represent the threads in program code, and the edges between the plurality of thread nodes represent the creation relationships between the plurality of threads, and the encoding values on the edges are the encoding values corresponding to the creation relationships between the threads;
   wherein the program code comprises the target function; and
   encoding (S750), based on the calling context information of the target function and the encoding values (0, 1) corresponding to the creation relationships between the plurality of threads (0-3), a context of a thread (0-3) to which the target function belongs, to obtain an encoding result of the context of the thread (0-3) to which the target function belongs.

2. The method (700, 1700) according to claim 1, wherein the plurality of threads (0-3) in the program code comprise a parent thread and a child thread, a thread creation function in the parent thread is used to create the child thread, and an encoding value (0-2) corresponding to a creation relationship between the parent thread and the child thread corresponds to a function calling context of the thread creation function in the parent thread.

3. The method (700, 1700) according to claim 1 or 2, wherein the encoding result of the context of the thread (0-3) to which the target function belongs indicates a thread entry function in the thread (0-3) to which the target function belongs and an encoding value (0-2) of the context of the thread (0-3) to which the target function belongs.

4. The method (700, 1700) according to any one of claims 1 to 3, wherein the method (700, 1700) further comprises:

   obtaining encoding values (0, 1) corresponding to call relationships between a plurality of functions in the plurality of threads (0-3) in the program code, wherein the encoding values corresponding to the call relationships between the plurality of threads in the plurality of threads are represented by using a function calling context encoding graph, CEG, in the thread, the CEG in the thread includes a plurality of function nodes in the threads and edges between the plurality of function nodes, and further includes encoding values on the edges, wherein the function nodes in the CEG in the thread represent the functions in the threads, the edges between the plurality of function nodes represent the call relationships between the plurality of functions, and the encoding values on the edges are the encoding values corresponding to the call relationships between the functions in the threads; and
   encoding, based on the calling context information of the target function and the encoding values (0, 1) corresponding to the call relationships between the plurality of functions in the plurality of threads (0-3) in the program code, a function calling context of the target function in the thread (0-3) to which the target function belongs, to obtain an encoding result of the function calling context of the target function in the thread (0-3) to which the target function belongs.

5. The method (700, 1700) according to claim 4, wherein the encoding result of the function calling context of the target function in the thread (0-3) to which the target function belongs indicates the target function and an encoding value (0-2) of the function calling context of the target function in the thread (0-3) to which the target function belongs.

6. The method (700, 1700) according to any one of claims 1 to 5, wherein the calling context information of the target function comprises a function call string of the target function.

7. A decoding method (1700) for a function calling context, comprising:

   obtaining (S1710) an encoding result of a calling context of a target function;
   obtaining (S 1720) encoding values (0, 1) corresponding to creation relationships between a plurality of threads (0-3) in program code, wherein the encoding values corresponding to the creation relationships between the plurality of threads in the program code are represented by using a thread calling context encoding graph, TEG, which includes a plurality of thread nodes and edges between the plurality of thread nodes, and further includes encoding values on the edges, wherein the thread nodes in the TEG represent the threads in program code, and the edges between the plurality of thread nodes represent the creation relationships between the plurality of threads, and the encoding values on the edges are the encoding values corresponding to the creation relationships between the threads, and wherein the program code comprises the target function;

obtaining (S1730) encoding values (0, 1) corresponding to call relationships between a plurality of functions in the plurality of threads (0-3) in the program code, wherein the encoding values corresponding to the call relationships between the plurality of threads in the plurality of threads are represented by using a function calling context encoding graph, CEG, in the thread, the CEG in the thread includes a plurality of function nodes in the threads and edges between the plurality of function nodes, and further includes encoding values on the edges, wherein the function nodes in the CEG in the thread represent the functions in the threads, the edges between the plurality of function nodes represent the call relationships between the plurality of functions, and the encoding values on the edges are the encoding values corresponding to the call relationships between the functions in the threads; and

decoding (S 1740) the encoding result of the calling context of the target function based on the encoding values (0, 1) corresponding to the creation relationships between the plurality of threads (0-3) in the program code and the encoding values (0, 1) corresponding to the call relationships between the plurality of functions in the plurality of threads (0-3) in the program code, to obtain a function call string of the target function.

8. The method (700, 1700) according to claim 7, wherein the plurality of threads (0-3) in the program code comprise a parent thread and a child thread, a thread creation function in the parent thread is used to create the child thread, and an encoding value (0-2) corresponding to a creation relationship between the parent thread and the child thread corresponds to a function calling context of the thread creation function in the parent thread.

9. The method (700, 1700) according to claim 7 or 8, wherein the encoding result of the calling context of the target function comprises an encoding result of a context of a thread (0-3) to which the target function belongs and an encoding result of a function calling context of the target function in the thread (0-3) to which the target function belongs, the encoding result of the context of the thread (0-3) to which the target function belongs indicates a thread entry function in the thread (0-3) to which the target function belongs and an encoding value (0-2) of the context of the thread (0-3) to which the target function belongs, and the encoding result of the function calling context of the target function in the thread (0-3) to which the target function belongs indicates the target function and an encoding value (0-2) of the function calling context of the target function in the thread (0-3) to which the target function belongs.

10. The method (700, 1700) according to claim 9, wherein the decoding the encoding result of the calling context of the target function based on the encoding values (0, 1) corresponding to the creation relationships between the plurality of threads (0-3) in the program code and the encoding values (0, 1) corresponding to the call relationships between the plurality of functions in the plurality of threads (0-3) in the program code, to obtain a function call string of the target function comprises:

decoding, based on the encoding values (0, 1) corresponding to the creation relationships between the plurality of threads (0-3) in the program code, the encoding result of the context of the thread (0-3) to which the target function belongs, to obtain encoding values (0, 1) corresponding to creation relationships between a plurality of threads (0-3) in the context of the thread (0-3) to which the target function belongs, wherein a sum of the encoding values (0, 1) corresponding to the creation relationships between the plurality of threads (0-3) in the context of the thread (0-3) to which the target function belongs is equal to the encoding value (0-2) of the context of the thread (0-3) to which the target function belongs, and the thread (0-3) to which the target function belongs is determined based on the thread entry function in the thread (0-3) to which the target function belongs;

determining, based on the encoding values (0, 1) corresponding to the creation relationships between the plurality of threads (0-3) in the context of the thread (0-3) to which the target function belongs, an encoding result of a function calling context of a thread creation function in the plurality of threads (0-3) in the context of the thread (0-3) to which the target function belongs;

decoding, based on the encoding values (0, 1) corresponding to the call relationships between the plurality of functions in the plurality of threads (0-3) in the program code, the encoding result of the function calling context of the thread creation function in the plurality of threads (0-3) in the context of the thread (0-3) to which the target function belongs, to obtain a function call string of the thread creation function in a thread (0-3) to which the thread creation function belongs, wherein a call start point of the function call string of the thread creation function in the thread (0-3) to which the thread creation function belongs is a thread entry function of the thread (0-3) to which the thread creation function belongs, a call end point of the function call string of the thread creation function in the thread (0-3) to which the thread creation function belongs is the thread creation function, and a sum of encoding values (0, 1) corresponding to call relationships between a plurality of functions in the function call string of the thread creation function in the thread (0-3) to which the thread creation function belongs is equal to an encoding value (0-2) of the function call string of the thread creation function in the thread (0-3) to which the thread creation function belongs;

decoding, based on the encoding values (0, 1) corresponding to the call relationships between the plurality of functions in the plurality of threads (0-3) in the program code, the encoding result of the function calling context of the target function in the thread (0-3) to which the target function belongs, to obtain a function call string of the target function in the thread (0-3) to which the target function belongs, wherein a call start point of the function call string of the target function in the thread (0-3) to which the target function belongs is a thread entry function of the thread (0-3) to which the target function belongs, a call end point of the function call string of the target function in the thread (0-3) to which the target function belongs is the target function, and if the call start point of the function call string of the target function in the thread (0-3) to which the target function belongs is different from the call end point of the function call string of the target function in the thread (0-3) to which the target function belongs, a sum of encoding values (0, 1) corresponding to call relationships between a plurality of functions in the function call string of the target function in the thread (0-3) to which the target function belongs is equal to the encoding value (0-2) of the function calling context of the target function in the thread (0-3) to which the target function belongs; and

determining the function call string of the target function based on the function call string of the thread creation function in the thread (0-3) to which the thread creation function belongs and the function call string of the target function in the thread (0-3) to which the target function belongs.

11. The method (700, 1700) according to any one of claims 7 to 10, wherein the method (700, 1700) further comprises: providing an API, wherein an input of the API comprises the encoding result of the calling context of the target function, and an output of the API comprises the function call string of the target function.

12. The method (700, 1700) according to claim 11, wherein the input of the API comprises a first element, a second element, a third element, and a fourth element, the first element indicates the thread entry function in the thread (0-3) to which the target function belongs, the second element indicates the encoding value (0-2) of the context of the thread (0-3) to which the target function belongs, the third element indicates the target function, and the fourth element indicates the encoding value (0-2) of the function calling context of the target function in the thread (0-3) to which the target function belongs.

13. The method (700, 1700) according to claim 11, wherein the input of the API comprises a fifth element, a sixth element, and a seventh element, the fifth element indicates the thread entry function in the thread (0-3) to which the target function belongs and the encoding value (0-2) of the context of the thread (0-3) to which the target function belongs, the sixth element indicates the target function, and the seventh element indicates the encoding value (0-2) of the function calling context of the target function in the thread (0-3) to which the target function belongs.

14. An electronic apparatus for a function calling context, comprising a processor (1602, 1702) and a memory (1601, 1701), wherein the memory (1601, 1701) is configured to store program instructions, and the processor (1602, 1702) is configured to invoke the program instructions to perform the method (700, 1700) according to any one of claims 1 to 6 or claims 7 to 13.

15. A computer-readable storage medium, wherein the computer-readable storage medium stores program code to be executed by a device, and the program code comprises instructions used to perform the method (700, 1700) according to any one of claims 1 to 6 or claims 7 to 13.

**Patentansprüche**

1. Ein Kodierungsverfahren (700) für einen Funktionsaufrufkontext, umfassend:

Erhalten (S730) von Aufrufkontextinformationen einer Zielfunktion;
Erhalten (S740) von Kodierungswerten (0, 1), die den Erstellungsbeziehungen zwischen mehreren Threads (0-3) im Programmcode entsprechen, wobei die Kodierungswerte, die den Erstellungsbeziehungen zwischen den mehreren Threads im Programmcode entsprechen, durch Verwendung eines Thread-Aufrufkontext-Kodierungsgraphen (TEG) dargestellt werden, der mehrere Thread-Knoten und Kanten zwischen den mehreren Thread-Knoten umfasst und ferner Kodierungswerte an den Kanten umfasst, wobei die Thread-Knoten im TEG die Threads im Programmcode darstellen und die Kanten zwischen den mehreren Thread-Knoten die Erstellungsbeziehungen zwischen den mehreren Threads darstellen und die Kodierungswerte an den Kanten die Kodierungswerte sind, die den Erstellungsbeziehungen zwischen den Threads entsprechen;
wobei der Programmcode die Zielfunktion umfasst; und
Kodieren (S750) eines Kontexts eines Threads (0-3), zu dem die Zielfunktion gehört, basierend auf den Aufrufkontextinformationen der Zielfunktion und den Kodierungswerten (0, 1), die den Erstellungsbeziehungen zwischen der Vielzahl von Threads (0-3) entsprechen, um ein Kodierungsergebnis des Kontexts des Threads (0-3) zu erhalten, zu dem die Zielfunktion gehört.

2. Verfahren (700, 1700) nach Anspruch 1, wobei die Vielzahl von Threads (0-3) im Programmcode einen übergeordneten Thread und einen untergeordneten Thread umfasst, eine Thread-Erstellungsfunktion im übergeordneten Thread zum Erstellen des untergeordneten Threads verwendet wird und ein Kodierungswert (0-2), der einer Erstellungsbeziehung zwischen dem übergeordneten Thread und dem untergeordneten Thread entspricht, einem Funktionsaufrufkontext der Thread-Erstellungsfunktion im übergeordneten Thread entspricht.

3. Verfahren (700, 1700) nach Anspruch 1 oder 2, wobei das Kodierungsergebnis des Kontexts des Threads (0-3), zu dem die Zielfunktion gehört, eine Thread-Einstiegsfunktion in dem Thread (0-3), zu dem die Zielfunktion gehört, und einen Kodierungswert (0-2) des Kontexts des Threads (0-3), zu dem die Zielfunktion gehört, angibt.

4. Verfahren (700, 1700) nach einem der Ansprüche 1 bis 3, wobei das Verfahren (700, 1700) ferner umfasst:

Erhalten von Kodierungswerten (0, 1), die Aufrufbeziehungen zwischen mehreren Funktionen in mehreren Threads (0-3) im Programmcode entsprechen, wobei die Kodierungswerte, die den Aufrufbeziehungen zwischen mehreren Threads in mehreren Threads entsprechen, durch Verwendung eines Funktionsaufrufkontext-Kodierungsgraphen (CEG) im Thread dargestellt werden, der CEG im Thread mehrere Funktionsknoten in den Threads und Kanten zwischen den mehreren Funktionsknoten umfasst und ferner Kodierungswerte an den Kanten umfasst, wobei die Funktionsknoten im CEG im Thread die Funktionen in den Threads darstellen, die Kanten zwischen den mehreren Funktionsknoten die Aufrufbeziehungen zwischen den mehreren Funktionen darstellen und die Kodierungswerte an den Kanten die Kodierungswerte sind, die den Aufrufbeziehungen zwischen den Funktionen in den Threads entsprechen; und
und Kodieren eines Funktionsaufrufkontexts der Zielfunktion in dem Thread (0-3), zu dem die Zielfunktion gehört, basierend auf den Aufrufkontextinformationen der Zielfunktion und den Kodierungswerten (0, 1), die den Aufrufbeziehungen zwischen der Vielzahl von Funktionen in der Vielzahl von Threads (0-3) im Programmcode entsprechen, um ein Kodierungsergebnis des Funktionsaufrufkontexts der Zielfunktion in dem Thread (0-3), zu dem die Zielfunktion gehört, zu erhalten.

5. Verfahren (700, 1700) nach Anspruch 4, wobei das Kodierungsergebnis des Funktionsaufrufkontexts der Zielfunktion im Thread (0-3), zu dem die Zielfunktion gehört, die Zielfunktion und einen Kodierungswert (0-2) des Funktionsaufrufkontexts der Zielfunktion im Thread (0-3), zu dem die Zielfunktion gehört, angibt.

6. Verfahren (700, 1700) nach einem der Ansprüche 1 bis 5, wobei die Aufrufkontextinformationen der Zielfunktion eine Funktionsaufrufzeichenfolge der Zielfunktion umfassen.

7. Dekodierungsverfahren (1700) für einen Funktionsaufrufkontext, umfassend:

Erhalten (S1710) eines Kodierungsergebnisses eines Aufrufkontexts einer Zielfunktion;
Erhalten (S1720) von Kodierungswerten (0, 1), die den Erstellungsbeziehungen zwischen mehreren Threads (0-3) im Programmcode entsprechen, wobei die Kodierungswerte, die den Erstellungsbeziehungen zwischen den mehreren Threads im Programmcode entsprechen, durch Verwendung eines Thread-Aufrufkontext-Kodierungsgraphen (TEG) dargestellt werden, der mehrere Thread-Knoten und Kanten zwischen den mehreren Thread-Knoten umfasst und ferner Kodierungswerte an den Kanten umfasst, wobei die Thread-Knoten im TEG die Threads im Programmcode darstellen und die Kanten zwischen den mehreren Thread-Knoten die Erstellungsbeziehungen zwischen den mehreren Threads darstellen und die Kodierungswerte an den Kanten die Kodierungswerte sind, die den Erstellungsbeziehungen zwischen den Threads entsprechen, und wobei der Programmcode die Zielfunktion umfasst;
Erhalten (S1730) von Kodierungswerten (0, 1), die Aufrufbeziehungen zwischen mehreren Funktionen in mehreren Threads (0-3) im Programmcode entsprechen, wobei die Kodierungswerte, die den Aufrufbeziehungen zwischen mehreren Threads in mehreren Threads entsprechen, durch Verwendung eines Funktionsaufrufkontext-Kodierungsgraphen (CEG) im Thread dargestellt werden, der CEG im Thread mehrere Funktionsknoten in den Threads und Kanten zwischen den mehreren Funktionsknoten umfasst und ferner Kodierungswerte an den Kanten umfasst, wobei die Funktionsknoten im CEG im Thread die Funktionen in den Threads darstellen, die Kanten zwischen den mehreren Funktionsknoten die Aufrufbeziehungen zwischen den mehreren Funktionen darstellen und die Kodierungswerte an den Kanten die Kodierungswerte sind, die den Aufrufbeziehungen zwischen den Funktionen in den Threads entsprechen; und

Dekodieren (S1740) des Kodierungsergebnisses des Aufrufkontexts der Zielfunktion basierend auf den Kodierungswerten (0, 1), die den Erstellungsbeziehungen zwischen der Vielzahl von Threads (0-3) im Programmcode entsprechen, und den Kodierungswerten (0, 1), die den Aufrufbeziehungen zwischen der Vielzahl von Funktionen in der Vielzahl von Threads (0-3) im Programmcode entsprechen, um eine Funktionsaufrufzeichenfolge der Zielfunktion zu erhalten.

8. Verfahren (700, 1700) nach Anspruch 7, wobei die Vielzahl von Threads (0-3) im Programmcode einen übergeordneten Thread und einen untergeordneten Thread umfasst, eine Thread-Erstellungsfunktion im übergeordneten Thread zum Erstellen des untergeordneten Threads verwendet wird und ein Kodierungswert (0-2), der einer Erstellungsbeziehung zwischen dem übergeordneten Thread und dem untergeordneten Thread entspricht, einem Funktionsaufrufkontext der Thread-Erstellungsfunktion im übergeordneten Thread entspricht.

9. Verfahren (700, 1700) nach Anspruch 7 oder 8, wobei das Kodierungsergebnis des Aufrufkontexts der Zielfunktion ein Kodierungsergebnis eines Kontexts eines Threads (0-3), zu dem die Zielfunktion gehört, und ein Kodierungsergebnis eines Funktionsaufrufkontexts der Zielfunktion in dem Thread (0-3), zu dem die Zielfunktion gehört, umfasst, wobei das Kodierungsergebnis des Kontexts des Threads (0-3), zu dem die Zielfunktion gehört, eine Thread-Einstiegsfunktion in dem Thread (0-3), zu dem die Zielfunktion gehört, und einen Kodierungswert (0-2) des Kontexts des Threads (0-3), zu dem die Zielfunktion gehört, angibt, und das Kodierungsergebnis des Funktionsaufrufkontexts der Zielfunktion in dem Thread (0-3), zu dem die Zielfunktion gehört, die Zielfunktion und einen Kodierungswert (0-2) des Funktionsaufrufkontexts der Zielfunktion in dem Thread (0-3), zu dem die Zielfunktion gehört, angibt.

10. Verfahren (700, 1700) nach Anspruch 9, wobei das Dekodieren des Kodierungsergebnisses des Aufrufkontexts der Zielfunktion basierend auf den Kodierungswerten (0, 1), die den Erstellungsbeziehungen zwischen der Vielzahl von Threads (0-3) im Programmcode entsprechen, und den Kodierungswerten (0, 1), die den Aufrufbeziehungen zwischen der Vielzahl von Funktionen in der Vielzahl von Threads (0-3) im Programmcode entsprechen, um eine Funktionsaufrufzeichenfolge der Zielfunktion zu erhalten, umfasst:

Dekodieren des Kodierungsergebnisses des Kontexts des Threads (0-3), zu dem die Zielfunktion gehört, basierend auf den Kodierungswerten (0, 1), die den Erstellungsbeziehungen zwischen der Vielzahl von Threads (0-3) im Programmcode entsprechen, um Kodierungswerte (0, 1) zu erhalten, die Erstellungsbeziehungen zwischen einer Vielzahl von Threads (0-3) im Kontext des Threads (0-3), zu dem die Zielfunktion gehört, entsprechen, wobei eine Summe der Kodierungswerte (0, 1), die den Erstellungsbeziehungen zwischen der Vielzahl von Threads (0-3) im Kontext des Threads (0-3), zu dem die Zielfunktion gehört, entsprechen, gleich dem Kodierungswert (0-2) des Kontexts des Threads (0-3), zu dem die Zielfunktion gehört, ist, und der Thread (0-3), zu dem die Zielfunktion gehört, basierend auf der Thread-Eintrittsfunktion in dem Thread (0-3), zu dem die Zielfunktion gehört, bestimmt wird;
Bestimmen eines Kodierungsergebnisses eines Funktionsaufrufkontexts einer Thread-Erstellungsfunktion in der Vielzahl von Threads (0-3) im Kontext des Threads (0-3), zu dem die Zielfunktion gehört, basierend auf den Kodierungswerten (0, 1), die den Erstellungsbeziehungen zwischen der Vielzahl von Threads (0-3) im Kontext des Threads (0-3) entsprechen, zu dem die Zielfunktion gehört;
Dekodieren des Kodierungsergebnisses des Funktionsaufrufkontexts der Thread-Erstellungsfunktion in der Vielzahl von Threads (0-3) im Kontext des Threads (0-3), zu dem die Zielfunktion gehört, basierend auf den Kodierungswerten (0, 1), die den Aufrufbeziehungen zwischen der Vielzahl von Funktionen in der Vielzahl von Threads (0-3) im Programmcode entsprechen, um eine Funktionsaufrufzeichenfolge der Thread-Erstellungsfunktion in einem Thread (0-3) zu erhalten, zu dem die Thread-Erstellungsfunktion gehört, wobei ein Aufrufstartpunkt der Funktionsaufrufzeichenfolge der Thread-Erstellungsfunktion in dem Thread (0-3), zu dem die Thread-Erstellungsfunktion gehört, eine Thread-Einstiegsfunktion des Threads (0-3) ist, zu dem die Thread-Erstellungsfunktion gehört, ein Aufrufendpunkt der Funktionsaufrufzeichenfolge der Thread-Erstellungsfunktion in dem Thread (0-3), zu dem die Thread-Erstellungsfunktion gehört, die Thread-Erstellungsfunktion ist, und eine Summe von Kodierungswerten (0, 1), die Aufrufbeziehungen zwischen einer Vielzahl von Funktionen in der Funktionsaufrufzeichenfolge der Thread-Erstellungsfunktion in dem Thread (0-3) entsprechen, zu dem die Thread-Erstellungsfunktion gehört, einem Codierungswert (0-2) der Funktionsaufrufzeichenfolge der Thread-Erstellungsfunktion in dem Thread (0-3) entspricht, zu dem die Thread-Erstellungsfunktion gehört;

Dekodieren des Kodierungsergebnisses des Funktionsaufrufkontexts der Zielfunktion in dem Thread (0-3), zu dem die Zielfunktion gehört, basierend auf den Kodierungswerten (0, 1), die den Aufrufbeziehungen zwischen der Vielzahl von Funktionen in der Vielzahl von Threads (0-3) im Programmcode entsprechen, um eine Funktionsaufrufzeichenfolge der Zielfunktion in dem Thread (0-3) zu erhalten, zu dem die Zielfunktion gehört, wobei ein Aufrufstartpunkt der Funktionsaufrufzeichenfolge der Zielfunktion in dem Thread (0-3), zu dem die Zielfunktion gehört, eine Thread-Einstiegsfunktion des Threads (0-3) ist, zu dem die Zielfunktion gehört, ein Aufrufendpunkt der Funktionsaufrufzeichenfolge der Zielfunktion in dem Thread (0-3), zu dem die Zielfunktion gehört, die Zielfunktion ist, und wenn der Aufrufstartpunkt der Funktionsaufrufzeichenfolge der Zielfunktion in dem Thread (0-3), zu dem die Zielfunktion gehört, sich vom Aufrufendpunkt der Funktionsaufrufzeichenfolge der Zielfunktion in dem Thread (0-3), zu dem die Zielfunktion gehört, unterscheidet, eine Summe der Kodierungswerte (0, 1) entsprechend den Aufrufbeziehungen zwischen mehreren Funktionen in der Funktionsaufrufzeichenfolge der Zielfunktion im Thread (0-3), zu dem die Zielfunktion gehört, ist gleich dem Kodierungswert (0-2) des Funktionsaufrufkontexts der Zielfunktion im Thread (0-3), zu dem die Zielfunktion gehört; und Bestimmen der Funktionsaufrufzeichenfolge der Zielfunktion basierend auf der Funktionsaufrufzeichenfolge der Thread-Erstellungsfunktion in dem Thread (0-3), zu dem die Thread-Erstellungsfunktion gehört, und der Funktionsaufrufzeichenfolge der Zielfunktion in dem Thread (0-3), zu dem die Zielfunktion gehört.

11. Verfahren (1700) nach einem der Ansprüche 7 bis 10, wobei das Verfahren (700, 1700) ferner umfasst:
Bereitstellen einer API, wobei eine Eingabe der API das Kodierungsergebnis des Aufrufkontexts der Zielfunktion umfasst und eine Ausgabe der API die Funktionsaufrufzeichenfolge der Zielfunktion umfasst.

12. Verfahren (700, 1700) nach Anspruch 11, wobei die Eingabe der API ein erstes Element, ein zweites Element, ein drittes Element und ein viertes Element umfasst, wobei das erste Element die Thread-Einstiegsfunktion in dem Thread (0-3) angibt, zu dem die Zielfunktion gehört, das zweite Element den Kodierungswert (0-2) des Kontexts des Threads (0-3) angibt, zu dem die Zielfunktion gehört, das dritte Element die Zielfunktion angibt und das vierte Element den Kodierungswert (0-2) des Funktionsaufrufkontexts der Zielfunktion in dem Thread (0-3) angibt, zu dem die Zielfunktion gehört.

13. Verfahren (700, 1700) nach Anspruch 11, wobei die Eingabe der API ein fünftes Element, ein sechstes Element und ein siebtes Element umfasst, wobei das fünfte Element die Thread-Einstiegsfunktion im Thread (0-3) angibt, zu dem die Zielfunktion gehört, und den Kodierungswert (0-2) des Kontexts des Threads (0-3), zu dem die Zielfunktion gehört, das sechste Element die Zielfunktion angibt und das siebte Element den Kodierungswert (0-2) des Funktionsaufrufkontexts der Zielfunktion im Thread (0-3) angibt, zu dem die Zielfunktion gehört.

14. Elektronische Vorrichtung für einen Funktionsaufrufkontext, die einen Prozessor (1602, 1702) und einen Speicher (1601, 1701) umfasst, wobei der Speicher (1601, 1701) zum Speichern von Programmanweisungen konfiguriert ist und der Prozessor (1602, 1702) zum Aufrufen der Programmanweisungen zum Ausführen des Verfahrens (700, 1700) gemäß einem der Ansprüche 1 bis 6 oder 7 bis 13 konfiguriert ist.

15. Computerlesbares Medium, wobei das computerlesbare Medium Programmcode speichert, der von einem Computer ausgeführt wird, und der Programmcode Anweisungen zum Durchführen des Verfahrens (700, 1700) nach einem der Ansprüche 1 bis 6 oder Ansprüche 7 bis 13 umfasst.

**Revendications**

1. Procédé de codage (700) destiné à un contexte d'appel de fonction, comprenant :

l'obtention (S730) d'informations de contexte d'appel d'une fonction cible ;
l'obtention (S740) de valeurs de codage (0, 1) correspondant à des relations de création entre une pluralité de fils d'exécution (0-3) dans le code de programme, dans lequel les valeurs de codage correspondant aux relations de création entre la pluralité de fils d'exécution dans le code de programme sont représentées à l'aide d'un graphe de codage de contexte d'appel de fils d'exécution, TEG, qui comporte une pluralité de nœuds de fils d'exécution et des arêtes entre la pluralité de nœuds de fils d'exécution, et comporte en outre des valeurs de codage sur les arêtes, dans lequel les nœuds de fils d'exécution dans le TEG représentent les fils d'exécution dans le code de programme, et les arêtes entre la pluralité de nœuds de fils d'exécution représentent les relations de création entre la pluralité de fils d'exécution, et les valeurs de codage sur les arêtes sont les valeurs de codage correspondant aux relations de création entre les fils d'exécution ;

dans lequel le code de programme comprend la fonction cible ; et

le codage (S750), sur la base des informations de contexte d'appel de la fonction cible et des valeurs de codage (0, 1) correspondant aux relations de création entre la pluralité de fils d'exécution (0-3), d'un contexte d'un fil d'exécution (0-3) auquel appartient la fonction cible, afin d'obtenir un résultat de codage du contexte du fil d'exécution (0-3) auquel appartient la fonction cible.

2. Procédé (700, 1700) selon la revendication 1, dans lequel la pluralité de fils d'exécution (0-3) dans le code de programme comprend un fil d'exécution parent et un fil d'exécution enfant, une fonction de création de fil d'exécution dans le fil d'exécution parent est utilisée pour créer le fil d'exécution enfant, et une valeur de codage (0-2) correspondant à une relation de création entre le fil d'exécution parent et le fil d'exécution enfant correspond à un contexte d'appel de fonction de la fonction de création de fil d'exécution dans le fil d'exécution parent.

3. Procédé (700, 1700) selon la revendication 1 ou 2, dans lequel le résultat de codage du contexte du fil d'exécution (0-3) auquel appartient la fonction cible indique une fonction d'entrée de fil d'exécution dans le fil d'exécution (0-3) auquel appartient la fonction cible et une valeur de codage (0-2) du contexte du fil d'exécution (0-3) auquel appartient la fonction cible.

4. Procédé (700, 1700) selon l'une quelconque des revendications 1 à 3, dans lequel le procédé (700, 1700) comprend en outre :

l'obtention de valeurs de codage (0, 1) correspondant à des relations d'appel entre une pluralité de fonctions dans la pluralité de fils d'exécution (0-3) dans le code de programme, dans lequel les valeurs de codage correspondant aux relations d'appel entre la pluralité de fils d'exécution dans la pluralité de fils d'exécution sont représentées à l'aide d'un graphe de codage de contexte d'appel de fonction, CEG, dans le fil d'exécution, le CEG dans le fil d'exécution comporte une pluralité de nœuds de fonction dans les fils d'exécution et des arêtes entre la pluralité de nœuds de fonction, et comporte en outre des valeurs de codage sur les arêtes, dans lequel les nœuds de fonction dans le CEG dans le fil d'exécution représentent les fonctions dans les fils d'exécution, les arêtes entre la pluralité de nœuds de fonction représentent les relations d'appel entre la pluralité de fonctions, et les valeurs de codage sur les arêtes sont les valeurs de codage correspondant aux relations d'appel entre les fonctions dans les fils d'exécution ; et

le codage, sur la base des informations de contexte d'appel de la fonction cible et des valeurs de codage (0, 1) correspondant aux relations d'appel entre la pluralité de fonctions dans la pluralité de fils d'exécution (0-3) dans le code de programme, un contexte d'appel de fonction de la fonction cible dans le fil d'exécution (0-3) auquel la fonction cible appartient, afin d'obtenir un résultat de codage du contexte d'appel de fonction de la fonction cible dans le fil d'exécution (0-3) auquel la fonction cible appartient.

5. Procédé (700, 1700) selon la revendication 4, dans lequel le résultat de codage du contexte d'appel de fonction de la fonction cible dans le fil d'exécution (0-3) auquel appartient la fonction cible indique la fonction cible et une valeur de codage (0-2) du contexte d'appel de fonction de la fonction cible dans le fil d'exécution (0-3) auquel appartient la fonction cible.

6. Procédé (700, 1700) selon l'une quelconque des revendications 1 à 5, dans lequel les informations de contexte d'appel de la fonction cible comprennent une chaîne d'appel de fonction de la fonction cible.

7. Procédé de décodage (1700) pour un contexte d'appel de fonction, comprenant :

l'obtention (S1710) d'un résultat de codage d'un contexte d'appel d'une fonction cible ;

l'obtention (S1720) de valeurs de codage (0, 1) correspondant à des relations de création entre une pluralité de fils d'exécution (0-3) dans un code de programme, dans lequel les valeurs de codage correspondant aux relations de création entre la pluralité de fils d'exécution dans le code de programme sont représentées à l'aide d'un graphe de codage de contexte d'appel de fil d'exécution, TEG, qui comporte une pluralité de nœuds de fils d'exécution et des arêtes entre la pluralité de nœuds de fils d'exécution, et comporte en outre des valeurs de codage sur les arêtes, dans lequel les nœuds de fils d'exécution dans le TEG représentent les fils d'exécution dans le code de programme, et les arêtes entre la pluralité de nœuds de fils d'exécution représentent les relations de création entre la pluralité de fils d'exécution, et les valeurs de codage sur les arêtes sont les valeurs de codage correspondant aux relations de création entre les fils d'exécution, et dans lequel le code de programme comprend la fonction cible ;

l'obtention (S1730) de valeurs de codage (0, 1) correspondant à des relations d'appel entre une pluralité de fonctions dans la pluralité de fils d'exécution (0-3) dans le code de programme, dans lequel les valeurs de codage correspondant aux relations d'appel entre la pluralité de fils d'exécution dans la pluralité de fils d'exécution sont représentées à l'aide d'un graphe de codage de contexte d'appel de fonction, CEG, dans le fil d'exécution, le CEG dans le fil d'exécution comporte une pluralité de nœuds de fonction dans les fils d'exécution et des arêtes entre la pluralité de nœuds de fonction, et comporte en outre des valeurs de codage sur les arêtes, dans lequel les nœuds de fonction dans le CEG dans le fil d'exécution représentent les fonctions dans les fils d'exécution, les arêtes entre la pluralité de nœuds de fonction représentent les relations d'appel entre la pluralité de fonctions, et les valeurs de codage sur les arêtes sont les valeurs de codage correspondant aux relations d'appel entre les fonctions dans les fils d'exécution ; et

le décodage (S1740) du résultat de codage du contexte d'appel de la fonction cible sur la base des valeurs de codage (0, 1) correspondant aux relations de création entre la pluralité de fils d'exécution (0-3) dans le code de programme et des valeurs de codage (0, 1) correspondant aux relations d'appel entre la pluralité de fonctions dans la pluralité de fils d'exécution (0-3) dans le code de programme, afin d'obtenir une chaîne d'appel de fonction de la fonction cible.

**8.** Procédé (700, 1700) selon la revendication 7, dans lequel la pluralité de fils d'exécution (0-3) dans le code de programme comprend un fil d'exécution parent et un fil d'exécution enfant, une fonction de création de fil d'exécution dans le fil d'exécution parent est utilisée pour créer le fil d'exécution enfant, et une valeur de codage (0-2) correspondant à une relation de création entre le fil d'exécution parent et le fil d'exécution enfant correspond à un contexte d'appel de fonction de la fonction de création de fil d'exécution dans le fil d'exécution parent.

**9.** Procédé (700, 1700) selon la revendication 7 ou 8, dans lequel le résultat de codage du contexte d'appel de la fonction cible comprend un résultat de codage d'un contexte d'un fil d'exécution (0-3) auquel la fonction cible appartient et un résultat de codage d'un contexte d'appel de fonction de la fonction cible dans le fil d'exécution (0-3) auquel la fonction cible appartient, le résultat de codage du contexte du fil d'exécution (0-3) auquel appartient la fonction cible indique une fonction d'entrée de fil d'exécution dans le fil d'exécution (0-3) auquel appartient la fonction cible et une valeur de codage (0-2) du contexte du fil d'exécution (0-3) auquel appartient la fonction cible, et le résultat de codage du contexte d'appel de fonction de la fonction cible dans le fil d'exécution (0-3) auquel appartient la fonction cible indique la fonction cible et une valeur de codage (0-2) du contexte d'appel de fonction de la fonction cible dans le fil d'exécution (0-3) auquel appartient la fonction cible.

**10.** Procédé (700, 1700) selon la revendication 9, dans lequel le décodage du résultat de codage du contexte d'appel de la fonction cible sur la base des valeurs de codage (0, 1) correspondant aux relations de création entre la pluralité de fils d'exécution (0-3) dans le code de programme et les valeurs de codage (0, 1) correspondant aux relations d'appel entre la pluralité de fonctions dans la pluralité de fils d'exécution (0-3) dans le code de programme, pour obtenir une chaîne d'appel de fonction de la fonction cible comprend :

le décodage, sur la base des valeurs de codage (0, 1) correspondant aux relations de création entre la pluralité de fils d'exécution (0-3) dans le code de programme, le résultat de codage du contexte du fil d'exécution (0-3) auquel appartient la fonction cible, pour obtenir des valeurs de codage (0, 1) correspondant à des relations de création entre une pluralité de fils d'exécution (0-3) dans le contexte du fil d'exécution (0-3) auquel appartient la fonction cible, dans lequel une somme des valeurs de codage (0, 1) correspondant aux relations de création entre la pluralité de fils d'exécution (0-3) dans le contexte du fil d'exécution (0-3) auquel appartient la fonction cible est égale à la valeur de codage (0-2) du contexte du fil d'exécution (0-3) auquel appartient la fonction cible, et le fil d'exécution (0-3) auquel appartient la fonction cible est déterminé sur la base de la fonction d'entrée de fil d'exécution dans le fil d'exécution (0-3) auquel appartient la fonction cible ;
la détermination, sur la base des valeurs de codage (0, 1) correspondant aux relations de création entre la pluralité de fils d'exécution (0-3) dans le contexte du fil d'exécution (0-3) auquel appartient la fonction cible, un résultat de codage d'un contexte d'appel de fonction d'une fonction de création de fil d'exécution dans la pluralité de fils d'exécution (0-3) dans le contexte du fil d'exécution (0-3) auquel appartient la fonction cible ;
le décodage, sur la base des valeurs de codage (0, 1) correspondant aux relations d'appel entre la pluralité de fonctions dans la pluralité de fils d'exécution (0-3) dans le code de programme, du résultat de codage du contexte d'appel de fonction de la fonction de création de fil d'exécution dans la pluralité de fils d'exécution (0-3) dans le contexte du fil d'exécution (0-3) auquel appartient la fonction cible, pour obtenir une chaîne d'appel de fonction de la fonction de création de fil d'exécution dans un fil d'exécution (0-3) auquel appartient la fonction de création de fil d'exécution, dans lequel un point de départ d'appel de la chaîne d'appel de fonction de la fonction de création de fil d'exécution dans le fil d'exécution (0-3) auquel appartient la fonction de création de fil d'exécution est une fonction d'entrée de fil d'exécution du fil d'exécution (0-3) auquel appartient la fonction de création de fil d'exécution, un point de fin d'appel de la chaîne d'appel de fonction de la fonction de création de fil d'exécution dans le fil d'exécution (0-3) auquel appartient la fonction de création de fil d'exécution est la fonction de création de fil d'exécution, et une somme de valeurs de codage (0, 1) correspondant à des relations d'appel entre une pluralité de fonctions dans la chaîne d'appel de fonction de la fonction de création de fil d'exécution dans le fil d'exécution (0-3) auquel appartient la fonction de création de fil d'exécution est égale à une valeur de codage (0-2) de la chaîne d'appel de fonction de la fonction de création de fil d'exécution dans le fil d'exécution (0-3) auquel appartient la fonction de création de fil d'exécution ;

le décodage, sur la base des valeurs de codage (0, 1) correspondant aux relations d'appel entre la pluralité de fonctions dans la pluralité de fils d'exécution (0-3) dans le code de programme, du résultat de codage du contexte d'appel de fonction de la fonction cible dans le fil d'exécution (0-3) auquel la fonction cible appartient, pour obtenir une chaîne d'appel de fonction de la fonction cible dans le fil d'exécution (0-3) auquel appartient la fonction cible, dans lequel un point de départ d'appel de la chaîne d'appel de fonction de la fonction cible dans le fil d'exécution (0-3) auquel appartient la fonction cible est une fonction d'entrée de fil d'exécution du fil d'exécution (0-3) auquel appartient la fonction cible, un point de fin d'appel de la chaîne d'appel de fonction de la fonction cible dans le fil d'exécution (0-3) auquel appartient la fonction cible est la fonction cible, et si le point de début d'appel de la chaîne d'appel de fonction de la fonction cible dans le fil d'exécution (0-3) auquel appartient la fonction cible est différent du point de fin d'appel de la chaîne d'appel de fonction de la fonction cible dans le fil d'exécution (0-3) auquel appartient la fonction cible, une somme de valeurs de codage (0, 1) correspondant à des relations d'appel entre une pluralité de fonctions dans la chaîne d'appel de fonction de la fonction cible dans le fil d'exécution (0-3) auquel appartient la fonction cible est égale à la valeur de codage (0-2) du contexte d'appel de fonction de la fonction cible dans le fil d'exécution (0-3) auquel appartient la fonction cible ; et

la détermination de la chaîne d'appel de fonction de la fonction cible sur la base de la chaîne d'appel de fonction de la fonction de création de fil d'exécution dans le fil d'exécution (0-3) auquel appartient la fonction de création de fil d'exécution et de la chaîne d'appel de fonction de la fonction cible dans le fil d'exécution (0-3) auquel appartient la fonction cible.

11. Procédé (700, 1700) selon l'une quelconque des revendications 7 à 10, dans lequel le procédé (700, 1700) comprend en outre :
la fourniture d'une API, dans lequel une entrée de l'API comprend le résultat de codage du contexte d'appel de la fonction cible, et une sortie de l'API comprend la chaîne d'appel de fonction de la fonction cible.

12. Procédé (700, 1700) selon la revendication 11, dans lequel l'entrée de l'API comprend un premier élément, un deuxième élément, un troisième élément et un quatrième élément, le premier élément indique la fonction d'entrée de fil d'exécution dans le fil d'exécution (0-3) auquel la fonction cible appartient, le deuxième élément indique la valeur de codage (0-2) du contexte du fil d'exécution (0-3) auquel appartient la fonction cible, le troisième élément indique la fonction cible et le quatrième élément indique la valeur de codage (0-2) du contexte d'appel de fonction de la fonction cible dans le fil d'exécution (0-3) auquel appartient la fonction cible.

13. Procédé (700, 1700) selon la revendication 11, dans lequel l'entrée de l'API comprend un cinquième élément, un sixième élément et un septième élément, le cinquième élément indiquant la fonction d'entrée de fil d'exécution dans le fil d'exécution (0-3) auquel appartient la fonction cible et la valeur de codage (0-2) du contexte du fil d'exécution (0-3) auquel appartient la fonction cible, le sixième élément indiquant la fonction cible et le septième élément indiquant la valeur de codage (0-2) du contexte d'appel de fonction de la fonction cible dans le fil d'exécution (0-3) auquel appartient la fonction cible.

14. Appareil électronique destiné à un contexte d'appel de fonction, comprenant un processeur (1602, 1702) et une mémoire (1601, 1701), dans lequel la mémoire (1601, 1701) est configurée pour stocker des instructions de programme, et le processeur (1602, 1702) est configuré pour invoquer les instructions de programme afin d'effectuer le procédé (700, 1700) selon l'une quelconque des revendications 1 à 6 ou des revendications 7 à 13.

15. Support de stockage lisible par ordinateur, dans lequel le support de stockage lisible par ordinateur stocke un code de programme exécuté par un dispositif, et le code de programme comprend des instructions pour effectuer le procédé (700, 1700) selon l'une quelconque des revendications 1 à 6 ou des revendications 7 à 13.

Source
code

Construction of a
program representation
Rule matching

Report result

FIG. 1

STmain

main function

Entry
(entry)

call1

Return 1
(ret1)

call2

Return 2
(ret2)

Exit
(exit)

func function

Entry
(entry)

Fork
(fork)

Join
(join)

Exit
(exit)

STline9

thread function

Entry
(entry)

Lock
(lock)

Unlock
(unlock)

Exit
(exit)

FIG. 2

(a)

(b)

FIG. 3

FIG. 4

EP 4 290 372 B1

FIG. 5

700

```
┌ ─ ─ ─ ─ ─ ─ ─ ─ ─ ─ ─ ─ ─ ─ ─ ─ ─ ─ ┐
│        Analyze program code to obtain creation        │
│   relationships between a plurality of threads in the   │        S710
│                program code                │
└ ─ ─ ─ ─ ─ ─ ─ ─ ─ ─ ─ ─ ─ ─ ─ ─ ─ ─ ┘
```

```
┌ ─ ─ ─ ─ ─ ─ ─ ─ ─ ─ ─ ─ ─ ─ ─ ─ ─ ─ ┐
│     Encode the creation relationships between the      │
│      plurality of threads, to obtain encoding values      │        S720
│ corresponding to the creation relationships between  │
│             the plurality of threads             │
└ ─ ─ ─ ─ ─ ─ ─ ─ ─ ─ ─ ─ ─ ─ ─ ─ ─ ─ ┘
```

```
┌───────────────────────────────┐
│     Obtain calling context information of a target      │
│                 function                 │        S730
└───────────────────────────────┘
```

```
┌───────────────────────────────┐
│    Obtain the encoding values corresponding to the     │
│   creation relationships between the plurality of    │        S740
│          threads in the program code           │
└───────────────────────────────┘
```

```
┌───────────────────────────────┐
│   Encode, based on the calling context information of   │
│      the target function and the encoding values      │
│  corresponding to the creation relationships between  │
│    the plurality of threads, a context of a thread to    │        S750
│     which the target function belongs, to obtain an     │
│   encoding result of the context of the thread to which   │
│           the target function belongs           │
└───────────────────────────────┘
```

FIG. 6

FIG. 7

FIG. 8

FIG. 9

FIG. 10

FIG. 11

FIG. 12

1700

Obtain an encoding result of a calling context of a target function — S1710

Obtain the encoding values corresponding to the creation relationships between the plurality of threads in the program code — S1720

Obtain encoding values corresponding to call relationships between a plurality of functions in the plurality of threads — S1730

Decode the encoding result of the calling context of the target function based on the encoding values corresponding to the creation relationships between the plurality of threads in the program code and the encoding values corresponding to the call relationships between the plurality of functions in the plurality of threads, to obtain a function call string of the target function — S1740

FIG. 13

Apparatus 1400

Obtaining unit 1410

Processing unit 1420

FIG. 14

Apparatus 1500

Obtaining unit 1510

Processing unit 1520

FIG. 15

Apparatus 1600

Memory 1601

Processor 1602

Bus 1604

Communication interface 1603

FIG. 16

Apparatus 1700

Memory 1701

Processor 1702

Bus 1704

Communication interface 1703

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6263491 B1